(19) Europäisches Patentamt
European Patent Office
Office européen des brevets

(11) Veröffentlichungsnummer: **0 217 245 B1**

(12) # EUROPÄISCHE PATENTSCHRIFT

(45) Veröffentlichungstag der Patentschrift: **02.01.92**

(51) Int. Cl.$^5$: **C09B 23/02**, C09B 23/10, G11B 7/24

(21) Anmeldenummer: **86112965.8**

(22) Anmeldetag: **19.09.86**

Die Akte enthält technische Angaben, die nach dem Eingang der Anmeldung eingereicht wurden und die nicht in dieser Patentschrift enthalten sind.

(54) **Optisches Aufzeichnungsmedium auf der Basis von Methinfarbstoffen sowie anionische Methinfarbstoffe.**

(30) Priorität: **21.09.85 DE 3533772**

(43) Veröffentlichungstag der Anmeldung:
**08.04.87 Patentblatt 87/15**

(45) Bekanntmachung des Hinweises auf die Patenterteilung:
**02.01.92 Patentblatt 92/01**

(84) Benannte Vertragsstaaten:
**BE CH DE FR GB IT LI NL**

(56) Entgegenhaltungen:
**EP-A- 0 134 500**
**DE-B- 1 060 528**
**FR-A- 1 224 339**
**FR-A- 2 177 095**
**US-A- 2 918 369**
**DE-B- 1 056 307**
**DE-C- 976 968**
**FR-A- 2 150 884**
**GB-A- 1 170 361**
**US-A- 2 951 841**

**M. EMMELIUS et al. Angew. Chem. Int. Ed. 28, 1445 (1989); D.J. GRAVESTEIJN et al. Philips Techn. Rev. 41, 325 (1983/84)**

(73) Patentinhaber: **BASF Aktiengesellschaft**
**Carl-Bosch-Strasse 38**
**W-6700 Ludwigshafen(DE)**

(72) Erfinder: **Daltrozzo, Ewald, Prof. Dr.**
**Keplerweg 2**
**W-7750 Konstanz(DE)**
Erfinder: **Sulger, Werner, Dr.**
**Zum Doebel 16**
**W-7777 Ueberlingen-Nussdorf(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 217 245 B1

## Beschreibung

Neutrale Methinfarbstoffe, die den 1.2.4-Oxdiazolkern und am α-Kohlenstoffatom der Methinkette einen elektronenziehenden Rest enthalten, sind aus der GB-A-626470 bekannt. Symmetrische quartäre Pentamethinfarbstoffe mit N-Methyl und N-Ethylbenzthiazol und elektronenziehenden Resten am α-Kohlenstoffatom sind aus den DE-A-2142967, 2165915 und 2214055 bekannt.

Weitere symmetrische quartäre Pentamethinfarbstoffe mit N-Ethylbenzthiazol -benzselenazol, -benzoxazol und -chinolin sind in der US-A-2 951 841 beschrieben. Aus der EP-A-134 500 ist die Verwendung von Farbstoffen auf der Basis von Polymethinen in optischen Aufzeichnungsmedien bekannt.

Gegenstand der Erfindung ist ein optisches Aufzeichnungsmedium aus einem Träger und einer Polymerschicht, die einen gegenüber Laserlicht empfindlichen Farbstoff enthält, dadurch gekennzeichnet, daß das Polymere als Farbstoff einen Methinfarbstoff enthält, der in einer seiner tautomeren Formen der allgemeinen Formel I

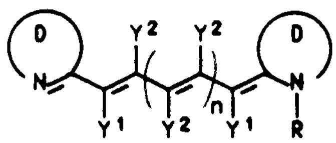

(I)

entspricht, in der beide oder ein

- $Y^1$ Cyano und das restliche $Y^1$ Wasserstoff,
- $Y^2$ unabhängig voneinander Wasserstoff, Cyano, Halogen, $C_1$- bis $C_6$-Alkyl $C_5$- bis $C_7$ Cycloalkyl, Phenyl, Pyridyl oder zusammen mit einem weiteren $Y^2$ ein gegebenenfalls durch einen Benzolring anellierten fünf- oder sechsgliedrigen Ring.
- R Wasserstoff, $C_1$- bis $C_{20}$-Alkyl, $C_7$- bis $C_{10}$-Aralkyl oder β-Hydroxyethyl und
- n 1, 2, 3, 4, 5, oder 6 bedeuten und die Gruppen

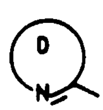 oder 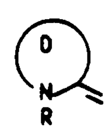

für gleiche oder verschiedene fünf- oder sechsgliedrige heterocyclische Reste stehen, wobei die Reste D gegebenenfalls substituiert und/oder anelliert sind sowie quaterniert (kationisch) oder deprotoniert (anionisch) vorliegen können.

Die Methinfarbstoffe I der Erfindung weisen eine sehr hohe molare Absorption im Bereich von 500 bis 1200 nm auf. Viele sind in organischen Lösungsmitteln, in thermoplastischen oder vernetzten Kunststoffen gut löslich. Dementsprechend haben die mit den Methinfarbstoffen I erhältlichen optischen Aufzeichnungsmedien eine hohe Qualität, z. B. einen hohen optischen Kontrast, ein sehr hohes Signal/Rausch-Verhältnis und eine günstige Schwellenenergie.

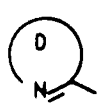 bzw. 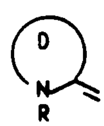

leiten sich ab von

1. gegebenenfalls substituierten 5-gliedrigen Ringen, die in α-Stellung zur Verknüpfungsstelle ein N-Atom und gegebenenfalls 1 oder 2 weitere Heteroatome tragen und
2. gegebenenfalls substituierten 6-gliedrigen Ringen, die in α-Stellung zur Verknüpfungsstelle ein N-Atom und gegebenenfalls 1 oder 2 weitere N-Atome tragen,

wobei die 5- und 6-gliedrigen heterocyclischen Ringe mit Benzol- oder Naphthalinringen anelliert sein können.

D leitet sich ab z.B. vom

1.1 Thiazol, Selenazol, Oxazol, Imidazol, Isoxazol, Isothiazol, Isoselenazol, Pyrazol, 1,2,4-Thiadiazol,

1,2,4-Selenadiazol, 1,2,4-Triazol, 1,3,4-Oxdiazol, 1,3,4-Thiadiazol, 1,2,5-Oxdiazol, 1,2,5-Thiadiazol, 1,2,3-Triazol, 1,2,5-Selenadiazol, 1,3,4-Selenadiazol;

1.2 Benzoxazol, Benzthiazol, Benzselenazol, Benzimidazol, Benzisoxazol, Indol, Benzisothiazol? Benzisoselenazol, Benzpyrazol;

1.3 den 1.1 entsprechenden Verbindungen mit ankondensiertem 1,2- und 2,3-Naphthalinsystem.

2.1 Pyridin, Pyrimidin, Pyrazin, 1,2,4-Triazin, Pyridazin;

2.2 Chinolin, Chinazolin, Chinoxalin;

2.3 den 2.1 entsprechenden Verbindungen mit ankondensiertem 1,2- und 2,3-Naphthalinsystem.

Für 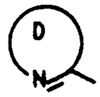 bzw. 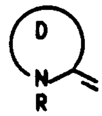 sind im einzelnen z.B. zu nennen:

1.1.1

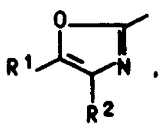 , 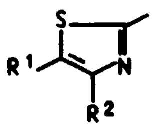 , 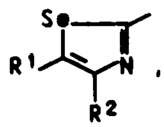 , 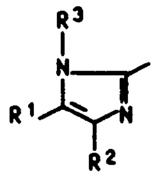 , 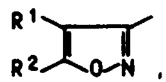 ,

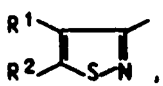 , 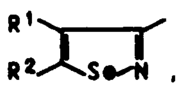 , 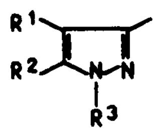 , 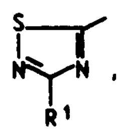 , 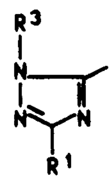 , 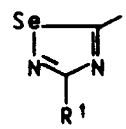 ,

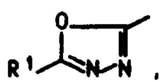 , 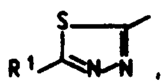 , 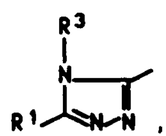 , 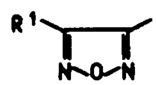 , 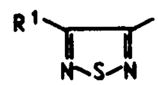 , 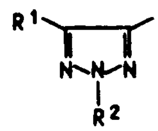 ,

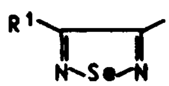 , 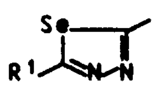 ;

1.2.1

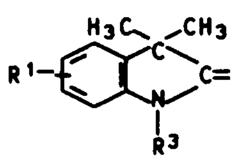 ,

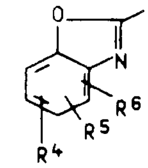, 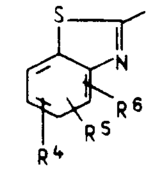, 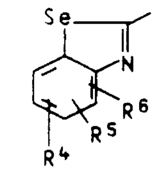, 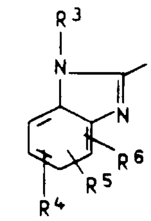,

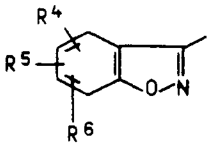, 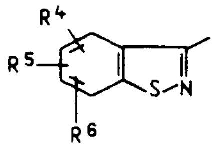, 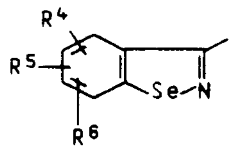, 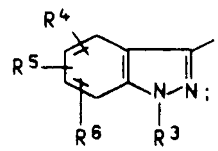;

1.3.1

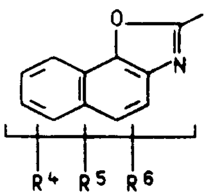, 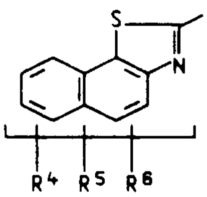, 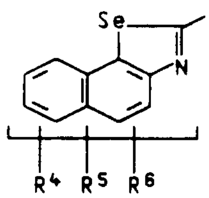, 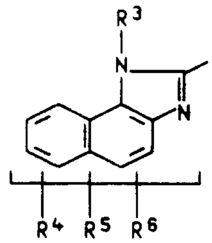,

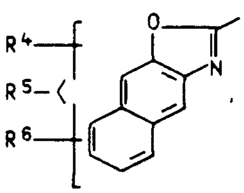, 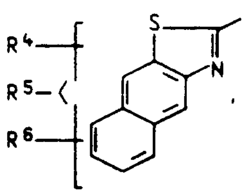, 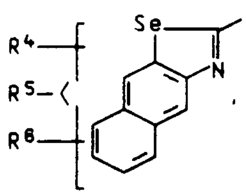, 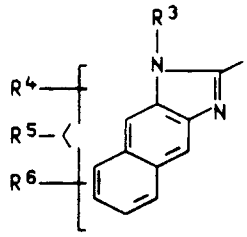,

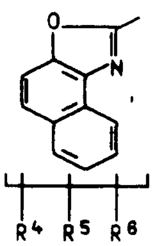, 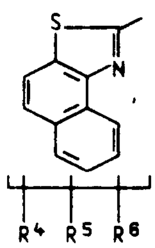, 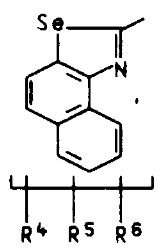, 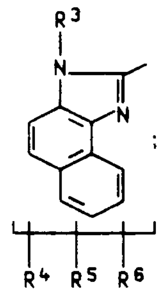;

2.1.1

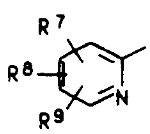, 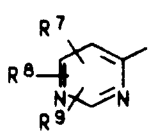, 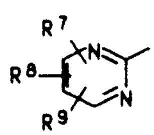, 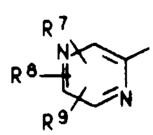,

2.3.1

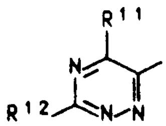
,
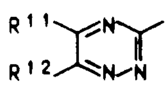
,
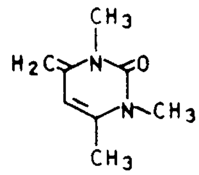
,

2.2.1

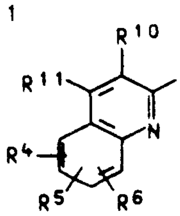
,
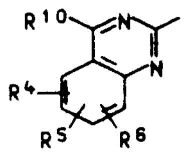
,
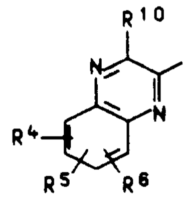
,
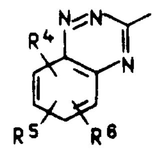
,

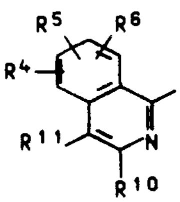
, und
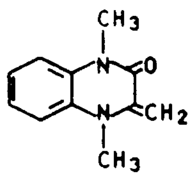
;
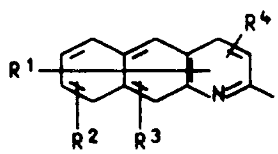
und
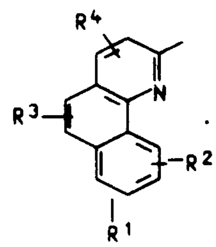
.

In den vorstehenden Formeln stehen $R^1$ bis $R^{12}$ unabhängig voneinander für Wasserstoff, Halogen, CN, $CF_3$, Nitro, $C_1$- bis $C_4$-Alkyl, $C_1$- bis $C_4$-Alkoxy oder für gegebenenfalls durch Halogen, $C_1$- bis $C_4$-Alkyl oder $C_1$- bis $C_4$-Alkoxy, CN, $CF_3$ und/oder $NO_2$ substituiertes Phenyl, wobei je Rest D nur eine Nitrogruppe enthalten ist.

Als Halogen kommen Brom, Fluor, vorzugsweise Chlor in Betracht.

Als $C_1$- bis $C_4$-Alkyl sind im einzelnen z.B. zu nennen:
Methyl, Ethyl, n-Propyl, iso-Propyl, n-Butyl, sek.-Butyl, iso-Butyl, tert.-Butyl.

Für $C_1$- bis $C_4$-Alkoxy sind im einzelnen z.B. zu nennen:
Methoxy, Ethoxy, Propoxy. Isopropoxy, Butoxy, 2-Butoxy und tert.-Butoxy.

Die Zahl der Substituenten an D beträgt je D bis zu 4, vorzugsweise 0, 1 oder 2, insbesondere 0 oder 1.

Bevorzugte Methinfarbstoffe sind solche der Formel II

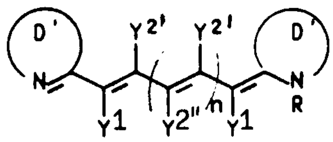
II

in der
$Y^1$ für Cyano und
$Y^{2'}$ und $Y^{2''}$ unabhängig voneinander für Wasserstoff, Chlor, Cyano, Phenyl oder Pyridyl oder zusammen für einen gegebenenfalls durch einen Benzolring anellierten fünf- oder sechsgliedrigen Ring und n für 1,2,3,4,5 oder 6 stehen und D' sich vom Benzthiazol, Benzselenazol, Benzoxazol, Benzimidazol, Pyridin, Pyrimidin, Pyrazin, Pyridazin, Chinolin, Chinoxalin, Indol oder Chinazolin ableiten, wobei die beiden Reste D' gleich oder verschieden sein Können und R die oben angegebene Bedeutung hat.

Als bevorzugt sind für D' im einzelnen zu nennen:

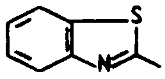 , 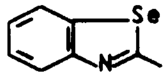 , 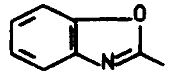 ,

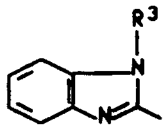 , worin $R^3$ für $-H$, $-CH_3$, $-C_2H_5$, $-C_4H_9(n)$, $-C_8H_{17}$, $-C_{12}H_{25}$, $-C_{16}H_{35}$ $-C_{18}H_{37}$ oder $-C_{20}H_{41}$ steht;

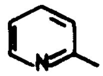 , 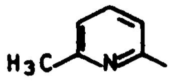 , 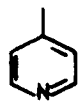 , 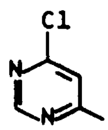 , 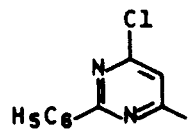 ,

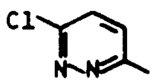 , 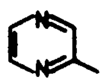 , 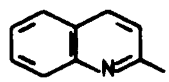 , 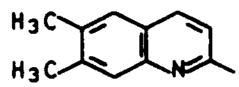 , 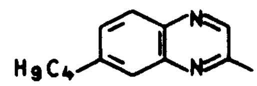

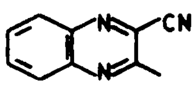 , 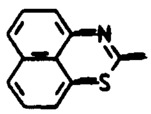 , 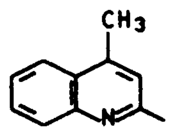 , 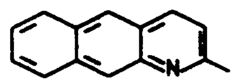 , 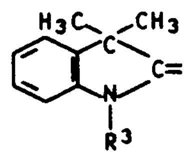 ,

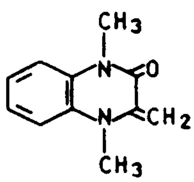 und 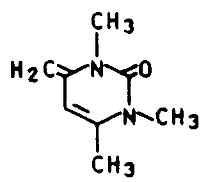 .

Besonders bevorzugt sind Methinfarbstoffe der Formel III

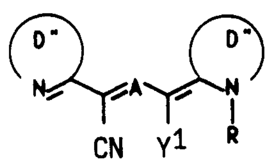 III ,

in der D", A, $Y^1$ und R die in der Tabelle 1 angegebene Bedeutung haben.

Tabelle 1

| Farbst.-Nr. | das eine D" | das andere D" | R | | $Y^1$ | [A] |
|---|---|---|---|---|---|---|
| III. 1 | 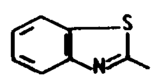 | 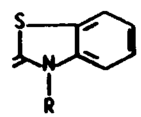 | $-H$ | | $-CN$ | 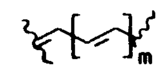 m = 1 |
| III. 2 | " | " | $-C_2H_5$ | | " | " m = 1 |
| III. 3 | " | " | $-C_4H_9(n)$ | | " | " m = 1 |
| III. 4 | " | " | $-C_{12}H_{25}(n)$ | | " | " m = 1 |
| III. 5 | " | " | $-H$ | | " | " m = 2 |
| III. 6 | " | " | $-C_2H_5$ | | " | " m = 2 |
| III. 7 | " | " | $-C_4H_9(n)$ | | " | " m = 2 |
| III. 8 | " | " | $-C_{12}H_{25}(n)$ | | " | " m = 2 |
| III. 9 | " | " | $-H$ | | " | " m = 3 |
| III. 10 | " | " | $-C_2H_5$ | | " | " m = 3 |
| III. 11 | " | " | $-C_4H_9(n)$ | | " | " m = 3 |
| III. 12 | " | " | $-C_{12}H_{25}(n)$ | | " | " m = 3 |
| III. 13 | " | " | $-H$ | | " | " m = 4 |
| III. 14 | " | " | $-C_2H_5$ | | " | " m = 4 |
| III. 15 | " | " | $-C_4H_9(n)$ | | " | " m = 4 |
| III. 16 | " | " | $-C_{12}H_{25}(n)$ | | " | " m = 4 |

<u>Tabelle 1</u> (Fortsetzung)

| Farbst.-Nr. | das eine D" | das andere D" | R |  | $Y^1$ | [A] |  |
|---|---|---|---|---|---|---|---|
| III. 17 | 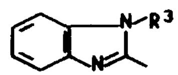 | 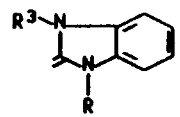 | —H | $R^3$ = —H | —CN | 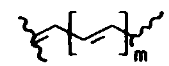 | m = 1 |
| III. 18 | 〃 | 〃 | —H | $R^3$ = $—CH_3$ | 〃 | 〃 | m = 1 |
| III. 19 | 〃 | 〃 | —H | $R^3$ = $—C_2H5$ | 〃 | 〃 | m = 1 |
| III. 20 | 〃 | 〃 | —H | $R^3$ = $—C_{12}H_{25}(n)$ | 〃 | 〃 | m = 1 |
| III. 21 | 〃 | 〃 | $—C_2H_5$ | $R^3$ = —H | 〃 | 〃 | m = 1 |
| III. 22 | 〃 | 〃 | $—C_2H_5$ | $R^3$ = $—CH_3$ | 〃 | 〃 | m = 1 |
| III. 23 | 〃 | 〃 | $—C_2H_5$ | $R^3$ = $—C_2H_5$ | 〃 | 〃 | m = 1 |
| III. 24 | 〃 | 〃 | $—C_2H_5$ | $R^3$ = $—C_{12}H_{25}(n)$ | 〃 | 〃 | m = 1 |
| III. 25 | 〃 | 〃 | $—C_4H_9(n)$ | $R^3$ = —H | 〃 | 〃 | m = 1 |
| III. 26 | 〃 | 〃 | $—C4H_9(n)$ | $R^3$ = $—CH_3$ | 〃 | 〃 | m = 1 |
| III. 27 | 〃 | 〃 | $—C_4H_9(n)$ | $R^3$ = $—C_2H_5$ | 〃 | 〃 | m = 1 |
| III. 28 | 〃 | 〃 | $—C_4H_9$ | $R^3$ = $—C_{12}H_{25}(n)$ | 〃 | 〃 | m = 1 |
| III. 29 | 〃 | 〃 | —H | $R^3$ = —H | 〃 | 〃 | m = 2 |
| III. 30 | 〃 | 〃 | —H | $R^3$ = $—CH_3$ | 〃 | 〃 | m = 2 |
| III. 31 | 〃 | 〃 | —H | $R^3$ = $—C_2H_5$ | 〃 | 〃 | m = 2 |
| III. 32 | 〃 | 〃 | —H | $R^3$ = $—C_{12}H_{25}(n)$ | 〃 | 〃 | m = 2 |

Tabelle 1 (Fortsetzung)

| Farbst.-Nr. | das eine D" | das andere D" | R | | $Y^1$ | [A] |
|---|---|---|---|---|---|---|
| III. 33 | 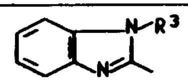 | 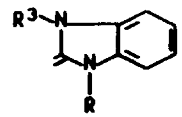 | $-C_2H_5$ | $R^3 = -H$ | $-CN$ | 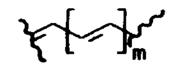 m = 2 |
| III. 34 | " | " | $-C_2H_5$ | $R^3 = -CH_3$ | " | " m = 2 |
| III. 35 | " | " | $-C_2H_5$ | $R^3 = -C_2H_5$ | " | " m = 2 |
| III. 36 | " | " | $-C_2H_5$ | $R^3 = -C_{12}H_{25}(n)$ | " | " m = 2 |
| III. 37 | " | " | $-C_4H_9(n)$ | $R^3 = -H$ | " | " m = 2 |
| III. 38 | " | " | $-C_4H_9(n)$ | $R^3 = -CH_3$ | " | " m = 2 |
| III. 39 | " | " | $-C_4H_9(n)$ | $R^3 = -C_2H_5$ | " | " m = 2 |
| III. 40 | " | " | $-C_4H_9(n)$ | $R^3 = -C_{12}H_{25}(n)$ | " | " m = 2 |
| III. 41 | " | " | $-H$ | $R^3 = -H$ | " | " m = 3 |
| III. 42 | " | " | $-H$ | $R^3 = -CH_3$ | " | " m = 3 |
| III. 43 | " | " | $-H$ | $R^3 = -C_2H_5$ | " | " m = 3 |
| III. 44 | " | " | $-H$ | $R^3 = -C_{12}H_{25}(n)$ | " | " m = 3 |
| III. 45 | " | " | $-C_2H_5$ | $R^3 = -H$ | " | " m = 3 |
| III. 46 | " | " | $-C_2H_5$ | $R^3 = -CH_3$ | " | " m = 3 |
| III. 47 | " | " | $-C_2H_5$ | $R^3 = -C_2H_5$ | " | " m = 3 |
| III. 48 | " | " | $-C_2H_5$ | $R^3 = -C_{12}H_{25}(n)$ | " | " m = 3 |
| III. 49 | " | " | $-C_4H_9(n)$ | $R^3 = -H$ | " | " m = 3 |

Tabelle 1 (Fortsetzung)

| Farbst.-Nr. | das eine D" | das andere D" | R | | $Y^1$ | [A] | |
|---|---|---|---|---|---|---|---|
| III. 50 | 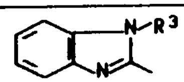 | 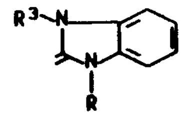 | $-C_4H_9(n)$ | $R^3 = -CH_3$ | $-CN$ | 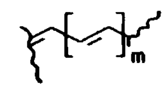 | m = 3 |
| III. 51 | ″ | ″ | $-C_4H_9(n)$ | $R^3 = -C_2H_5$ | ″ | ″ | m = 3 |
| III. 52 | ″ | ″ | $-C_4H_9(n)$ | $R^3 = -C_{12}H_{25}(n)$ | ″ | ″ | m = 3 |
| III. 53 | ″ | ″ | $-H$ | $R^3 = -H$ | ″ | ″ | m = 4 |
| III. 54 | ″ | ″ | $-H$ | $R^3 = -CH_3$ | ″ | ″ | m = 4 |
| III. 55 | ″ | ″ | $-H$ | $R^3 = -C_2H_5$ | ″ | ″ | m = 4 |
| III. 56 | ″ | ″ | $-H$ | $R^3 = -C_{12}H_{25}(n)$ | ″ | ″ | m = 4 |
| III. 57 | ″ | ″ | $-C_2H_5$ | $R^3 = -H$ | ″ | ″ | m = 4 |
| III. 58 | ″ | ″ | $-C_2H_5$ | $R^3 = -CH_3$ | ″ | ″ | m = 4 |
| III. 59 | ″ | ″ | $-C_2H_5$ | $R^3 = -C_2H_5$ | ″ | ″ | m = 4 |
| III. 60 | ″ | ″ | $-C_2H_5$ | $R^3 = -C_{12}H_{25}(n)$ | ″ | ″ | m = 4 |
| III. 61 | ″ | ″ | $-C_4H_9(n)$ | $R^3 = -H$ | ″ | ″ | m = 4 |
| III. 62 | ″ | ″ | $-C_4H_9(n)$ | $R^3 = -CH_3$ | ″ | ″ | m = 4 |
| III. 63 | ″ | ″ | $-C_4H_9(n)$ | $R^3 = -C_2H_5$ | ″ | ″ | m = 4 |
| III. 64 | ″ | ″ | $-C_4H_9$ | $R^3 = -C_{12}H_{25}(n)$ | ″ | ″ | m = 4 |

Tabelle 1 (Fortsetzung)

| Farbst.-Nr. | das eine D" | das andere D" | R | | $Y^1$ | [A] |
|---|---|---|---|---|---|---|
| III. 65 | 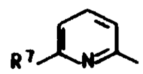 | 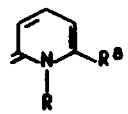 | $-H$ | $R^7 = -H$, $R^8 = -H$ | $-CN$ | 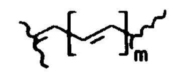 m = 1 |
| III. 66 | ″ | ″ | $-H$ | $R^7 = -H$ $R^8 = -CH_3$ | ″ | ″ m = 1 |
| III. 67 | ″ | ″ | $-H$ | $R^7 = -CH_3$ $R^8 = -CH_3$ | ″ | ″ m = 1 |
| III. 68 | ″ | ″ | $-H$ | $R^7 = -H$ $R^8 = -H$ | ″ | ″ m = 2 |
| III. 69 | ″ | ″ | $-H$ | $R^7 = -H$ $R^8 = -CH_3$ | ″ | ″ m = 2 |
| III. 70 | ″ | ″ | $-H$ | $R^7 = -CH_3$ $R^8 = -H$ | ″ | ″ m = 2 |
| III. 71 | ″ | ″ | $-H$ | $R^7 = -H$, $R^8 = -H$ | ″ | ″ m = 3 |
| III. 72 | ″ | ″ | $-H$ | $R^7 = -H$ $R^8 = -CH_3$ | ″ | ″ m = 3 |
| III. 73 | ″ | ″ | $-H$ | $R^7 = -CH_3$ $R^8 = -H$ | ″ | ″ m = 3 |
| III. 74 | ″ | ″ | $-H$ | $R^7 = -H$ $R^8 = -H$ | ″ | ″ m = 4 |
| III. 75 | ″ | ″ | $-H$ | $R^7 = -H$ $R^8 = -CH_3$ | ″ | ″ m = 4 |
| III. 76 | ″ | ″ | $-H$ | $R^7 = -CH_3$ $R^8 = -H$ | ″ | ″ m = 4 |

Tabelle 1 (Fortsetzung)

| Farbst.-Nr. | das eine D" | das andere D" | R | | $Y^1$ | [A] |
|---|---|---|---|---|---|---|
| III. 77 | 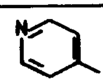 | 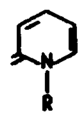 | $-H$ | | $-CN$ | 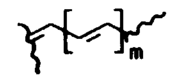 m = 1 |
| III. 78 | " | " | $-C_2H_5$ | | " | " m = 1 |
| III. 79 | " | " | $-H$ | | " | " m = 2 |
| III. 80 | " | " | $-C_2H_5$ | | " | " m = 2 |
| III. 81 | " | " | $-H$ | | " | " m = 3 |
| III. 82 | " | " | $-C_2H_5$ | | " | " m = 3 |
| III. 83 | " | " | $-H$ | | " | " m = 4 |
| III. 84 | " | " | $-C_2H_5$ | | " | " m = 4 |
| III. 85 | 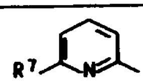 | 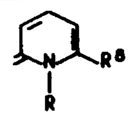 | $-H$ | $R^7 = -H$, $R^8 = -H$ | $-CN$ | 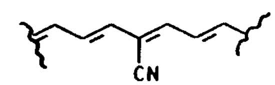 |
| III. 86 | " | " | $-H$ | $R^7 = -H$ $R^8 = -CH_3$ | " | " |
| III. 87 | " | " | $-H$ | $R^7 = -CH_3$ $R^8 = -CH_3$ | " | " |

Tabelle 1 (Fortsetzung)

| Farbst.-Nr. | das eine D" | das andere D" | R | | $Y^1$ | [A] |
|---|---|---|---|---|---|---|
| III. 88 | 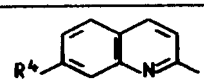 | 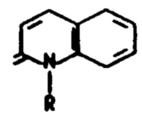 | $-H$ | $R^4 = -H$ | $-CN$ | 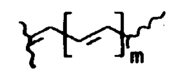 m = 1 |
| III. 89 | ″ | ″ | $-CH_3$ | $R^4 = -H$ | ″ | ″ m = 1 |
| III. 90 | ″ | ″ | $-C_2H_5$ | $R^4 = -H$ | ″ | ″ m = 1 |
| III. 91 | ″ | ″ | $-C_2H_4OH$ | $R^4 = -H$ | ″ | ″ m = 1 |
| III. 92 | ″ | ″ | $-C_{12}H_{25}(n)$ | $R^4 = -H$ | ″ | ″ m = 1 |
| III. 93 | ″ | ″ | $-H$ | $R^4 = -CH_3$ | ″ | ″ m = 1 |
| III. 94 | ″ | ″ | $-CH_3$ | $R^4 = -CH_3$ | ″ | ″ m = 1 |
| III. 95 | ″ | ″ | $-C_2H_5$ | $R^4 = -CH_3$ | ″ | ″ m = 1 |
| III. 96 | ″ | ″ | $-C_2H_4OH$ | $R^4 = -CH_3$ | ″ | ″ m = 1 |
| III. 97 | ″ | ″ | $-C_{12}H_{25}(n)$ | $R^4 = -CH_3$ | ″ | ″ m = 1 |
| III. 98 | 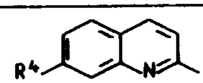 | 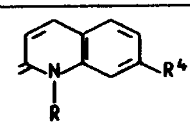 | $-H$ | $R^4 = -H$ | $-CN$ | 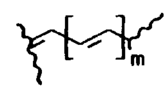 m = 2 |
| III. 99 | ″ | ″ | $-CH_3$ | $R^4 = -H$ | ″ | ″ m = 2 |
| III. 100 | ″ | ″ | $-C_2H_5$ | $R^4 = -H$ | ″ | ″ m = 2 |
| III. 101 | ″ | ″ | $-C_2H_4OH$ | $R^4 = -H$ | ″ | ″ m = 2 |
| III. 102 | ″ | ″ | $-C_{12}H_{25}(n)$ | $R^4 = -H$ | ″ | ″ m = 2 |

Tabelle 1 (Fortsetzung)

| Farbst.-Nr. | das eine D* | das andere D* | R | | $Y^1$ | [A] |
|---|---|---|---|---|---|---|
| III. 103 | 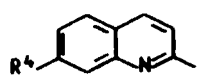 | 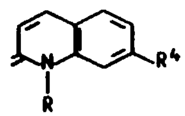 | $-H$ | $R^4 = -CH_3$ | $-CN$ | 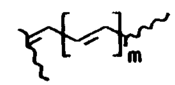 m = 2 |
| III. 104 | " | " | $-CH_3$ | $R^4 = -CH_3$ | " | " m = 2 |
| III. 105 | " | " | $-C_2H_5$ | $R^4 = -CH_3$ | " | " m = 2 |
| III. 106 | " | " | $-C_2H_4OH$ | $R^4 = -CH_3$ | " | " m = 2 |
| III. 107 | " | " | $-C_{12}H_{25}(n)$ | $R^4 = -CH_3$ | " | " m = 2 |
| III. 108 | " | " | $-H$ | $R^4 = -H$ | " | " m = 3 |
| III. 109 | " | " | $-CH_3$ | $R^4 = -H$ | " | " m = 3 |
| III. 110 | " | " | $-C_2H_5$ | $R^4 = -H$ | " | " m = 3 |
| III. 111 | " | " | $-C_2H_4OH$ | $R^4 = -H$ | " | " m = 3 |
| III. 112 | " | " | $-C_{12}H_{25}(n)$ | $R^4 = -H$ | " | " m = 3 |
| III. 113 | " | " | $-H$ | $R^4 = -CH_3$ | " | " m = 3 |
| III. 114 | " | " | $-CH_3$ | $R^4 = -CH_3$ | " | " m = 3 |
| III. 115 | " | " | $-C_2H_5$ | $R^4 = -CH_3$ | " | " m = 3 |
| III. 116 | " | " | $-C_2H_4OH$ | $R^4 = -CH_3$ | " | " m = 3 |
| III. 117 | " | " | $-C_{12}H_{25}(n)$ | $R^4 = -CH_3$ | " | " m = 3 |

Tabelle 1 (Fortsetzung)

| Farbst.-Nr. | das eine D" | das andere D" | R | | $Y^1$ | [A] |
|---|---|---|---|---|---|---|
| III. 118 | 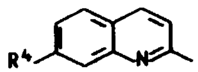 | 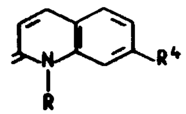 | $-H$ | $R^4 = -H$ | $-CN$ | 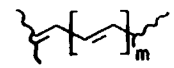 m = 4 |
| III. 119 | ″ | ″ | $-CH_3$ | $R^4 = -H$ | ″ | ″ m = 4 |
| III. 120 | ″ | ″ | $-C_2H_5$ | $R^4 = -H$ | ″ | ″ m = 4 |
| III. 121 | ″ | ″ | $-C_2H_4OH$ | $R^4 = -H$ | ″ | ″ m = 4 |
| III. 122 | ″ | ″ | $-C_{12}H_{25}(n)$ | $R^4 = -H$ | ″ | ″ m = 4 |
| III. 123 | ″ | ″ | $-H$ | $R^4 = -CH_3$ | ″ | ″ m = 4 |
| III. 124 | ″ | ″ | $-CH_3$ | $R^4 = -CH_3$ | ″ | ″ m = 4 |
| III. 125 | ″ | ″ | $-C_2H_5$ | $R^4 = -CH_3$ | ″ | ″ m = 4 |
| III. 126 | ″ | ″ | $-C_2H_4OH$ | $R^4 = -CH_3$ | ″ | ″ m = 4 |
| III. 127 | ″ | ″ | $-C_{12}H_{25}(n)$ | $R^4 = -CH_3$ | ″ | ″ m = 4 |
| III. 128 | 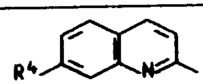 | 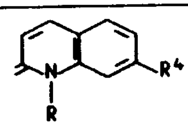 | $-H$ | $R^4 = -H$ | ″ | 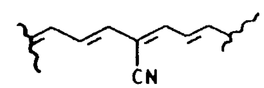 |
| III. 129 | ″ | ″ | $-H$ | $R^4 = -CH_3$ | ″ | ″ |
| III. 130 | ″ | ″ | $-CH_3$ | $R^4 = -H$ | ″ | ″ |
| III. 131 | ″ | ″ | $-CH_3$ | $R^4 = -CH_3$ | ″ | ″ |
| III. 132 | ″ | ″ | $-C_2H_5$ | $R^4 = -H$ | ″ | ″ |
| III. 133 | ″ | ″ | $-C_2H_5$ | $R^4 = -CH_3$ | ″ | ″ |
| III. 134 | ″ | ″ | $-C_2H_4OH$ | $R^4 = -H$ | ″ | ″ |

Tabelle 1 (Fortsetzung)

| Farbst.-Nr. | das eine D* | das andere D* | R | | $Y^1$ | [A] |
|---|---|---|---|---|---|---|
| III. 135 | 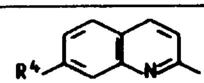 | 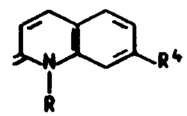 | —H | $R^4 = -CH_3$ | —CN | 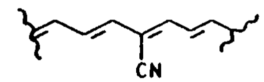 |
| III. 136 | ″ | ″ | $-C_{12}H_{25}(n)$ | $R^4 = -H$ | ″ | ″ |
| III. 137 | ″ | ″ | $-C_{12}H_{25}(n)$ | $R^4 = -CH_3$ | ″ | ″ |
| III. 138 | 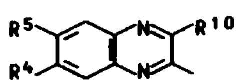 | 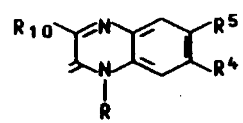 | —H | $R^4 = -H$<br>$R^5 = -H$<br>$R^{10} = -H$ | ″ | 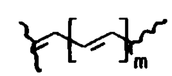 m = 1 |
| III. 139 | ″ | ″ | —H | $R^4 = -CH_3$<br>$R^5 = -CH_3$<br>$R^{10} = -H$ | ″ | ″ m = 1 |
| III. 140 | ″ | ″ | —H | $R^4 = -H$<br>$R^5 = -CH_3$<br>$R^{10} = -H$ | ″ | ″ m = 1 |
| III. 141 | ″ | ″ | —H | $R^4 = -CH_3$<br>$R^5 = -CH_3$<br>$R^{10} = -CN$ | ″ | ″ m = 1 |
| III. 142 | ″ | ″ | —H | $R^4 = -H$<br>$R^5 = -H$<br>$R^{10} = -H$ | ″ | ″ m = 2 |
| III. 143 | ″ | ″ | —H | $R^4 = -CH_3$<br>$R^5 = -CH_3$<br>$R^{10} = -H$ | ″ | ″ m = 2 |

Tabelle 1 (Fortsetzung)

| Farbst.-Nr. | das eine D″ | das andere D″ | R | | $Y^1$ | [A] |
|---|---|---|---|---|---|---|
| III. 144 | 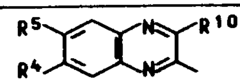 | 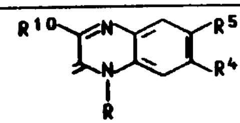 | $-H$ | $R^4 = -H$<br>$R^5 = -H$<br>$R^{10} = -CN$ | $-CN$ | 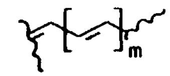 m = 2 |
| III. 145 | ″ | ″ | $-H$ | $R^4 = -CH_3$<br>$R^5 = -CH_3$<br>$R^{10} = -CN$ | ″ | ″ m = 2 |
| III. 146 | ″ | ″ | $-H$ | $R^4 = -H$<br>$R^5 = -H$<br>$R^{10} = -H$ | $-CN$ | ″ m = 3 |
| III. 147 | ″ | ″ | $-H$ | $R^4 = -CH_3$<br>$R^5 = -CH_3$<br>$R^{10} = -H$ | ″ | ″ m = 3 |
| III. 148 | ″ | ″ | $-H$ | $R^4 = -H$<br>$R^5 = -CH_3$<br>$R^{10} = -H$ | ″ | ″ m = 3 |
| III. 149 | ″ | ″ | $-H$ | $R^4 = -CH_3$<br>$R^5 = -CH_3$<br>$R^{10} = -CN$ | ″ | ″ m = 3 |
| III. 150 | ″ | ″ | $-H$ | $R^4 = -H$<br>$R^5 = -H$<br>$R^{10} = -H$ | ″ | ″ m = 4 |
| III. 151 | ″ | ″ | $-H$ | $R^4 = -CH_3$<br>$R^5 = -CH_3$<br>$R^{10} = -H$ | ″ | ″ m = 4 |
| III. 152 | ″ | ″ | $-H$ | $R^4 = -H$<br>$R^5 = -H$<br>$R^{10} = -CN$ | ″ | ″ m = 4 |
| III. 153 | ″ | ″ | $-H$ | $R^4 = -CH_3$<br>$R^5 = -CH_3$<br>$R^{10} = -CN$ | ″ | ″ m = 4 |

Tabelle 1 (Fortsetzung)

| Farbst.-Nr. | das eine D* | das andere D* | R | | Y1 | [A] |
|---|---|---|---|---|---|---|
| III. 154 | 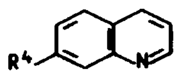 | 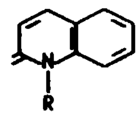 | $-H$ | $R^4 = -H$ | $-CN$ | 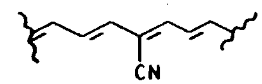 |
| III. 155 | " | " | $-H$ | $R^4 = -CH_3$ | " | " |
| III. 156 | " | " | $-CH_3$ | $R^4 = -H$ | " | " |
| III. 157 | " | " | $-CH_3$ | $R^4 = -CH_3$ | " | " |
| III. 158 | " | " | $-C_2H_5$ | $R^4 = -H$ | " | " |
| III. 159 | " | " | $-C_2H_5$ | $R^4 = -CH_3$ | " | " |
| III. 160 | 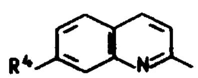 | 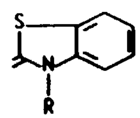 | $-H$ | $R^4 = -H$ | " | 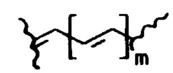 m = 1 |
| III. 161 | " | " | $-H$ | $R^4 = -CH_3$ | " | " m = 1 |
| III. 162 | " | " | $-C_2H_5$ | $R^4 = -H$ | " | " m = 1 |
| III. 163 | " | " | $-C_2H_5$ | $R^4 = -CH_3$ | " | " m = 1 |
| III. 164 | " | " | $-C_4H_9(n)$ | $R^4 = -H$ | " | " m = 1 |
| III. 165 | " | " | $-C_4H_9$ | $R^4 = -CH_3$ | " | " m = 1 |
| III. 166 | " | " | $-C_{12}H_{25}(n)$ | $R^4 = -H$ | " | " m = 1 |
| III. 167 | " | " | $-C_{12}H_{25}(n)$ | $R^4 = -CH_3$ | " | " m = 1 |

Tabelle 1 (Fortsetzung)

| Farbst.-Nr. | das eine D" | das andere D" | R | | Y1 | [A] | |
|---|---|---|---|---|---|---|---|
| III. 168 | 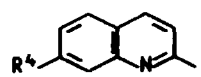 | 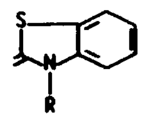 | $-H$ | $R^4 = -H$ | $-CN$ | 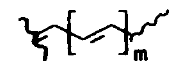 | m = 2 |
| III. 169 | ″ | ″ | $-H$ | $R^4 = -CH_3$ | ″ | ″ | m = 2 |
| III. 170 | ″ | ″ | $-C_2H_5$ | $R^4 = -H$ | ″ | ″ | m = 2 |
| III. 171 | ″ | ″ | $-C_2H_5$ | $R^4 = -CH_3$ | ″ | ″ | m = 2 |
| III. 172 | ″ | ″ | $-C_4H_9(n)$ | $R^4 = -H$ | ″ | ″ | m = 2 |
| III. 173 | ″ | ″ | $-C_4H_9$ | $R^4 = -CH_3$ | ″ | ″ | m = 2 |
| III. 174 | ″ | ″ | $-C_{12}H_{25}(n)$ | $R^4 = -H$ | ″ | ″ | m = 2 |
| III. 175 | ″ | ″ | $-C_{12}H_{25}(n)$ | $R^4 = -CH_3$ | ″ | ″ | m = 2 |
| III. 176 | ″ | ″ | $-H$ | $R^4 = -H$ | ″ | ″ | m = 3 |
| III. 177 | ″ | ″ | $-H$ | $R^4 = -CH_3$ | ″ | ″ | m = 3 |
| III. 178 | ″ | ″ | $-C_2H_5$ | $R^4 = -H$ | ″ | ″ | m = 3 |
| III. 179 | ″ | ″ | $-C_2H_5$ | $R^4 = -CH_3$ | ″ | ″ | m = 3 |
| III. 180 | ″ | ″ | $-C_4H_9(n)$ | $R^4 = -H$ | ″ | ″ | m = 3 |
| III. 181 | ″ | ″ | $-C_4H_9$ | $R^4 = -CH_3$ | ″ | ″ | m = 3 |
| III. 182 | ″ | ″ | $-C_{12}H_{25}(n)$ | $R^4 = -H$ | ″ | ″ | m = 3 |
| III. 183 | ″ | ″ | $-C_{12}H_{25}(n)$ | $R^4 = -CH_3$ | ″ | ″ | m = 3 |

Tabelle 1 (Fortsetzung)

| Farbst.-Nr. | das eine D" | das andere D" | R | | $Y^1$ | [A] | |
|---|---|---|---|---|---|---|---|
| III. 184 | 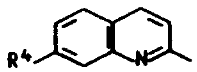 | 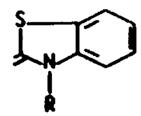 | $-H$ | $R^4 = -H$ | $-CN$ | 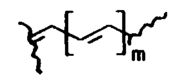 | m = 4 |
| III. 185 | 〃 | 〃 | $-H$ | $R^4 = -CH_3$ | 〃 | 〃 | m = 4 |
| III. 186 | 〃 | 〃 | $-C_2H_5$ | $R^4 = -H$ | 〃 | 〃 | m = 4 |
| III. 187 | 〃 | 〃 | $-C_2H_5$ | $R^4 = -CH_3$ | 〃 | 〃 | m = 4 |
| III. 188 | 〃 | 〃 | $-C_4H_9(n)$ | $R^4 = -H$ | 〃 | 〃 | m = 4 |
| III. 189 | 〃 | 〃 | $-C_4H_9$ | $R^4 = -CH_3$ | 〃 | 〃 | m = 4 |
| III. 190 | 〃 | 〃 | $-C_{12}H_{25}(n)$ | $R^4 = -H$ | 〃 | 〃 | m = 4 |
| III. 191 | 〃 | 〃 | $-C_{12}H_{25}(n)$ | $R^4 = -CH_3$ | 〃 | 〃 | m = 4 |
| III. 192 | 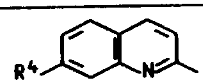 | 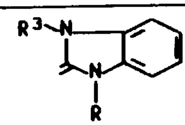 | $-H$ | $R^3 = -H$<br>$R^4 = -H$ | 〃 | 〃 | m = 1 |
| III. 193 | 〃 | 〃 | $-H$ | $R^3 = -H$<br>$R^4 = -CH_3$ | 〃 | 〃 | m = 1 |
| III. 194 | 〃 | 〃 | $-H$ | $R^3 = -CH_3$<br>$R^4 = -H$ | 〃 | 〃 | m = 1 |
| III. 195 | 〃 | 〃 | $-H$ | $R^3 = -CH_3$<br>$R^4 = -CH_3$ | 〃 | 〃 | m = 1 |
| III. 196 | 〃 | 〃 | $-H$ | $R^3 = -C_2H_5$<br>$R^4 = -H$ | 〃 | 〃 | m = 1 |
| III. 197 | 〃 | 〃 | $-H$ | $R^3 = -C_2H_5$<br>$R^4 = -CH_3$ | 〃 | 〃 | m = 1 |

Tabelle 1 (Fortsetzung)

| Farbst.-Nr. | das eine D" | das andere D" | R | | $Y^1$ | [A] |
|---|---|---|---|---|---|---|
| III. 198 | 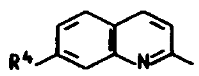 | 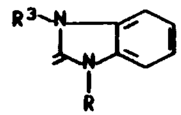 | $-C_2H_5$ | $R^3 = -H$<br>$R^4 = -H$ | $-CN$ | 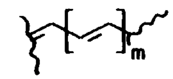 m = 1 |
| III. 199 | " | " | $-C_2H_5$ | $R^3 = -H$<br>$R^4 = -CH_3$ | " | " m = 1 |
| III. 200 | " | " | $-C_2H_5$ | $R^3 = -CH_3$<br>$R^4 = -H$ | " | " m = 1 |
| III. 201 | " | " | $-C_2H_5$ | $R^3 = -CH_3$<br>$R^4 = -CH_3$ | " | " m = 1 |
| III. 202 | " | " | $-C_2H_5$ | $R^3 = -C_2H_5$<br>$R^4 = -H$ | " | " m = 1 |
| III. 203 | " | " | $-C_2H_5$ | $R^3 = -C_2H_5$<br>$R^4 = -CH_3$ | " | " m = 1 |
| III. 204 | " | " | $-C_4H_9(n)$ | $R^3 = -H$<br>$R^4 = -H$ | " | " m = 1 |
| III. 205 | " | " | $-C_4H_9(n)$ | $R^3 = -H$<br>$R^4 = -CH_3$ | " | " m = 1 |
| III. 206 | " | " | $-C_4H_9(n)$ | $R^3 = -CH_3$<br>$R^4 = -H$ | " | " m = 1 |
| III. 207 | " | " | $-C_4H_9(n)$ | $R^3 = -CH_3$<br>$R^4 = -CH_3$ | " | " m = 1 |
| III. 208 | " | " | $-C_4H_9(n)$ | $R^3 = -C_2H_5$<br>$R^4 = -H$ | " | " m = 1 |
| III. 209 | " | " | $-C_4H_9(n)$ | $R^3 = -C_2H_5$<br>$R^4 = -CH_3$ | " | " m = 1 |

Tabelle 1 (Fortsetzung)

| Farbst.-Nr. | das eine D* | das andere D* | R | | $Y^1$ | [A] | |
|---|---|---|---|---|---|---|---|
| III. 210 | 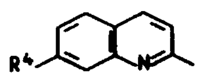 | 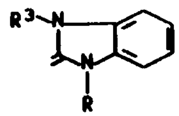 | $-C_8H_{17}(n)$ | $R^3 = -H$<br>$R^4 = -H$ | $-CN$ | 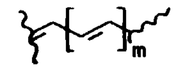 | m = 1 |
| III. 211 | 〃 | 〃 | $-C_8H_{17}(n)$ | $R^3 = -H$<br>$R^4 = -CH_3$ | 〃 | 〃 | m = 1 |
| III. 212 | 〃 | 〃 | $-C_8H_{17}(n)$ | $R^3 = -CH_3$<br>$R^4 = -H$ | 〃 | 〃 | m = 1 |
| III. 213 | 〃 | 〃 | $-C_8H_{17}(n)$ | $R^3 = -CH_3$<br>$R^4 = -CH_3$ | 〃 | 〃 | m = 1 |
| III. 214 | 〃 | 〃 | $-C_8H_{17}(n)$ | $R^3 = -C_2H_5$<br>$R^4 = -H$ | 〃 | 〃 | m = 1 |
| III. 215 | 〃 | 〃 | $-C_8H_{17}(n)$ | $R^3 = -C_2H_5$<br>$R^4 = -CH_3$ | 〃 | 〃 | m = 1 |
| III. 216 | 〃 | 〃 | $-H$ | $R^3 = -H$<br>$R^4 = -H$ | 〃 | 〃 | m = 2 |
| III. 217 | 〃 | 〃 | $-H$ | $R^3 = -H$<br>$R^4 = -CH_3$ | 〃 | 〃 | m = 2 |
| III. 218 | 〃 | 〃 | $-H$ | $R^3 = -CH_3$<br>$R^4 = -H$ | 〃 | 〃 | m = 2 |
| III. 219 | 〃 | 〃 | $-H$ | $R^3 = -CH_3$<br>$R^4 = -CH_3$ | 〃 | 〃 | m = 2 |
| III. 220 | 〃 | 〃 | $-H$ | $R^3 = -C_2H_5$<br>$R^4 = -H$ | 〃 | 〃 | m = 2 |
| III. 221 | 〃 | 〃 | $-H$ | $R^3 = -C_2H_5$<br>$R^4 = -CH_3$ | 〃 | 〃 | m = 2 |

Tabelle 1 (Fortsetzung)

| Farbst.-Nr. | das eine D" | das andere D" | R | | $Y^1$ | [A] |
|---|---|---|---|---|---|---|
| III. 222 | 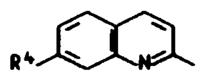 | 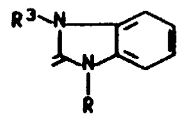 | $-C_2H_5$ | $R^3 = -H$<br>$R^4 = -H$ | $-CN$ | 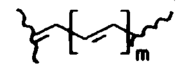 m = 2 |
| III. 223 | " | " | $-C_2H_5$ | $R^3 = -H$<br>$R^4 = -CH_3$ | " | " m = 2 |
| III. 224 | " | " | $-C_2H_5$ | $R^3 = -CH_3$<br>$R^4 = -H$ | " | " m = 2 |
| III. 225 | " | " | $-C_2H_5$ | $R^3 = -CH_3$<br>$R^4 = -CH_3$ | " | " m = 2 |
| III. 226 | " | " | $-C_2H_5$ | $R^3 = -C_2H_5$<br>$R^4 = -H$ | " | " m = 2 |
| III. 227 | " | " | $-C_2H_5$ | $R^3 = -C_2H_5$<br>$R^4 = -CH_3$ | " | " m = 2 |
| III. 228 | " | " | $-C_4H_9(n)$ | $R^3 = -H$<br>$R^4 = -H$ | " | " m = 2 |
| III. 229 | " | " | $-C_4H_9(n)$ | $R^3 = -H$<br>$R^4 = -CH_3$ | " | " m = 2 |
| III. 230 | " | " | $-C_4H_9(n)$ | $R^3 = -CH_3$<br>$R^4 = -H$ | " | " m = 2 |
| III. 231 | " | " | $-C_4H_9(n)$ | $R^3 = -CH_3$<br>$R^4 = -CH_3$ | " | " m = 2 |
| III. 232 | " | " | $-C_4H_9(n)$ | $R^3 = -C_2H_5$<br>$R^4 = -H$ | " | " m = 2 |
| III. 233 | " | " | $-C_4H_9(n)$ | $R^3 = -C_2H_5$<br>$R^4 = -CH_3$ | " | " m = 2 |

Tabelle 1 (Fortsetzung)

| Farbst.-Nr. | das eine D" | das andere D" | R | | $Y^1$ | [A] |
|---|---|---|---|---|---|---|
| III. 234 | 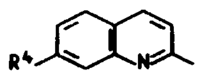 | 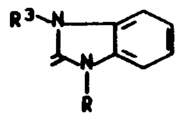 | $-C_8H_{17}(n)$ | $R^3 = -H$<br>$R^4 = -H$ | $-CN$ | 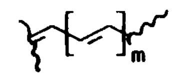 m = 2 |
| III. 235 | ″ | ″ | $-C_8H_{17}(n)$ | $R^3 = -H$<br>$R^4 = -CH_3$ | ″ | ″ m = 2 |
| III. 236 | ″ | ″ | $-C_8H_{17}(n)$ | $R^3 = -CH_3$<br>$R^4 = -H$ | ″ | ″ m = 2 |
| III. 237 | ″ | ″ | $-C_8H_{17}(n)$ | $R^3 = -CH_3$<br>$R^4 = -CH_3$ | ″ | ″ m = 2 |
| III. 238 | ″ | ″ | $-C_8H_{17}(n)$ | $R^3 = -C_2H_5$<br>$R^4 = -H$ | ″ | ″ m = 2 |
| III. 239 | ″ | ″ | $-C_8H_{17}(n)$ | $R^3 = -C_2H_5$<br>$R^4 = -CH_3$ | ″ | ″ m = 2 |
| III. 240 | ″ | ″ | $-H$ | $R^3 = -H$<br>$R^4 = -H$ | ″ | ″ m = 3 |
| III. 241 | ″ | ″ | $-H$ | $R^3 = -H$<br>$R^4 = -CH_3$ | ″ | ″ m = 3 |
| III. 242 | ″ | ″ | $-H$ | $R^3 = -CH_3$<br>$R^4 = -H$ | ″ | ″ m = 3 |
| III. 243 | ″ | ″ | $-H$ | $R^3 = -CH_3$<br>$R^4 = -CH_3$ | ″ | ″ m = 3 |
| III. 244 | ″ | ″ | $-H$ | $R^3 = -C_2H_5$<br>$R^4 = -H$ | ″ | ″ m = 3 |
| III. 245 | ″ | ″ | $-H$ | $R^3 = -C_2H_5$<br>$R^4 = -CH_3$ | ″ | ″ m = 3 |

Tabelle 1 (Fortsetzung)

| Farbst.-Nr. | das eine D* | das andere D* | R | | $Y^1$ | [A] |
|---|---|---|---|---|---|---|
| III. 246 | 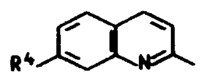 | 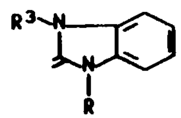 | $-C_2H_5$ | $R^3$ = $-H$<br>$R^4$ = $-H$ | $-CN$ | 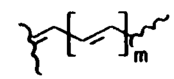 m = 3 |
| III. 247 | ″ | ″ | $-C_2H_5$ | $R^3$ = $-H$<br>$R^4$ = $-CH_3$ | ″ | ″ m = 3 |
| III. 248 | ″ | ″ | $-C_2H_5$ | $R^3$ = $-CH_3$<br>$R^4$ = $-H$ | ″ | ″ m = 3 |
| III. 249 | ″ | ″ | $-C_2H_5$ | $R^3$ = $-CH_3$<br>$R^4$ = $-CH_3$ | ″ | ″ m = 3 |
| III. 250 | ″ | ″ | $-C_2H_5$ | $R^3$ = $-C_2H_5$<br>$R^4$ = $-H$ | ″ | ″ m = 3 |
| III. 251 | ″ | ″ | $-C_2H_5$ | $R^3$ = $-C_2H_5$<br>$R^4$ = $-CH_3$ | ″ | ″ m = 3 |
| III. 252 | ″ | ″ | $-C_4H_9(n)$ | $R^3$ = $-H$<br>$R^4$ = $-H$ | ″ | ″ m = 3 |
| III. 253 | ″ | ″ | $-C_4H_9(n)$ | $R^3$ = $-H$<br>$R^4$ = $-CH_3$ | ″ | ″ m = 3 |
| III. 254 | ″ | ″ | $-C_4H_9(n)$ | $R^3$ = $-CH_3$<br>$R^4$ = $-H$ | ″ | ″ m = 3 |
| III. 255 | ″ | ″ | $-C_4H_9(n)$ | $R^3$ = $-CH_3$<br>$R^4$ = $-CH_3$ | ″ | ″ m = 3 |
| III. 256 | ″ | ″ | $-C_4H_9(n)$ | $R^3$ = $-C_2H_5$<br>$R^4$ = $-H$ | ″ | ″ m = 3 |
| III. 257 | ″ | ″ | $-C_4H_9(n)$ | $R^3$ = $-C_2H_5$<br>$R^4$ = $-CH_3$ | ″ | ″ m = 3 |

Tabelle 1 (Fortsetzung)

| Farbst.-Nr. | das eine D" | das andere D" | R | | $Y^1$ | [A] |
|---|---|---|---|---|---|---|
| III. 258 | 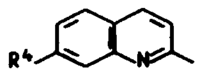 | 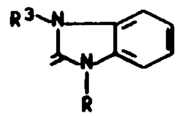 | $-C_8H_{17}(n)$ | $R^3 = -H$<br>$R^4 = -H$ | $-CN$ | 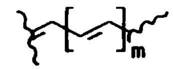 m = 3 |
| III. 259 | ‖ | ‖ | $-C_8H_{17}(n)$ | $R^3 = -H$<br>$R^4 = -CH_3$ | ‖ | ‖ m = 3 |
| III. 260 | ‖ | ‖ | $-C_8H_{17}(n)$ | $R^3 = -CH_3$<br>$R^4 = -H$ | ‖ | ‖ m = 3 |
| III. 261 | ‖ | ‖ | $-C_8H_{17}(n)$ | $R^3 = -CH_3$<br>$R^4 = -CH_3$ | ‖ | ‖ m = 3 |
| III. 262 | ‖ | ‖ | $-C_8H_{17}(n)$ | $R^3 = -C_2H_5$<br>$R^4 = -H$ | ‖ | ‖ m = 3 |
| III. 263 | ‖ | ‖ | $-C_8H_{17}(n)$ | $R^3 = -C_2H_5$<br>$R^4 = -CH_3$ | ‖ | ‖ m = 3 |
| III. 264 | ‖ | ‖ | $-H$ | $R^3 = -H$<br>$R^4 = -H$ | ‖ | ‖ m = 4 |
| III. 265 | ‖ | ‖ | $-H$ | $R^3 = -H$<br>$R^4 = -CH_3$ | ‖ | ‖ m = 4 |
| III. 266 | ‖ | ‖ | $-H$ | $R^3 = -CH_3$<br>$R^4 = -H$ | ‖ | ‖ m = 4 |
| III. 267 | ‖ | ‖ | $-H$ | $R^3 = -CH_3$<br>$R^4 = -CH_3$ | ‖ | ‖ m = 4 |
| III. 268 | ‖ | ‖ | $-H$ | $R^3 = -C_2H_5$<br>$R^4 = -H$ | ‖ | ‖ m = 4 |
| III. 269 | ‖ | ‖ | $-H$ | $R^3 = -C_2H_5$<br>$R^4 = -CH_3$ | ‖ | ‖ m = 4 |

Tabelle 1 (Fortsetzung)

| Farbst.-Nr. | das eine D" | das andere D" | R | | $Y^1$ | [A] | |
|---|---|---|---|---|---|---|---|
| III. 270 | 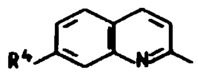 | 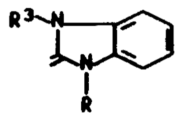 | $-C_2H_5$ | $R^3 = -H$<br>$R^4 = -H$ | $-CN$ | 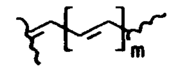 | m = 4 |
| III. 271 | 〃 | 〃 | $-C_2H_5$ | $R^3 = -H$<br>$R^4 = -CH_3$ | 〃 | 〃 | m = 4 |
| III. 272 | 〃 | 〃 | $-C_2H_5$ | $R^3 = -CH_3$<br>$R^4 = -H$ | 〃 | 〃 | m = 4 |
| III. 273 | 〃 | 〃 | $-C_2H_5$ | $R^3 = -CH_3$<br>$R^4 = -CH_3$ | 〃 | 〃 | m = 4 |
| III. 274 | 〃 | 〃 | $-C_2H_5$ | $R^3 = -C_2H_5$<br>$R^4 = -H$ | 〃 | 〃 | m = 4 |
| III. 275 | 〃 | 〃 | $-C_2H_5$ | $R^3 = -C_2H_5$<br>$R^4 = -CH_3$ | 〃 | 〃 | m = 4 |
| III. 276 | 〃 | 〃 | $-C_4H_9(n)$ | $R^3 = -H$<br>$R^4 = -H$ | 〃 | 〃 | m = 4 |
| III. 277 | 〃 | 〃 | $-C_4H_9(n)$ | $R^3 = -H$<br>$R^4 = -CH_3$ | 〃 | 〃 | m = 4 |
| III. 278 | 〃 | 〃 | $-C_4H_9(n)$ | $R^3 = -CH_3$<br>$R^4 = -H$ | 〃 | 〃 | m = 4 |
| III. 279 | 〃 | 〃 | $-C_4H_9(n)$ | $R^3 = -CH_3$<br>$R^4 = -CH_3$ | 〃 | 〃 | m = 4 |
| III. 280 | 〃 | 〃 | $-C_4H_9(n)$ | $R^3 = -C_2H_5$<br>$R^4 = -H$ | 〃 | 〃 | m = 4 |
| III. 281 | 〃 | 〃 | $-C_4H_9(n)$ | $R^3 = -C_2H_5$<br>$R^4 = -CH_3$ | 〃 | 〃 | m = 4 |

Tabelle 1 (Fortsetzung)

| Farbst.-Nr. | das eine D" | das andere D" | R | | $Y^1$ | [A] |
|---|---|---|---|---|---|---|
| III. 282 | 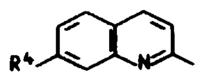 | 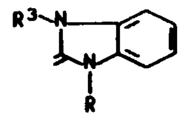 | $-C_8H_{17}(n)$ | $R^3 = -H$<br>$R^4 = -H$ | $-CN$ | 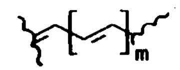 m = 4 |
| III. 283 | ″ | ″ | $-C_8H_{17}(n)$ | $R^3 = -H$<br>$R^4 = -CH_3$ | ″ | ″ m = 4 |
| III. 284 | ″ | ″ | $-C_8H_{17}(n)$ | $R^3 = -CH_3$<br>$R^4 = -H$ | ″ | ″ m = 4 |
| III. 285 | ″ | ″ | $-C_8H_{17}(n)$ | $R^3 = -CH_3$<br>$R^4 = -CH_3$ | ″ | ″ m = 4 |
| III. 286 | ″ | ″ | $-C_8H_{17}(n)$ | $R^3 = -C_2H_5$<br>$R^4 = -H$ | ″ | ″ m = 4 |
| III. 287 | ″ | ″ | $-C_8H_{17}(n)$ | $R^3 = -C_2H_5$<br>$R^4 = -CH_3$ | ″ | ″ m = 4 |
| III. 288 | 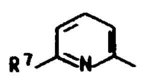 | 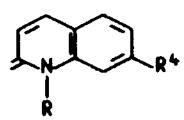 | $-H$ | $R^4 = -H$<br>$R^7 = -H$ | ″ | ″ m m = 1 |
| III. 289 | ″ | ″ | $-H$ | $R^4 = -CH_3$<br>$R^7 = -H$ | ″ | ″ m = 1 |
| III. 290 | ″ | ″ | $-H$ | $R^4 = -H$<br>$R^7 = -CH_3$ | ″ | ″ m = 1 |
| III. 291 | ″ | ″ | $-H$ | $R^4 = -CH_3$<br>$R^7 = -CH_3$ | ″ | ″ m = 1 |

Tabelle 1 (Fortsetzung)

| Farbst.-Nr. | das eine D* | das andere D* | R | | $Y^1$ | [A] | |
|---|---|---|---|---|---|---|---|
| III. 292 | 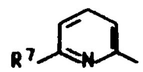 | 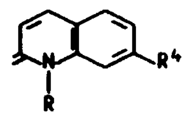 | $-CH_3$ | $R^4 = -H$<br>$R^7 = -H$ | $-CN$ | 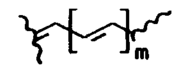 | m = 1 |
| III. 293 | ″ | ″ | $-CH_3$ | $R^4 = -CH_3$<br>$R^7 = -H$ | ″ | ″ | m = 1 |
| III. 294 | ″ | ″ | $-CH_3$ | $R^4 = -H$<br>$R^7 = -CH_3$ | ″ | ″ | m = 1 |
| III. 295 | ″ | ″ | $-CH_3$ | $R^4 = -CH_3$<br>$R^7 = -CH_3$ | ″ | ″ | m = 1 |
| III. 296 | ″ | ″ | $-C_2H_5$ | $R^4 = -H$<br>$R^7 = -H$ | ″ | ″ | m = 1 |
| III. 297 | ″ | ″ | $-C_2H_5$ | $R^4 = -CH_3$<br>$R^7 = -H$ | ″ | ″ | m = 1 |
| III. 298 | ″ | ″ | $-C_2H_5$ | $R^4 = -H$<br>$R^7 = -CH_3$ | ″ | ″ | m = 1 |
| III. 299 | ″ | ″ | $-C_2H_5$ | $R^4 = -CH_3$<br>$R^7 = -CH_3$ | ″ | ″ | m = 1 |
| III. 300 | ″ | ″ | $-C_2H_4OH$ | $R^4 = -H$<br>$R^7 = -H$ | ″ | ″ | m = 1 |
| III. 301 | ″ | ″ | $-C_2H_4OH$ | $R^4 = -CH_3$<br>$R^7 = -H$ | ″ | ″ | m = 1 |
| III. 302 | ″ | ″ | $-C_2H_4OH$ | $R^4 = -H$<br>$R^7 = -CH_3$ | ″ | ″ | m = 1 |
| III. 303 | ″ | ″ | $-C_2H_4OH$ | $R^4 = -CH_3$<br>$R^7 = -CH_3$ | ″ | ″ | m = 1 |

Tabelle 1 (Fortsetzung)

| Farbst.-Nr. | das eine D" | das andere D" | R | | $Y^1$ | [A] | |
|---|---|---|---|---|---|---|---|
| III. 304 | 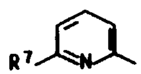 | 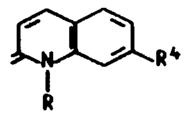 | $-C_8H_{17}(n)$ | $R^4 = -H$<br>$R^7 = -H$ | $-CN$ | 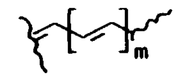 | m = 1 |
| III. 305 | " | " | $-C_8H_{17}(n)$ | $R^4 = -CH_3$<br>$R^7 = -H$ | " | " | m = 1 |
| III. 306 | " | " | $-C_8H_{17}(n)$ | $R^4 = -H$<br>$R^7 = -CH_3$ | " | " | m = 1 |
| III. 307 | " | " | $-C_8H_{17}(n)$ | $R^4 = -CH_3$<br>$R^7 = -CH_3$ | " | " | m = 1 |
| III. 308 | " | " | $-H$ | $R^4 = -H$<br>$R^7 = -H$ | " | " | m = 2 |
| III. 309 | " | " | $-H$ | $R^4 = -CH_3$<br>$R^7 = -H$ | " | " | m = 2 |
| III. 310 | " | " | $-H$ | $R^4 = -H$<br>$R^7 = -CH_3$ | " | " | m = 2 |
| III. 311 | " | " | $-H$ | $R^4 = -CH_3$<br>$R^7 = -CH_3$ | " | " | m = 2 |
| III. 312 | " | " | $-CH_3$ | $R^4 = -H$<br>$R^7 = -H$ | " | " | m = 2 |
| III. 313 | " | " | $-CH_3$ | $R^4 = -CH_3$<br>$R^7 = -H$ | " | " | m = 2 |
| III. 314 | " | " | $-CH_3$ | $R^4 = -H$<br>$R^7 = -CH_3$ | " | " | m = 2 |
| III. 315 | " | " | $-CH_3$ | $R^4 = -CH_3$<br>$R^7 = -CH_3$ | " | " | m = 2 |

Tabelle 1 (Fortsetzung)

| Farbst.-Nr. | das eine D" | das andere D" | R | | $Y^1$ | [A] |
|---|---|---|---|---|---|---|
| III. 316 | 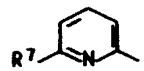 | 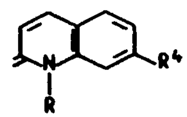 | $-C_2H_5$ | $R^4$ = $-H$<br>$R^7$ = $-H$ | $-CN$ | 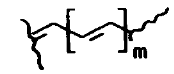 m = 2 |
| III. 317 | ″ | ″ | $-C_2H_5$ | $R^4$ = $-CH_3$<br>$R^7$ = $-H$ | ″ | ″ m = 2 |
| III. 318 | ″ | ″ | $-C_2H_5$ | $R^4$ = $-H$<br>$R^7$ = $-CH_3$ | ″ | ″ m = 2 |
| III. 319 | ″ | ″ | $-C_2H_5$ | $R^4$ = $-CH_3$<br>$R^7$ = $-CH_3$ | ″ | ″ m = 2 |
| III. 320 | ″ | ″ | $-C_2H_4OH$ | $R^4$ = $-H$<br>$R^7$ = $-H$ | ″ | ″ m = 2 |
| III. 321 | ″ | ″ | $-C_2H_4OH$ | $R^4$ = $-CH_3$<br>$R^7$ = $-H$ | ″ | ″ m = 2 |
| III. 322 | ″ | ″ | $-C_2H_4OH$ | $R^4$ = $-H$<br>$R^7$ = $-CH_3$ | ″ | ″ m = 2 |
| III. 323 | ″ | ″ | $-C_2H_4OH$ | $R^4$ = $-CH_3$<br>$R^7$ = $-CH_3$ | ″ | ″ m = 2 |
| III. 324 | ″ | ″ | $-C_8H_{17}(n)$ | $R^4$ = $-H$<br>$R^7$ = $-H$ | ″ | ″ m = 2 |
| III. 325 | ″ | ″ | $-C_8H_{17}(n)$ | $R^4$ = $-CH_3$<br>$R^7$ = $-H$ | ″ | ″ m = 2 |
| III. 326 | ″ | ″ | $-C_8H_{17}(n)$ | $R^4$ = $-H$<br>$R^7$ = $-CH_3$ | ″ | ″ m = 2 |
| III. 327 | ″ | ″ | $-C_8H_{17}(n)$ | $R^4$ = $-CH_3$<br>$R^7$ = $-CH_3$ | ″ | ″ m = 2 |

Tabelle 1 (Fortsetzung)

| Farbst.-Nr. | das eine D" | das andere D" | R | | $Y^1$ | [A] |
|---|---|---|---|---|---|---|
| III. 328 | 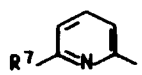 | 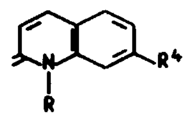 | $-H$ | $R^4 = -H$<br>$R^7 = -H$ | $-CN$ | 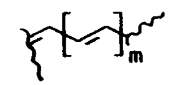 m = 3 |
| III. 329 | " | " | $-H$ | $R^4 = -CH_3$<br>$R^7 = -H$ | " | " m = 3 |
| III. 330 | " | " | $-H$ | $R^4 = -H$<br>$R^7 = -CH_3$ | " | " m = 3 |
| III. 331 | " | " | $-H$ | $R^4 = -CH_3$<br>$R^7 = -CH_3$ | " | " m = 3 |
| III. 332 | " | " | $-CH_3$ | $R^4 = -H$<br>$R^7 = -H$ | " | " m = 3 |
| III. 333 | " | " | $-CH_3$ | $R^4 = -CH_3$<br>$R^7 = -H$ | " | " m = 3 |
| III. 334 | " | " | $-CH_3$ | $R^4 = -H$<br>$R^7 = -CH_3$ | " | " m = 3 |
| III. 335 | " | " | $-CH_3$ | $R^4 = -CH_3$<br>$R^7 = -CH_3$ | " | " m = 3 |
| III. 336 | " | " | $-C_2H_5$ | $R^4 = -H$<br>$R^7 = -H$ | " | " m = 3 |
| III. 337 | " | " | $-C_2H_5$ | $R^4 = -CH_3$<br>$R^7 = -H$ | " | " m = 3 |
| III. 338 | " | " | $-C_2H_5$ | $R^4 = -H$<br>$R^7 = -CH_3$ | " | " m = 3 |
| III. 339 | " | " | $-C_2H_5$ | $R^4 = -CH_3$<br>$R^7 = -CH_3$ | " | " m = 3 |

Tabelle 1 (Fortsetzung)

| Farbst.-Nr. | das eine D" | das andere D" | R | | $Y^1$ | [A] | |
|---|---|---|---|---|---|---|---|
| III. 340 | 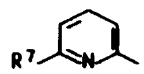 | 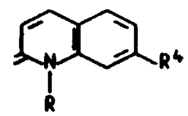 | $-C_2H_4OH$ | $R^4 = -H$<br>$R^7 = -H$ | $-CN$ | 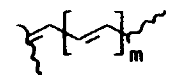 | m = 3 |
| III. 341 | " | " | $-C_2H_4OH$ | $R^4 = -CH_3$<br>$R^7 = -H$ | " | " | m = 3 |
| III. 342 | " | " | $-C_2H_4OH$ | $R^4 = -H$<br>$R^7 = -CH_3$ | " | " | m = 3 |
| III. 343 | " | " | $-C_2H_4OH$ | $R^4 = -CH_3$<br>$R^7 = -CH_3$ | " | " | m = 3 |
| III. 344 | " | " | $-C_8H_{17}(n)$ | $R^4 = -H$<br>$R^7 = -H$ | " | " | m = 3 |
| III. 345 | " | " | $-C_8H_{17}(n)$ | $R^4 = -CH_3$<br>$R^7 = -H$ | " | " | m = 3 |
| III. 346 | " | " | $-C_8H_{17}(n)$ | $R^4 = -H$<br>$R^7 = -CH_3$ | " | " | m = 3 |
| III. 347 | " | " | $-C_8H_{17}(n)$ | $R^4 = -CH_3$<br>$R^7 = -CH_3$ | " | " | m = 3 |
| III. 348 | " | " | $-H$ | $R^4 = -H$<br>$R^7 = -H$ | " | " | m = 4 |
| III. 349 | " | " | $-H$ | $R^4 = -CH_3$<br>$R^7 = -H$ | " | " | m = 4 |
| III. 350 | " | " | $-H$ | $R^4 = -H$<br>$R^7 = -CH_3$ | " | " | m = 4 |
| III. 351 | " | " | $-H$ | $R^4 = -CH_3$<br>$R^7 = -CH_3$ | " | " | m = 4 |

Tabelle 1 (Fortsetzung)

| Farbst.-Nr. | das eine D" | das andere D" | R | | $Y^1$ | [A] |
|---|---|---|---|---|---|---|
| III. 352 | 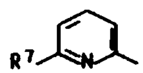 | 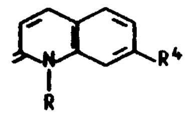 | $-CH_3$ | $R^4$ = $-H$<br>$R^7$ = $-H$ | $-CN$ | 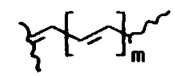 m = 4 |
| III. 353 | 〃 | 〃 | $-CH_3$ | $R^4$ = $-CH_3$<br>$R^7$ = $-H$ | 〃 | 〃 m = 4 |
| III. 354 | 〃 | 〃 | $-CH_3$ | $R^4$ = $-H$<br>$R^7$ = $-CH_3$ | 〃 | 〃 m = 4 |
| III. 355 | 〃 | 〃 | $-CH_3$ | $R^4$ = $-CH_3$<br>$R^7$ = $-CH_3$ | 〃 | 〃 m = 4 |
| III. 356 | 〃 | 〃 | $-C_2H_5$ | $R^4$ = $-H$<br>$R^7$ = $-H$ | 〃 | 〃 m = 4 |
| III. 357 | 〃 | 〃 | $-C_2H_5$ | $R^4$ = $-CH_3$<br>$R^7$ = $-H$ | 〃 | 〃 m = 4 |
| III. 358 | 〃 | 〃 | $-C_2H_5$ | $R^4$ = $-H$<br>$R^7$ = $-CH_3$ | 〃 | 〃 m = 4 |
| III. 359 | 〃 | 〃 | $-C_2H_5$ | $R^4$ = $-CH_3$<br>$R^7$ = $-CH_3$ | 〃 | 〃 m = 4 |
| III. 360 | 〃 | 〃 | $-C_2H_4OH$ | $R^4$ = $-H$<br>$R^7$ = $-H$ | 〃 | 〃 m = 4 |
| III. 361 | 〃 | 〃 | $-C_2H_4OH$ | $R^4$ = $-CH_3$<br>$R^7$ = $-H$ | 〃 | 〃 m = 4 |
| III. 362 | 〃 | 〃 | $-C_2H_4OH$ | $R^4$ = $-H$<br>$R^7$ = $-CH_3$ | 〃 | 〃 m = 4 |
| III. 363 | 〃 | 〃 | $-C_2H_4OH$ | $R^4$ = $-CH_3$<br>$R^7$ = $-CH_3$ | 〃 | 〃 m = 4 |

Tabelle 1 (Fortsetzung)

| Farbst.-Nr. | das eine D" | das andere D" | R | | $Y^1$ | [A] |
|---|---|---|---|---|---|---|
| III. 364 | 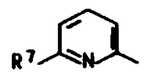 | 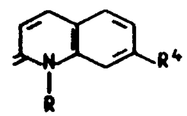 | $-C_8H_{17}(n)$ | $R^4 = -H$<br>$R^7 = -H$ | $-CN$ | 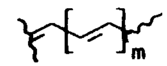 m = 4 |
| III. 365 | ″ | ″ | $-C_8H_{17}(n)$ | $R^4 = -CH_3$<br>$R^7 = -H$ | ″ | ″ m = 4 |
| III. 366 | ″ | ″ | $-C_8H_{17}(n)$ | $R^4 = -H$<br>$R^7 = -CH_3$ | ″ | ″ m = 4 |
| III. 367 | ″ | ″ | $-C_8H_{17}(n)$ | $R^4 = -CH_3$<br>$R^7 = -CH_3$ | ″ | ″ m = 4 |
| III. 368 | ″ | ″ | $-H$ | $R^4 = -H$<br>$R^7 = -H$ | ″ | 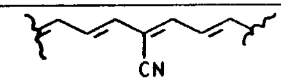 |
| III. 369 | ″ | ″ | $-H$ | $R^4 = -H$<br>$R^7 = -CH_3$ | ″ | ″ |
| III. 370 | ″ | ″ | $-H$ | $R^4 = -CH_3$<br>$R^7 = -H$ | ″ | ″ |
| III. 371 | ″ | ″ | $-H$ | $R^4 = -CH_3$<br>$R^7 = -CH_3$ | ″ | ″ |
| III. 372 | ″ | ″ | $-CH_3$ | $R^4 = -H$<br>$R^7 = -H$ | ″ | ″ |
| III. 373 | ″ | ″ | $-CH_3$ | $R^4 = -H$<br>$R^7 = -CH_3$ | ″ | ″ |
| III. 374 | ″ | ″ | $-CH_3$ | $R^4 = -CH_3$<br>$R^7 = -H$ | ″ | ″ |
| III. 374a | ″ | ″ | $-CH_3$ | $R^4 = -CH_3$<br>$R^7 = -H$ | ″ | ″ |

Tabelle 1 (Fortsetzung)

| Farbst.-Nr. | das eine D" | das andere D" | R | | $Y^1$ | [A] |
|---|---|---|---|---|---|---|
| III. 375 | 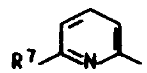 | 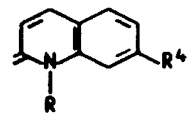 | $-C_2H_5$ | $R^4 = -H$<br>$R^7 = -H$ | $-CN$ | 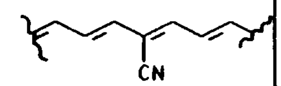 |
| III. 376 | " | " | $-C_2H_5$ | $R^4 = -H$<br>$R^7 = -CH_3$ | " | " |
| III. 377 | " | " | $-C_2H_5$ | $R^4 = -CH_3$<br>$R^7 = -H$ | " | " |
| III. 378 | " | " | $-C_2H_5$ | $R^4 = -CH_3$<br>$R^7 = -CH_3$ | " | " |
| III. 379 | " | " | $-C_2H_4OH$ | $R^4 = -H$<br>$R^7 = -H$ | " | " |
| III. 380 | " | " | $-C_2H_4OH$ | $R^4 = -H$<br>$R^7 = -CH_3$ | " | " |
| III. 381 | " | " | $-C_2H_4OH$ | $R^4 = -CH_3$<br>$R^7 = -H$ | " | " |
| III. 382 | " | " | $-C_2H_4OH$ | $R^4 = -CH_3$<br>$R^7 = -CH_3$ | " | " |
| III. 383 | " | " | $-C_8H_{17}(n)$ | $R^4 = -H$<br>$R^7 = -H$ | " | " |
| III. 384 | " | " | $-C_8H_{17}(n)$ | $R^4 = -H$<br>$R^7 = -CH_3$ | " | " |
| III. 385 | " | " | $-C_8H_{17}(n)$ | $R^4 = -CH_3$<br>$R^7 = -H$ | " | " |
| III. 386 | " | " | $-C_8H_{17}(n)$ | $R^4 = -CH_3$<br>$R^7 = -CH_3$ | " | " |

Tabelle 1 (Fortsetzung)

| Farbst.-Nr. | das eine D" | das andere D" | R | | $Y^1$ | [A] | |
|---|---|---|---|---|---|---|---|
| III. 387 | 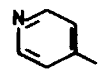 | 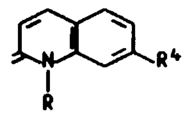 | $-H$ | $R^4 = -H$ | $-CN$ | 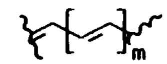 | m = 1 |
| III. 388 | " | " | $-H$ | $R^4 = -CH_3$ | " | " | m = 1 |
| III. 389 | " | " | $-CH_3$ | $R^4 = -H$ | " | " | m = 1 |
| III. 390 | " | " | $-CH_3$ | $R^4 = -CH_3$ | " | " | m = 1 |
| III. 391 | " | " | $-C_2H_5$ | $R^4 = -H$ | " | " | m = 1 |
| III. 392 | " | " | $-C_2H_5$ | $R^4 = -CH_3$ | " | " | m = 1 |
| III. 393 | " | " | $-C_2H_4OH$ | $R^4 = -H$ | " | " | m = 1 |
| III. 394 | " | " | $-C_2H_4OH$ | $R^4 = -CH_3$ | " | " | m = 1 |
| III. 395 | " | " | $-C_{12}H_{25}(n)$ | $R^4 = -H$ | " | " | m = 1 |
| III. 396 | " | " | $-C_{12}H_{25}(n)$ | $R^4 = -CH_3$ | " | " | m = 1 |
| III. 397 | " | " | $-H$ | $R^4 = -H$ | " | " | m = 2 |
| III. 398 | " | " | $-H$ | $R^4 = -CH_3$ | " | " | m = 2 |
| III. 399 | " | " | $-CH_3$ | $R^4 = -H$ | " | " | m = 2 |
| III. 400 | " | " | $-CH_3$ | $R^4 = -CH_3$ | " | " | m = 2 |
| III. 401 | " | " | $-C_2H_5$ | $R^4 = -H$ | " | " | m = 2 |
| III. 402 | " | " | $-C_2H_5$ | $R^4 = -CH_3$ | " | " | m = 2 |

Tabelle 1 (Fortsetzung)

| Farbst.-Nr. | das eine D" | das andere D" | R | | $Y^1$ | [A] |
|---|---|---|---|---|---|---|
| III. 403 | 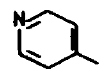 | 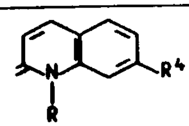 | $-C_2H_4OH$ | $R^4 = -H$ | $-CN$ | 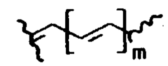 m = 2 |
| III. 404 | " | " | $-C_2H_4OH$ | $R^4 = -CH_3$ | " | " m = 2 |
| III. 405 | " | " | $-C_{12}H_{25}(n)$ | $R^4 = -H$ | " | " m = 2 |
| III. 406 | " | " | $-C_{12}H_{25}(n)$ | $R^4 = -CH_3$ | " | " m = 2 |
| III. 407 | " | " | $-H$ | $R^4 = -H$ | " | " m = 3 |
| III. 408 | " | " | $-H$ | $R^4 = -CH_3$ | " | " m = 3 |
| III. 409 | " | " | $-CH_3$ | $R^4 = -H$ | " | " m = 3 |
| III. 410 | " | " | $-CH_3$ | $R^4 = -CH_3$ | " | " m = 3 |
| III. 411 | " | " | $-C_2H_5$ | $R^4 = -H$ | " | " m = 3 |
| III. 412 | " | " | $-C_2H_5$ | $R^4 = -CH_3$ | " | " m = 3 |
| III. 413 | " | " | $-C_2H_4OH$ | $R^4 = -H$ | " | " m = 3 |
| III. 414 | " | " | $-C_2H_4OH$ | $R^4 = -CH_3$ | " | " m = 3 |
| III. 415 | " | " | $-C_{12}H_{25}(n)$ | $R^4 = -H$ | " | " m = 3 |
| III. 416 | " | " | $-C_{12}H_{25}(n)$ | $R^4 = -CH_3$ | " | " m = 3 |
| III. 417 | " | " | $-H$ | $R^4 = -H$ | " | " m = 4 |
| III. 418 | " | " | $-H$ | $R^4 = -CH_3$ | " | " m = 4 |
| III. 419 | " | " | $-CH_3$ | $R^4 = -H$ | " | " m = 4 |

Tabelle 1 (Fortsetzung)

| Farbst.-Nr. | das eine D* | das andere D* | R | | $Y^1$ | [A] |
|---|---|---|---|---|---|---|
| III. 420 | 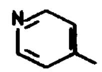 | 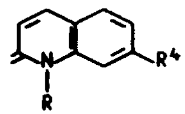 | $-CH_3$ | $R^4$ = $-CH_3$ | $-CN$ | 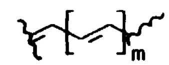 m = 4 |
| III. 421 | ″ | ″ | $-C_2H_5$ | $R^4$ = $-H$ | ″ | ″ m = 4 |
| III. 422 | ″ | ″ | $-C_2H_5$ | $R^4$ = $-CH_3$ | ″ | ″ m = 4 |
| III. 423 | ″ | ″ | $-C_2H_4OH$ | $R^4$ = $-H$ | ″ | ″ m = 4 |
| III. 424 | ″ | ″ | $-C_2H_4OH$ | $R^4$ = $-CH_3$ | ″ | ″ m = 4 |
| III. 425 | ″ | ″ | $-C_{12}H_{25}(n)$ | $R^4$ = $-H$ | ″ | ″ m = 4 |
| III. 426 | ″ | ″ | $-C_{12}H_{25}(n)$ | $R^4$ = $-CH_3$ | ″ | ″ m = 4 |
| III. 427 | 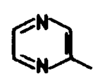 | 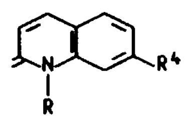 | $-H$ | $R^4$ = $-H$ | ″ | ″ m = 1 |
| III. 428 | ″ | ″ | $-H$ | $R^4$ = $-CH_3$ | ″ | ″ m = 1 |
| III. 429 | ″ | ″ | $-CH_3$ | $R^4$ = $-H$ | ″ | ″ m = 1 |
| III. 430 | ″ | ″ | $-CH_3$ | $R^4$ = $-CH_3$ | ″ | ″ m = 1 |
| III. 431 | ″ | ″ | $-C_2H_5$ | $R^4$ = $-H$ | ″ | ″ m = 1 |
| III. 432 | ″ | ″ | $-C_2H_5$ | $R^4$ = $-CH_3$ | ″ | ″ m = 1 |
| III. 433 | ″ | ″ | $-C_2H_4OH$ | $R^4$ = $-H$ | ″ | ″ m = 1 |

Tabelle 1 (Fortsetzung)

| Farbst.-Nr. | das eine D" | das andere D" | R | | $Y^1$ | [A] |
|---|---|---|---|---|---|---|
| III. 434 | 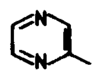 | 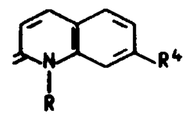 | $-C_2H_4OH$ | $R^4 = -CH_3$ | $-CN$ | 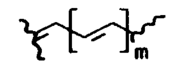 m = 1 |
| III. 435 | " | " | $-C_{12}H_{25}(n)$ | $R^4 = -H$ | " | " m = 1 |
| III. 436 | " | " | $-C_{12}H_{25}(n)$ | $R^4 = -CH_3$ | " | " m = 1 |
| III. 437 | " | " | $-H$ | $R^4 = -H$ | " | " m = 2 |
| III. 438 | " | " | $-H$ | $R^4 = -CH_3$ | " | " m = 2 |
| III. 439 | " | " | $-CH_3$ | $R^4 = -H$ | " | " m = 2 |
| III. 440 | " | " | $-CH_3$ | $R^4 = -CH_3$ | " | " m = 2 |
| III. 441 | " | " | $-C_2H_5$ | $R^4 = -H$ | " | " m = 2 |
| III. 442 | " | " | $-C_2H_5$ | $R^4 = -CH_3$ | " | " m = 2 |
| III. 443 | " | " | $-C_2H_4OH$ | $R^4 = -H$ | " | " m = 2 |
| III. 444 | " | " | $-C_2H_4OH$ | $R^4 = -CH_3$ | " | " m = 2 |
| III. 445 | " | " | $-C_{12}H_{25}(n)$ | $R^4 = -H$ | " | " m = 2 |
| III. 446 | " | " | $-C_{12}H_{25}(n)$ | $R^4 = -CH_3$ | " | " m = 2 |
| III. 447 | " | " | $-H$ | $R^4 = -H$ | " | " m = 3 |
| III. 448 | " | " | $-H$ | $R^4 = -CH_3$ | " | " m = 3 |
| III. 449 | " | " | $-CH_3$ | $R^4 = -H$ | " | " m = 3 |
| III. 450 | " | " | $-CH_3$ | $R^4 = -CH_3$ | " | " m = 3 |

Tabelle 1 (Fortsetzung)

| Farbst.-Nr. | das eine D" | das andere D" | R | | $Y^1$ | [A] | |
|---|---|---|---|---|---|---|---|
| III. 451 | 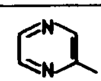 | 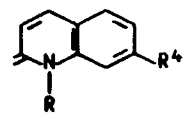 | $-C_2H_5$ | $R^4 = -H$ | $-CN$ | 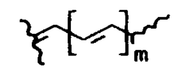 | m = 3 |
| III. 452 | ″ | ″ | $-C_2H_5$ | $R^4 = -CH_3$ | ″ | ″ | m = 3 |
| III. 453 | ″ | ″ | $-C_2H_4OH$ | $R^4 = -H$ | ″ | ″ | m = 3 |
| III. 454 | ″ | ″ | $-C_2H_4OH$ | $R^4 = -CH_3$ | ″ | ″ | m = 3 |
| III. 455 | ″ | ″ | $-C_{12}H_{25}(n)$ | $R^4 = -H$ | ″ | ″ | m = 3 |
| III. 456 | ″ | ″ | $-C_{12}H_{25}(n)$ | $R^4 = -CH_3$ | ″ | ″ | m = 3 |
| III. 457 | ″ | ″ | $-H$ | $R^4 = -H$ | ″ | ″ | m = 4 |
| III. 458 | ″ | ″ | $-H$ | $R^4 = -CH_3$ | ″ | ″ | m = 4 |
| III. 459 | ″ | ″ | $-CH_3$ | $R^4 = -H$ | ″ | ″ | m = 4 |
| III. 460 | ″ | ″ | $-CH_3$ | $R^4 = -CH_3$ | ″ | ″ | m = 4 |
| III. 461 | ″ | ″ | $-C_2H_5$ | $R^4 = -H$ | ″ | ″ | m = 4 |
| III. 462 | ″ | ″ | $-C_2H_5$ | $R^4 = -CH_3$ | ″ | ″ | m = 4 |
| III. 463 | ″ | ″ | $-C_2H_4OH$ | $R^4 = -H$ | ″ | ″ | m = 4 |
| III. 464 | ″ | ″ | $-C_2H_4OH$ | $R^4 = -CH_3$ | ″ | ″ | m = 4 |
| III. 465 | ″ | ″ | $-C_{12}H_{25}(n)$ | $R^4 = -H$ | ″ | ″ | m = 4 |
| III. 466 | ″ | ″ | $-C_{12}H_{25}(n)$ | $R^4 = -CH_3$ | ″ | ″ | m = 4 |

Tabelle 1 (Fortsetzung)

| Farbst.-Nr. | das eine D* | das andere D* | R | | $Y^1$ | [A] |
|---|---|---|---|---|---|---|
| III. 467 | 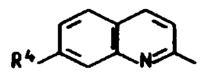 | 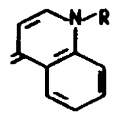 | $-H$ | $R^4 = -H$ | $-CN$ | 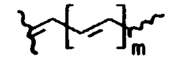 m = 1 |
| III. 468 | ″ | ″ | $-H$ | $R^4 = -CH_3$ | ″ | ″ m = 1 |
| III. 469 | ″ | ″ | $-CH_3$ | $R^4 = -H$ | ″ | ″ m = 1 |
| III. 470 | ″ | ″ | $-CH_3$ | $R^4 = -CH_3$ | ″ | ″ m = 1 |
| III. 471 | ″ | ″ | $-C_2H_5$ | $R^4 = -H$ | ″ | ″ m = 1 |
| III. 472 | ″ | ″ | $-C_2H_5$ | $R^4 = -CH_3$ | ″ | ″ m = 1 |
| III. 473 | ″ | ″ | $-C_8H_{17}(n)$ | $R^4 = -H$ | ″ | ″ m = 1 |
| III. 474 | ″ | ″ | $-C_8H_{17}(n)$ | $R^4 = -CH_3$ | ″ | ″ m = 1 |
| III. 475 | ″ | ″ | $-H$ | $R^4 = -H$ | ″ | ″ m = 2 |
| III. 476 | ″ | ″ | $-H$ | $R^4 = -CH_3$ | ″ | ″ m = 2 |
| III. 477 | ″ | ″ | $-CH_3$ | $R^4 = -H$ | ″ | ″ m = 2 |
| III. 478 | ″ | ″ | $-CH_3$ | $R^4 = -CH_3$ | ″ | ″ m = 2 |
| III. 479 | ″ | ″ | $-C_2H_5$ | $R^4 = -H$ | ″ | ″ m = 2 |
| III. 480 | ″ | ″ | $-C_2H_5$ | $R^4 = -CH_3$ | ″ | ″ m = 2 |
| III. 481 | ″ | ″ | $-C_8H_{17}(n)$ | $R^4 = -H$ | ″ | ″ m = 2 |
| III. 482 | ″ | ″ | $-C_8H_{17}(n)$ | $R^4 = -CH_3$ | ″ | ″ m = 2 |

Tabelle 1 (Fortsetzung)

| Farbst.-Nr. | das eine D* | das andere D* | R | | $Y^1$ | [A] | |
|---|---|---|---|---|---|---|---|
| III. 483 | 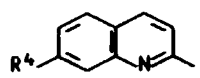 | 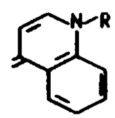 | $-H$ | $R^4 = -H$ | $-CN$ | 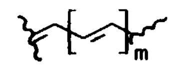 | m = 3 |
| III. 484 | ″ | ″ | $-H$ | $R^4 = -CH_3$ | ″ | ″ | m = 3 |
| III. 485 | ″ | ″ | $-CH_3$ | $R^4 = -H$ | ″ | ″ | m = 3 |
| III. 486 | ″ | ″ | $-CH_3$ | $R^4 = -CH_3$ | ″ | ″ | m = 3 |
| III. 487 | ″ | ″ | $-C_2H_5$ | $R^4 = -H$ | ″ | ″ | m = 3 |
| III. 488 | ″ | ″ | $-C_2H_5$ | $R^4 = -CH_3$ | ″ | ″ | m = 3 |
| III. 489 | ″ | ″ | $-C_8H_{17}(n)$ | $R^4 = -H$ | ″ | ″ | m = 3 |
| III. 490 | ″ | ″ | $-C_8H_{17}(n)$ | $R^4 = -CH_3$ | ″ | ″ | m = 3 |
| III. 491 | ″ | ″ | $-H$ | $R^4 = -H$ | ″ | ″ | m = 4 |
| III. 492 | ″ | ″ | $-H$ | $R^4 = -CH_3$ | ″ | ″ | m = 4 |
| III. 493 | ″ | ″ | $-CH_3$ | $R^4 = -H$ | ″ | ″ | m = 4 |
| III. 494 | ″ | ″ | $-CH_3$ | $R^4 = -CH_3$ | ″ | ″ | m = 4 |
| III. 495 | ″ | ″ | $-C_2H_5$ | $R^4 = -H$ | ″ | ″ | m = 4 |
| III. 496 | ″ | ″ | $-C_2H_5$ | $R^4 = -CH_3$ | ″ | ″ | m = 4 |
| III. 497 | ″ | ″ | $-C_8H_{17}(n)$ | $R^4 = -H$ | ″ | ″ | m = 4 |
| III. 498 | ″ | ″ | $-C_8H_{17}(n)$ | $R^4 = -CH_3$ | ″ | ″ | m = 4 |

Tabelle 1 (Fortsetzung)

| Farbst.-Nr. | das eine D* | das andere D* | R | | $Y^1$ | [A] |
|---|---|---|---|---|---|---|
| III. 499 | 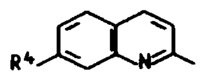 | 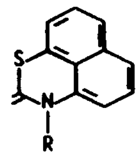 | $-H$ | $R^4 = -H$ | $-CN$ | 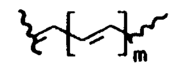 m = 1 |
| III. 500 | " | " | $-H$ | $R^4 = -CH_3$ | " | " m = 1 |
| III. 501 | " | " | $-H$ | $R^4 = -H$ | " | " m = 2 |
| III. 502 | " | " | $-H$ | $R^4 = -CH_3$ | " | " m = 2 |
| III. 503 | " | " | $-H$ | $R^4 = -H$ | " | " m = 3 |
| III. 504 | " | " | $-H$ | $R^4 = -CH_3$ | " | " m = 3 |
| III. 505 | " | " | $-H$ | $R^4 = -H$ | " | " m = 4 |
| III. 506 | " | " | $-H$ | $R^4 = -CH_3$ | " | " m = 4 |
| III. 507 | 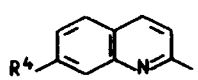 | 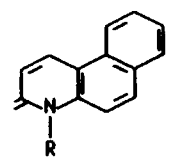 | $-H$ | $R^4 = -H$ | " | " m = 1 |
| III. 508 | " | " | $-H$ | $R^4 = -CH_3$ | " | " m = 1 |
| III. 509 | " | " | $-CH_3$ | $R^4 = -H$ | " | " m = 1 |

Tabelle 1 (Fortsetzung)

| Farbst.-Nr. | das eine D" | das andere D" | R | | $Y^1$ | [A] | |
|---|---|---|---|---|---|---|---|
| III. 510 | 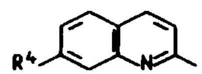 | 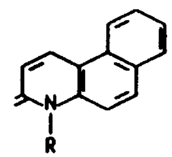 | $-CH_3$ | $R^4 = -CH_3$ | $-CN$ | 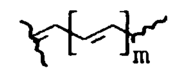 | m = 1 |
| III. 511 | ″ | ″ | $-C_2H_5$ | $R^4 = -H$ | ″ | ″ | m = 1 |
| III. 512 | ″ | ″ | $-C_2H_5$ | $R^4 = -CH_3$ | ″ | ″ | m = 1 |
| III. 513 | ″ | ″ | $-C_8H_{17}(n)$ | $R^4 = -H$ | ″ | ″ | m = 1 |
| III. 514 | ″ | ″ | $-C_8H_{17}(n)$ | $R^4 = -CH_3$ | ″ | ″ | m = 1 |
| III. 515 | ″ | ″ | $-H$ | $R^4 = -H$ | ″ | ″ | m = 2 |
| III. 516 | ″ | ″ | $-H$ | $R^4 = -CH_3$ | ″ | ″ | m = 2 |
| III. 517 | ″ | ″ | $-CH_3$ | $R^4 = -H$ | ″ | ″ | m = 2 |
| III. 518 | ″ | ″ | $-CH_3$ | $R^4 = -CH_3$ | ″ | ″ | m = 2 |
| III. 519 | ″ | ″ | $-C_2H_5$ | $R^4 = -H$ | ″ | ″ | m = 2 |
| III. 520 | ″ | ″ | $-C_2H_5$ | $R^4 = -CH_3$ | ″ | ″ | m = 2 |
| III. 521 | ″ | ″ | $-C_8H_{17}(n)$ | $R^4 = -H$ | ″ | ″ | m = 2 |
| III. 522 | ″ | ″ | $-C_8H_{17}(n)$ | $R^4 = -CH_3$ | ″ | ″ | m = 2 |
| III. 523 | ″ | ″ | $-H$ | $R^4 = -H$ | ″ | ″ | m = 3 |
| III. 524 | ″ | ″ | $-H$ | $R^4 = -CH_3$ | ″ | ″ | m = 3 |
| III. 525 | ″ | ″ | $-CH_3$ | $R^4 = -H$ | ″ | ″ | m = 3 |

Tabelle 1 (Fortsetzung)

| Farbst.-Nr. | das eine D" | das andere D" | R | | $Y^1$ | [A] |
|---|---|---|---|---|---|---|
| III. 526 | 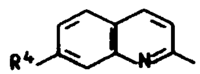 | 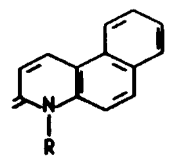 | $-CH_3$ | $R^4 = -CH_3$ | $-CN$ | 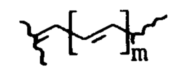 m = 1 |
| III. 527 | " | " | $-C_2H_5$ | $R^4 = -H$ | " | " m = 3 |
| III. 528 | " | " | $-C_2H_5$ | $R^4 = -CH_3$ | " | " m = 3 |
| III. 529 | " | " | $-C_8H_{17}(n)$ | $R^4 = -H$ | " | " m = 3 |
| III. 530 | " | " | $-C_8H_{17}(n)$ | $R^4 = -CH_3$ | " | " m = 3 |
| III. 531 | " | " | $-H$ | $R^4 = -H$ | " | " m = 4 |
| III. 532 | " | " | $-H$ | $R^4 = -CH_3$ | " | " m = 4 |
| III. 533 | " | " | $-CH_3$ | $R^4 = -H$ | " | " m = 4 |
| III. 534 | " | " | $-CH_3$ | $R^4 = -CH_3$ | " | " m = 4 |
| III. 535 | " | " | $-C_2H_5$ | $R^4 = -H$ | " | " m = 4 |
| III. 536 | " | " | $-C_2H_5$ | $R^4 = -CH_3$ | " | " m = 4 |
| III. 537 | " | " | $-C_8H_{17}(n)$ | $R^4 = -H$ | " | " m = 4 |
| III. 538 | " | " | $-C_8H_{17}(n)$ | $R^4 = -CH_3$ | " | " m = 4 |

Tabelle 1 (Fortsetzung)

| Farbst.-Nr. | das eine D" | das andere D" | R | | $Y^1$ | [A] | |
|---|---|---|---|---|---|---|---|
| III. 539 | 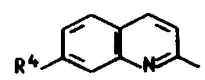 | 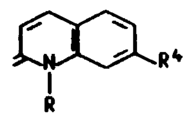 | $-H$ | $R^4 = -H$ | $-H$ | 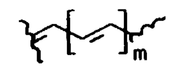 | m = 1 |
| III. 540 | " | " | $-H$ | $R^4 = -CH_3$ | " | " | m = 1 |
| III. 541 | " | " | $-CH_3$ | $R^4 = -H$ | " | " | m = 1 |
| III. 542 | " | " | $-CH_3$ | $R^4 = -CH_3$ | " | " | m = 1 |
| III. 543 | " | " | $-C_2H_5$ | $R^4 = -H$ | " | " | m = 1 |
| III. 544 | " | " | $-C_2H_5$ | $R^4 = -CH_3$ | " | " | m = 1 |
| III. 545 | " | " | $-C_2H_4OH$ | $R^4 = -H$ | " | " | m = 1 |
| III. 546 | " | " | $-C_2H_4OH$ | $R^4 = -CH_3$ | " | " | m = 1 |
| III. 547 | " | " | $-C_{12}H_{25}(n)$ | $R^4 = -H$ | " | " | m = 1 |
| III. 548 | " | " | $-C_{12}H_{25}(n)$ | $R^4 = -CH_3$ | " | " | m = 1 |
| III. 549 | " | " | $-H$ | $R^4 = -H$ | $-H$ | " | m = 2 |
| III. 550 | " | " | $-H$ | $R^4 = -CH_3$ | " | " | m = 2 |
| III. 551 | " | " | $-CH_3$ | $R^4 = -H$ | " | " | m = 2 |
| III. 552 | " | " | $-CH_3$ | $R^4 = -CH_3$ | " | " | m = 2 |
| III. 553 | " | " | $-C_2H_5$ | $R^4 = -H$ | " | " | m = 2 |
| III. 554 | " | " | $-C_2H_5$ | $R^4 = -CH_3$ | " | " | m = 2 |
| III. 555 | " | " | $-C_2H_4OH$ | $R^4 = -H$ | " | " | m = 2 |

Tabelle 1 (Fortsetzung)

| Farbst.-Nr. | das eine D" | das andere D" | R | | $Y^1$ | [A] | |
|---|---|---|---|---|---|---|---|
| III. 556 | 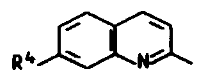 | 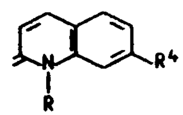 | $-C_2H_4OH$ | $R^4 = -CH_3$ | $-H$ | 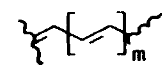 | m = 2 |
| III. 556 a | ‖ | ‖ | $-C_2H_4OH$ | $R^4 = -CH_3$ | ‖ | ‖ | m = 2 |
| III. 557 | ‖ | ‖ | $-C_{12}H_{25}(n)$ | $R^4 = -H$ | ‖ | ‖ | m = 2 |
| III. 558 | ‖ | ‖ | $-C_{12}H_{25}(n)$ | $R^4 = -CH_3$ | ‖ | ‖ | m = 2 |
| III. 559 | ‖ | ‖ | $-H$ | $R^4 = -H$ | ‖ | ‖ | m = 3 |
| III. 560 | ‖ | ‖ | $-H$ | $R^4 = -CH_3$ | ‖ | ‖ | m = 3 |
| III. 561 | ‖ | ‖ | $-CH_3$ | $R^4 = -H$ | ‖ | ‖ | m = 3 |
| III. 562 | ‖ | ‖ | $-CH_3$ | $R^4 = -CH_3$ | ‖ | ‖ | m = 3 |
| III. 563 | ‖ | ‖ | $-C_2H_5$ | $R^4 = -H$ | ‖ | ‖ | m = 3 |
| III. 564 | ‖ | ‖ | $-C_2H_5$ | $R^4 = -CH_3$ | ‖ | ‖ | m = 3 |
| III. 565 | ‖ | ‖ | $-C_2H_4OH$ | $R^4 = -H$ | ‖ | ‖ | m = 3 |
| III. 566 | ‖ | ‖ | $-C_2H_4OH$ | $R^4 = -CH_3$ | ‖ | ‖ | m = 3 |
| III. 567 | ‖ | ‖ | $-C_{12}H_{25}(n)$ | $R^4 = -H$ | ‖ | ‖ | m = 3 |
| III. 568 | ‖ | ‖ | $-C_{12}H_{25}(n)$ | $R^4 = -CH_3$ | ‖ | ‖ | m = 3 |

Tabelle 1 (Fortsetzung)

| Farbst.-Nr. | das eine D" | das andere D" | R | | $Y^1$ | [A] | |
|---|---|---|---|---|---|---|---|
| III. 569 | 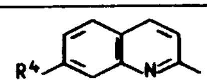 | 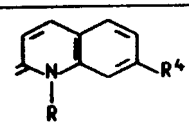 | $-H$ | $R^4 = -H$ | $-H$ | 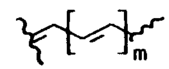 | m = 4 |
| III. 570 | 〃 | 〃 | $-H$ | $R^4 = -CH_3$ | 〃 | 〃 | m = 4 |
| III. 571 | 〃 | 〃 | $-CH_3$ | $R^4 = -H$ | 〃 | 〃 | m = 4 |
| III. 572 | 〃 | 〃 | $-CH_3$ | $R^4 = -CH_3$ | 〃 | 〃 | m = 4 |
| III. 573 | 〃 | 〃 | $-C_2H_5$ | $R^4 = -H$ | 〃 | 〃 | m = 4 |
| III. 574 | 〃 | 〃 | $-C_2H_5$ | $R^4 = -CH_3$ | 〃 | 〃 | m = 4 |
| III. 575 | 〃 | 〃 | $-C_2H_4OH$ | $R^4 = -H$ | 〃 | 〃 | m = 4 |
| III. 576 | 〃 | 〃 | $-C_2H_4OH$ | $R^4 = -CH_3$ | 〃 | 〃 | m = 4 |
| III. 577 | 〃 | 〃 | $-C_{12}H_{25}(n)$ | $R^4 = -H$ | 〃 | 〃 | m = 4 |
| III. 578 | 〃 | 〃 | $-C_{12}H_{25}(n)$ | $R^4 = -CH_3$ | 〃 | 〃 | m = 4 |
| III. 579 | 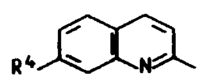 | 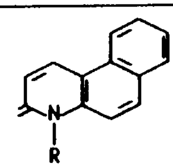 | $-H$ | $R^4 = -H$ | 〃 | 〃 | m = 1 |
| III. 580 | 〃 | 〃 | $-H$ | $R^4 = -CH_3$ | 〃 | 〃 | m = 1 |
| III. 581 | 〃 | 〃 | $-CH_3$ | $R^4 = -H$ | 〃 | 〃 | m = 1 |
| III. 582 | 〃 | 〃 | $-CH_3$ | $R^4 = -CH_3$ | 〃 | 〃 | m = 1 |
| III. 583 | 〃 | 〃 | $-C_2H_5$ | $R^4 = -H$ | 〃 | 〃 | m = 1 |

Tabelle 1 (Fortsetzung)

| Farbst.-Nr. | das eine D" | das andere D" | R | | $Y^1$ | [A] | |
|---|---|---|---|---|---|---|---|
| III. 584 | 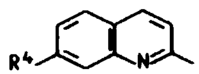 | 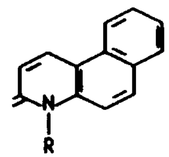 | $-C_2H_5$ | $R^4 = -CH_3$ | $-H$ | 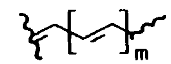 | m = 1 |
| III. 585 | 〃 | 〃 | $-C_2H_4OH$ | $R^4 = -H$ | 〃 | 〃 | m = 1 |
| III. 586 | 〃 | 〃 | $-C_2H_4OH$ | $R^4 = -CH_3$ | 〃 | 〃 | m = 1 |
| III. 587 | 〃 | 〃 | $-C_{12}H_{25}(n)$ | $R^4 = -H$ | 〃 | 〃 | m = 1 |
| III. 588 | 〃 | 〃 | $-C_{12}H_{25}(n)$ | $R^4 = -CH_3$ | 〃 | 〃 | m = 1 |
| III. 589 | 〃 | 〃 | $-H$ | $R^4 = -H$ | 〃 | 〃 | m = 2 |
| III. 590 | 〃 | 〃 | $-H$ | $R^4 = -CH_3$ | 〃 | 〃 | m = 2 |
| III. 591 | 〃 | 〃 | $-CH_3$ | $R^4 = -H$ | 〃 | 〃 | m = 2 |
| III. 592 | 〃 | 〃 | $-CH_3$ | $R^4 = -CH_3$ | 〃 | 〃 | m = 2 |
| III. 593 | 〃 | 〃 | $-C_2H_5$ | $R^4 = -H$ | 〃 | 〃 | m = 2 |
| III. 594 | 〃 | 〃 | $-C_2H_5$ | $R^4 = -CH_3$ | 〃 | 〃 | m = 2 |
| III. 595 | 〃 | 〃 | $-C_2H_4OH$ | $R^4 = -H$ | 〃 | 〃 | m = 2 |
| III. 596 | 〃 | 〃 | $-C_2H_4OH$ | $R^4 = -CH_3$ | 〃 | 〃 | m = 2 |
| III. 597 | 〃 | 〃 | $-C_{12}H_{25}(n)$ | $R^4 = -H$ | 〃 | 〃 | m = 2 |
| III. 598 | 〃 | 〃 | $-C_{12}H_{25}(n)$ | $R^4 = -CH_3$ | 〃 | 〃 | m = 2 |
| III. 599 | 〃 | 〃 | $-H$ | $R^4 = -H$ | 〃 | 〃 | m = 3 |

Tabelle 1 (Fortsetzung)

| Farbst.-Nr. | das eine D" | das andere D" | R | | $Y^1$ | [A] |
|---|---|---|---|---|---|---|
| III. 600 | 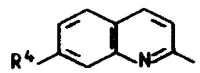 | 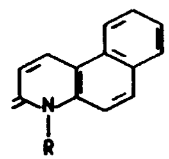 | —H | $R^4$ = —$CH_3$ | —H | 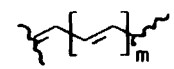 m = 4 |
| III. 601 | " | " | —$CH_3$ | $R^4$ = —H | " | " m = 3 |
| III. 602 | " | " | —$CH_3$ | $R^4$ = —$CH_3$ | " | " m = 3 |
| III. 603 | " | " | —$C_2H_5$ | $R^4$ = —H | " | " m = 3 |
| III. 604 | " | " | —$C_2H_5$ | $R^4$ = —$CH_3$ | " | " m = 3 |
| III. 605 | " | " | —$C_2H_4OH$ | $R^4$ = —H | " | " m = 3 |
| III. 606 | " | " | —$C_2H_4OH$ | $R^4$ = —$CH_3$ | " | " m = 3 |
| III. 607 | " | " | —$C_{12}H_{25}$(n) | $R^4$ = —H | " | " m = 3 |
| III. 608 | " | " | —$C_{12}H_{25}$(n) | $R^4$ = —$CH_3$ | " | " m = 3 |
| III. 609 | " | " | —H | $R^4$ = —H | " | " m = 4 |
| III. 610 | " | " | —H | $R^4$ = —$CH_3$ | " | " m = 4 |
| III. 611 | " | " | —$CH_3$ | $R^4$ = —H | " | " m = 4 |
| III. 612 | " | " | —$CH_3$ | $R^4$ = —$CH_3$ | " | " m = 4 |
| III. 613 | " | " | —$C_2H_5$ | $R^4$ = —H | " | " m = 4 |
| III. 614 | " | " | —$C_2H_5$ | $R^4$ = —$CH_3$ | " | " m = 4 |
| III. 615 | " | " | —$C_2H_4OH$ | $R^4$ = —H | " | " m = 4 |
| III. 616 | " | " | —$C_2H_4OH$ | $R^4$ = —$CH_3$ | " | " m = 4 |
| III. 617 | " | " | —$C_{12}H_{25}$(n) | $R^4$ = —H | " | " m = 4 |
| III. 618 | " | " | —$C_{12}H_{25}$(n) | $R^4$ = —$CH_3$ | " | " m = 4 |

Tabelle 1 (Fortsetzung)

| Farbst.-Nr. | das eine D" | das andere D" | R | | $Y^1$ | [A] |
|---|---|---|---|---|---|---|
| III. 619 | 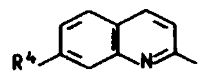 | 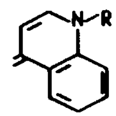 | $-H$ | $R^4 = -H$ | $-H$ | 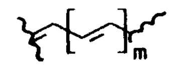 m = 1 |
| III. 620 | ″ | ″ | $-H$ | $R^4 = -CH_3$ | ″ | ″ m = 1 |
| III. 621 | ″ | ″ | $-CH_3$ | $R^4 = -H$ | ″ | ″ m = 1 |
| III. 622 | ″ | ″ | $-CH_3$ | $R^4 = -CH_3$ | ″ | ″ m = 1 |
| III. 623 | ″ | ″ | $-C_2H_5$ | $R^4 = -H$ | ″ | ″ m = 1 |
| III. 624 | ″ | ″ | $-C_2H_5$ | $R^4 = -CH_3$ | ″ | ″ m = 1 |
| III. 625 | ″ | ″ | $-C_8H_{17}(n)$ | $R^4 = -H$ | ″ | ″ m = 1 |
| III. 626 | ″ | ″ | $-C_8H_{17}(n)$ | $R^4 = -CH_3$ | ″ | ″ m = 1 |
| III. 627 | ″ | ″ | $-H$ | $R^4 = -H$ | ″ | ″ m = 2 |
| III. 628 | ″ | ″ | $-H$ | $R^4 = -CH_3$ | ″ | ″ m = 2 |
| III. 629 | ″ | ″ | $-CH_3$ | $R^4 = -H$ | ″ | ″ m = 2 |
| III. 630 | ″ | ″ | $-CH_3$ | $R^4 = -CH_3$ | ″ | ″ m = 2 |
| III. 631 | ″ | ″ | $-C_2H_5$ | $R^4 = -H$ | ″ | ″ m = 2 |
| III. 632 | ″ | ″ | $-C_2H_5$ | $R^4 = -CH_3$ | ″ | ″ m = 2 |
| III. 633 | ″ | ″ | $-C_8H_{17}(n)$ | $R^4 = -H$ | ″ | ″ m = 2 |
| III. 634 | ″ | ″ | $-C_8H_{17}(n)$ | $R^4 = -CH_3$ | ″ | ″ m = 2 |
| III. 635 | ″ | ″ | $-H$ | $R^4 = -H$ | ″ | ″ m = 3 |

Tabelle 1 (Fortsetzung)

| Farbst.-Nr. | das eine D" | das andere D" | R | | $Y^1$ | [A] |
|---|---|---|---|---|---|---|
| III. 636a | 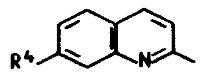 | 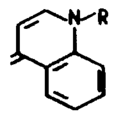 | $-H$ | $R^4 = -CH_3$ | $-H$ | 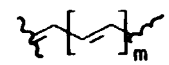 m = 2 |
| III. 636 | ″ | ″ | $-H$ | $R^4 = -CH_3$ | ″ | ″ m = 3 |
| III. 637 | ″ | ″ | $-CH_3$ | $R^4 = -H$ | ″ | ″ m = 3 |
| III. 638 | ″ | ″ | $-CH_3$ | $R^4 = -CH_3$ | ″ | ″ m = 3 |
| III. 639 | ″ | ″ | $-C_2H_5$ | $R^4 = -H$ | ″ | ″ m = 3 |
| III. 640 | ″ | ″ | $-C_2H_5$ | $R^4 = -CH_3$ | ″ | ″ m = 3 |
| III. 641 | ″ | ″ | $-C_8H_{17}(n)$ | $R^4 = -H$ | ″ | ″ m = 3 |
| III. 642 | ″ | ″ | $-C_8H_{17}(n)$ | $R^4 = -CH_3$ | ″ | ″ m = 3 |
| III. 643 | ″ | ″ | $-H$ | $R^4 = -H$ | ″ | ″ m = 4 |
| III. 644 | ″ | ″ | $-H$ | $R^4 = -CH_3$ | ″ | ″ m = 4 |
| III. 645 | ″ | ″ | $-CH_3$ | $R^4 = -H$ | ″ | ″ m = 4 |
| III. 646 | ″ | ″ | $-CH_3$ | $R^4 = -CH_3$ | ″ | ″ m = 4 |
| III. 647 | ″ | ″ | $-C_2H_5$ | $R^4 = -H$ | ″ | ″ m = 4 |
| III. 648 | ″ | ″ | $-C_2H_5$ | $R^4 = -CH_3$ | ″ | ″ m = 4 |
| III. 649 | ″ | ″ | $-C_8H_{17}(n)$ | $R^4 = -H$ | ″ | ″ m = 4 |
| III. 650 | ″ | ″ | $-C_8H_{17}(n)$ | $R^4 = -CH_3$ | ″ | ″ m = 4 |

Tabelle 1 (Fortsetzung)

| Farbst.-Nr. | das eine D" | das andere D" | R | | $Y^1$ | [A] | |
|---|---|---|---|---|---|---|---|
| III. 651 | 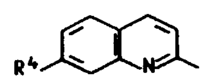 | 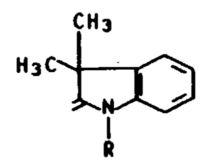 | $-CH_3$ | $R^4 = -H$ | $-H$ | 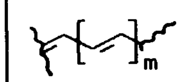 | m = 1 |
| III. 652 | " | " | $-CH_3$ | $R^4 = -CH_3$ | " | " | m = 1 |
| III. 653 | " | " | $-C_2H_5$ | $R^4 = -H$ | " | " | m = 1 |
| III. 654 | " | " | $-C_2H_5$ | $R^4 = -CH_3$ | " | " | m = 1 |
| III. 655 | " | " | $-CH_3$ | $R^4 = -H$ | " | " | m = 2 |
| III. 656 | " | " | $-CH_3$ | $R^4 = -CH_3$ | " | " | m = 2 |
| III. 657 | " | " | $-C_2H_5$ | $R^4 = -H$ | " | " | m = 2 |
| III. 658 | " | " | $-C_2H_5$ | $R^4 = -CH_3$ | " | " | m = 2 |
| III. 659 | " | " | $-CH_3$ | $R^4 = -H$ | " | " | m = 3 |
| III. 660 | " | " | $-CH_3$ | $R^4 = -CH_3$ | " | " | m = 3 |
| III. 661 | " | " | $-C_2H_5$ | $R^4 = -H$ | " | " | m = 3 |
| III. 662 | " | " | $-C_2H_5$ | $R^4 = -CH_3$ | " | " | m = 3 |
| III. 663 | " | " | $-CH_3$ | $R^4 = -H$ | " | " | m = 4 |
| III. 664 | " | " | $-CH_3$ | $R^4 = -CH_3$ | " | " | m = 4 |
| III. 665 | " | " | $-C_2H_5$ | $R^4 = -H$ | " | " | m = 4 |
| III. 666 | " | " | $-C_2H_5$ | $R^4 = -CH_3$ | " | " | m = 4 |

Tabelle 1 (Fortsetzung)

| Farbst.-Nr. | das eine D" | das andere D" | R | | $Y^1$ | [A] | |
|---|---|---|---|---|---|---|---|
| III. 667 | 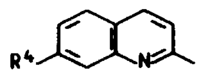 | 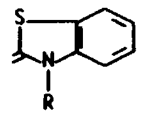 | $-H$ | $R^4 = -H$ | $-H$ | 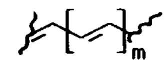 | m = 1 |
| III. 668 | " | " | $-H$ | $R^4 = -CH_3$ | " | " | m = 1 |
| III. 669 | " | " | $-CH_3$ | $R^4 = -H$ | " | " | m = 1 |
| III. 670 | " | " | $-CH_3$ | $R^4 = -CH_3$ | " | " | m = 1 |
| III. 671 | " | " | $-C_2H_5$ | $R^4 = -H$ | " | " | m = 1 |
| III. 672 | " | " | $-C_2H_5$ | $R^4 = -CH_3$ | " | " | m = 1 |
| III. 673 | " | " | $-C_8H_{17}(n)$ | $R^4 = -H$ | " | " | m = 1 |
| III. 674 | " | " | $-C_8H_{17}(n)$ | $R^4 = -CH_3$ | " | " | m = 1 |
| III. 675 | " | " | $-H$ | $R^4 = -H$ | " | " | m = 2 |
| III. 676 | " | " | $-H$ | $R^4 = -CH_3$ | " | " | m = 2 |
| III. 677 | " | " | $-CH_3$ | $R^4 = -H$ | " | " | m = 2 |
| III. 678 | " | " | $-CH_3$ | $R^4 = -CH_3$ | " | " | m = 2 |
| III. 679 | " | " | $-C_2H_5$ | $R^4 = -H$ | " | " | m = 2 |
| III. 680 | " | " | $-C_2H_5$ | $R^4 = -CH_3$ | " | " | m = 2 |
| III. 681 | " | " | $-C_8H_{17}(n)$ | $R^4 = -H$ | " | " | m = 2 |
| III. 682 | " | " | $-C_8H_{17}(n)$ | $R^4 = -CH_3$ | " | " | m = 2 |

Tabelle 1 (Fortsetzung)

| Farbst.-Nr. | das eine D" | das andere D" | R | | $Y^1$ | [A] | |
|---|---|---|---|---|---|---|---|
| III. 683 | 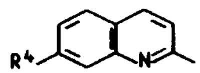 | 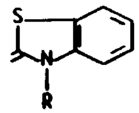 | $-H$ | $R^4 = -H$ | $-H$ | 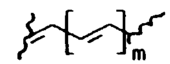 | m = 4 |
| III. 684 | = | = | $-H$ | $R^4 = -CH_3$ | = | = | m = 3 |
| III. 685 | = | = | $-CH_3$ | $R^4 = -H$ | = | = | m = 3 |
| III. 686 | = | = | $-CH_3$ | $R^4 = -CH_3$ | = | = | m = 3 |
| III. 687 | = | = | $-C_2H_5$ | $R^4 = -H$ | = | = | m = 3 |
| III. 688 | = | = | $-C_2H_5$ | $R^4 = -CH_3$ | = | = | m = 3 |
| III. 689 | = | = | $-C_8H_{17}(n)$ | $R^4 = -H$ | = | = | m = 3 |
| III. 690 | = | = | $-C_8H_{17}(n)$ | $R^4 = -CH_3$ | = | = | m = 3 |
| III. 691 | = | = | $-H$ | $R^4 = -H$ | = | = | m = 4 |
| III. 692 | = | = | $-H$ | $R^4 = -CH_3$ | = | = | m = 4 |
| III. 693 | = | = | $-CH_3$ | $R^4 = -H$ | = | = | m = 4 |
| III. 694 | = | = | $-CH_3$ | $R^4 = -CH_3$ | = | = | m = 4 |
| III. 695 | = | = | $-C_2H_5$ | $R^4 = -H$ | = | = | m = 4 |
| III. 696 | = | = | $-C_2H_5$ | $R^4 = -CH_3$ | = | = | m = 4 |
| III. 697 | = | = | $-C_8H_{17}(n)$ | $R^4 = -H$ | = | = | m = 4 |
| III. 698 | = | = | $-C_8H_{17}(n)$ | $R^4 = -CH_3$ | = | = | m = 4 |

Tabelle 1 (Fortsetzung)

| Farbst.-Nr. | das eine D* | das andere D* | R | | $Y^1$ | [A] | |
|---|---|---|---|---|---|---|---|
| III. 699 | 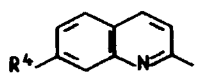 | 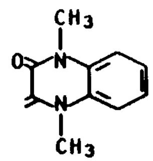 | | $R^4 = -H$ | $-H$ | 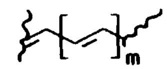 | m = 1 |
| III. 700 | ″ | ″ | | $R^4 = -CH_3$ | ″ | ″ | m = 1 |
| III. 701 | ″ | ″ | | $R^4 = -H$ | ″ | ″ | m = 2 |
| III. 702 | ″ | ″ | | $R^4 = -CH_3$ | ″ | ″ | m = 2 |
| III. 703 | ″ | ″ | | $R^4 = -H$ | ″ | ″ | m = 3 |
| III. 704 | ″ | ″ | | $R^4 = -CH_3$ | ″ | ″ | m = 3 |
| III. 705 | ″ | ″ | | $R^4 = -H$ | ″ | ″ | m = 4 |
| III. 706 | ″ | ″ | | $R^4 = -CH_3$ | ″ | ″ | m = 4 |
| III. 707 | 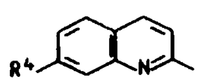 | 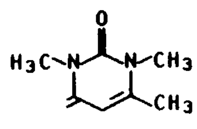 | | $R^4 = -H$ | $-H$ | 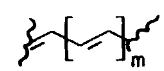 | m = 1 |
| III. 708 | ″ | ″ | | $R^4 = -CH_3$ | ″ | ″ | m = 1 |
| III. 709 | ″ | ″ | | $R^4 = -H$ | ″ | ″ | m = 2 |
| III. 710 | ″ | ″ | | $R^4 = -CH_3$ | ″ | ″ | m = 2 |
| III. 711 | ″ | ″ | | $R^4 = -H$ | ″ | ″ | m = 3 |
| III. 712 | ″ | ″ | | $R^4 = -CH_3$ | ″ | ″ | m = 3 |
| III. 713 | ″ | ″ | | $R^4 = -H$ | ″ | ″ | m = 4 |
| III. 714 | ″ | ″ | | $R^4 = -CH_3$ | ″ | ″ | m = 4 |

Tabelle 1 (Fortsetzung)

| Farbst.-Nr. | das eine D" | das andere D" | R | | $Y^1$ | [A] |
|---|---|---|---|---|---|---|
| III. 715 | 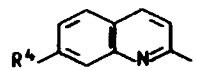 | 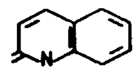 | $-H$ | $R^4 = -H$ | $-CN$ | 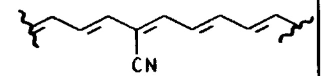 |
| III. 716 | 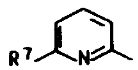 | 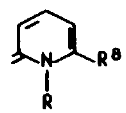 | 〃 | $R^7 = -CH_3$<br>$R^8 = -CH_3$ | 〃 | 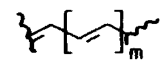 m = 2 |
| III. 717 | 〃 | 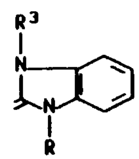 | 〃 | $R^7 = -H$<br>$R^3 = -C_2H_5$ | 〃 | 〃 m = 1 |
| III. 718 | 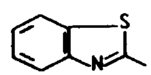 | 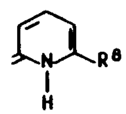 | $-H$ | $R^8 = -H$ | $-CN$ | 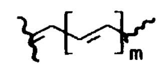 m = 1 |
| III. 719 | 〃 | 〃 | 〃 | $R^8 = -CH_3$ | 〃 | 〃 m = 1 |
| III. 720 | 〃 | 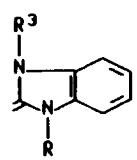 | 〃 | $R^3 = -C_2H_5$ | 〃 | 〃 m = 1 |

<u>Tabelle 1</u> (Fortsetzung)

| Farbst.-Nr. | das eine D" | das andere D" | R | | $Y^1$ | [A] |
|---|---|---|---|---|---|---|
| III. 721 | 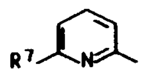 | 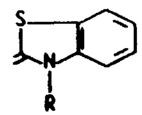 | –H | $R^7$ = –H | –CN | 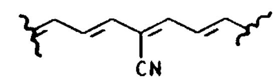 |
| III. 722 | 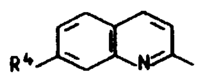 | ″ | ″ | $R^4$ = –H | ″ | ″ |
| III. 723 | 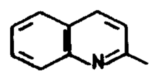 | 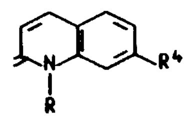 | $C_2H_5$ | $R^4$ = $CH_3$ | –H | 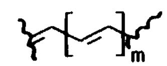 m = 1 |
| III. 724 | 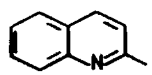 | 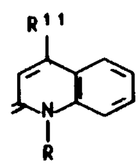 | $CH_3$ | $R^{11}$ = $CH_3$ | ″ | ″ m = 1 |
| III. 725 | 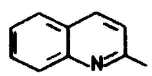 | 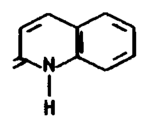 | –H | - | –CN | 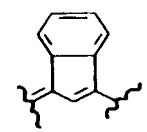 |
| III. 726 | ″ | ″ | ″ | - | | 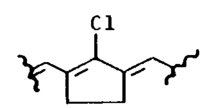 |

Tabelle 1 (Fortsetzung)

| Farbst.-Nr. | das eine D" | das andere D" | R | | $Y^1$ | [A] |
|---|---|---|---|---|---|---|
| III. 727 | 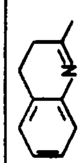 | 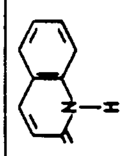 | —H | | —CN | 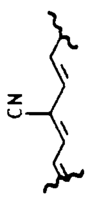 |
| III. 728 | " | " | " | | " | 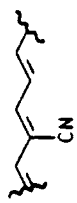 |
| III. 729 | " | " | " | | " | 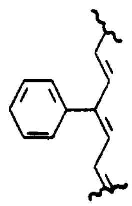 |
| III. 730 | 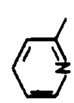 | 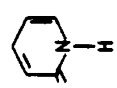 | " | | " | 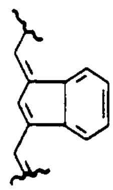 |
| III. 731 | 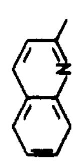 | 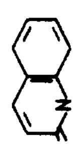 | " | | " | " |
| III. 732 | " | " | " | | CN | 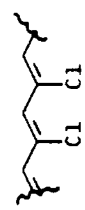 |
| III. 733 | " | " | " | | " | 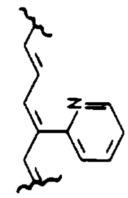 |

Die Farbstoffe I können durch Kondensation von Methylenverbindungen der Formel (IV)

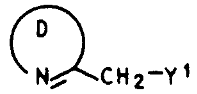 (IV)

mit C-3, C-5, C-7, C-9 oder C-11-Bausteinen unter sauren bzw. alkalischen Bedingungen in Gegenwart eines Lösungsmittels bei Temperaturen von 20 °C bis 120 °C hergestellt werden. Als C-3, C-5, C-7, C-9 und C-11 Bausteine kommen beispielsweise in Betracht:

C-3: 1.1.3.3-Tetramethoxypropan, 2-Cyanmalondialdehyd, 2-Fluormalondialdehyd, 2-Chlormalondialdehyd, 2-Brommalondialdehyd und

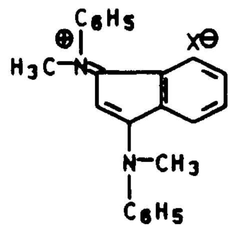 ;

C-5: 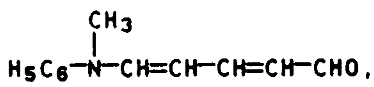

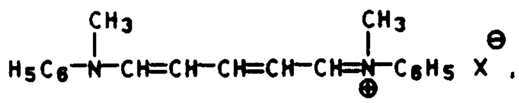

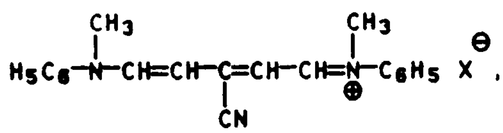

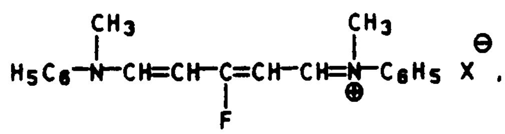

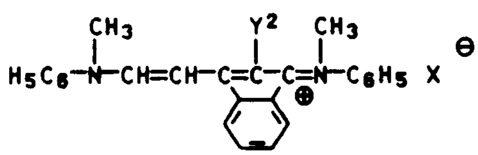 und 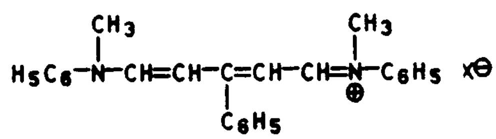 ;

C-7: 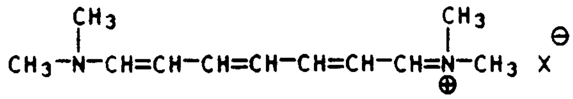 und

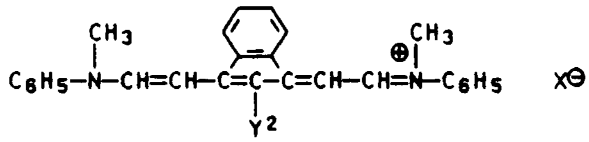 ;

C-9: 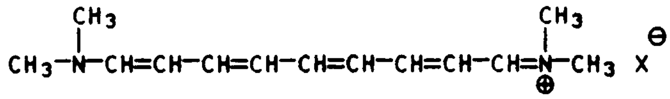 ;

C-11: 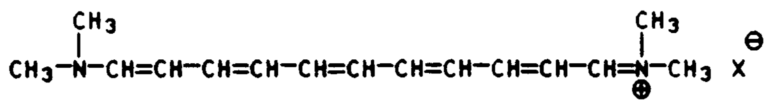 .

In den Formeln steht $X^{\ominus}$ für ein Äquivalent eines Anions, z.B. $Cl^{\ominus}$, 1/2 $ZnCl_4^{2\ominus}$, $Br^{\ominus}$, $J^{\ominus}$, Tosylat, Benzolsulfonat, Trifluoracetat, Tetrafluorborat und Perchlorat.

$Y^2$ hat die vorstehend angegebene Bedeutung.

Als Lösungsmittel für die Umsetzungen sind z.B. Dimethylformamid, N-Methylpyrrolidon, Dimethoxyethan, Ethylenglykolmonomethylether oder Gemische davon geeignet.

Symmetrische Heptamethine der Formel V

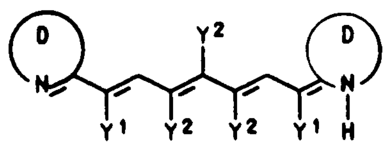 V ,

in der D, $Y^1$ und $Y^2$ die oben genannte Bedeutung haben, sind erhältlich durch Umsetzung von Methylenverbindungen der Formel IV

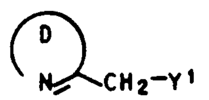 IV

mit Pyridiniumsalzen der Formel VI

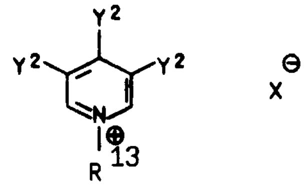 VI

in der $Y^2$ die oben genannte Bedeutung hat und $X^{\ominus}$ für das Äquivalent eines Anions und $R^{13}$ für eine $C_1$- bis $C_8$- Alkylgruppe oder eine $C_7$- bis $C_{10}$-Aralkylgruppe steht.

Bei der Umsetzung der Methylenverbindungen der Formel IV mit in 2-Stellung durch Y2 substituierten 1,1,3,3 -Tetramethoxypropanen werden bei Wahl geeigneter Reaktionsbedingungen 1:1-Umsetzungsprodukte, Salze der Formel VII

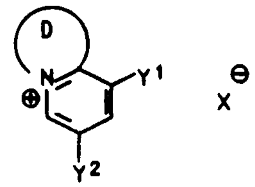

VII

erhalten. Diese können direkt, gegebenenfalls nach Zwischenisolierung oder nach Ringöffnung zu den Aldehyden der Formel VIII

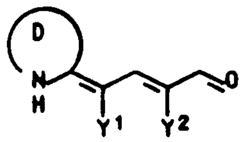

VIII

mit Methylenverbindungen der Formel IV zu symmetrischen oder unsymmetrischen Pentamethinen der Formel IX a, mit Cyclammoniumverbindungen zu Pentamethinen der Formel IXb umgesetzt werden.

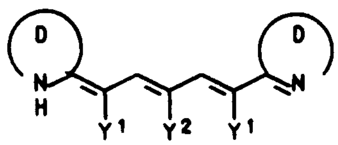

IXa

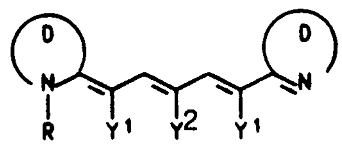

IXb (R ≠ H)

Als Cyclammoniumverbindungen kommen beispielsweise in Betracht:

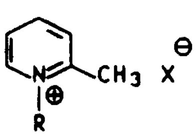 , 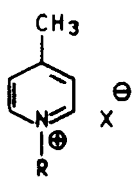 , 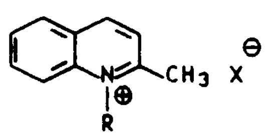 , 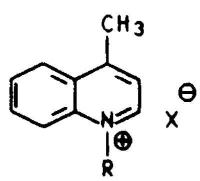 , 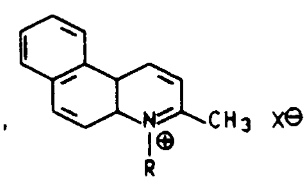

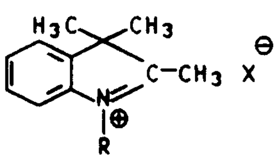 , 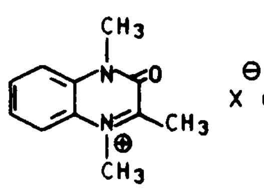 und 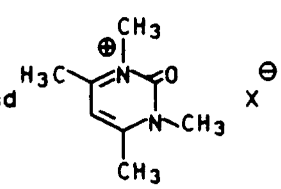 .

R und $X^{\ominus}$ haben die oben genannten Bedeutungen wobei, $X^{\ominus}$ außerdem für $H_3CSO_4^{\ominus}$ und $C_2H_5SO_4^{\ominus}$ stehen kann.

Reaktion von Alkylcyanid mit 2 Mol von VII bzw. VIII führt zu Undecamethinen der Formel (X)

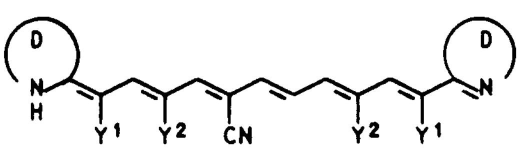

X

Die Aldehyde der Formel VIII können durch Umsetzen mit Dicarbonsäuren bzw. deren funktionellen Derivaten in Polymethine der Formel XI überführt werden. In der Formel XI haben D, $Y^2$ und $Y^1$ die oben genannte Bedeutung

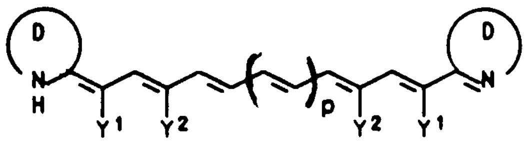

XI

und p ist 0, 1 2 oder 3. Vorzugsweise sind bei diesem Verfahren die Reste D gleich. Aus Malonsäure erhält man auf diese Weise Nonamethine (p = 0). aus Glutaconsäure Undecamethine (p = 1) und aus Piperylendicarbonsäure Tridecamethine (p = 2).

Aus den Salzen VII bzw. den entsprechenden Aldehyden VIII sind auf folgenden Wegen längerkettige, insbesondere in der Kette substituierte Methine zugänglich:

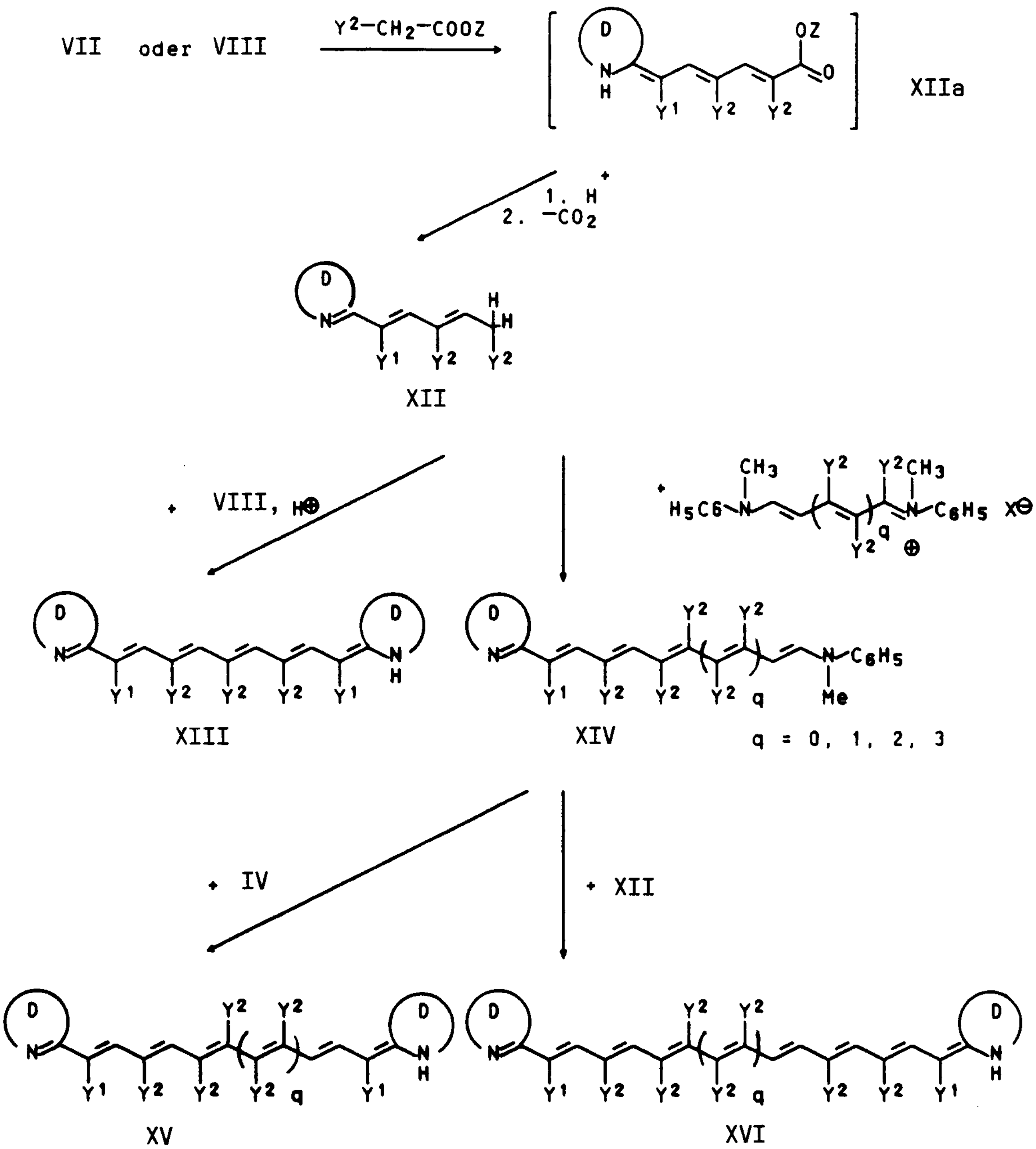


In den Formeln XII bis XVI stehen beide $Y^1$ vorzugsweise für Cyano,

$Y^2$ vorzugsweise für Chlor, Phenyl, Pyridyl, Cyano, Wasserstoff oder mit einem weiteren $Y^2$ für einen gegebenenfalls durch einen Benzolring anellierten fünf-oder sechsgliedrigen Ring,

q für 0, 1, 2 oder 3
z für $C_1$- bis $C_4$-Alkyl.

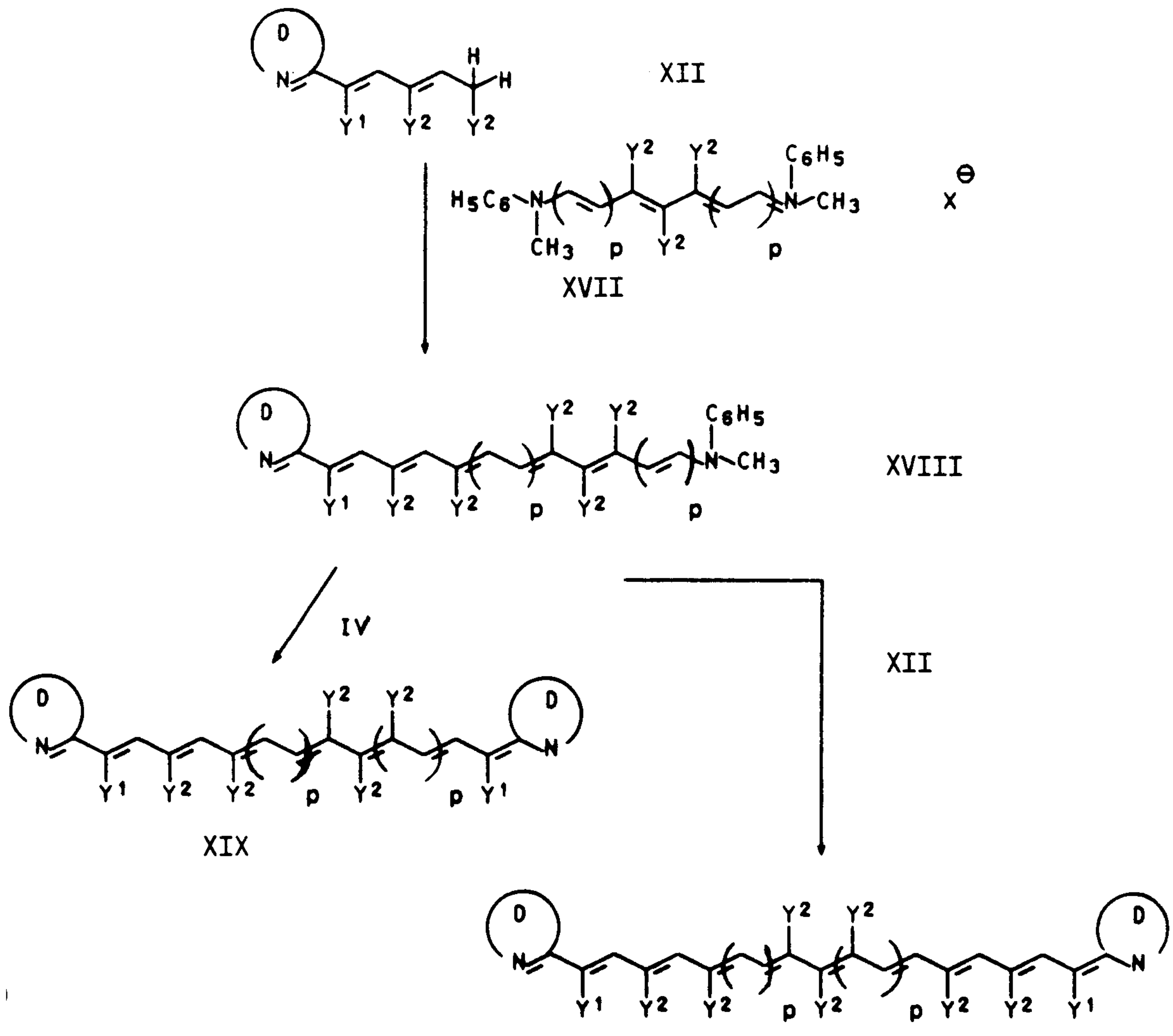

XII
XVII
XVIII
IV
XII
XIX
XX

In den Formeln XVII bis XX stehen beide $Y^1$ vorzugsweise für Cyano, $Y^2$ vorzugsweise für Wasserstoff, Cyano, Chlor, Phenyl, Pyridyl oder mit einem weiteren $Y^2$ für einen gegebenenfalls durch einen Benzolring anellierten fünf- oder sechsgliedrigen Ring und
p für 0, 1, 2 oder 3.

Die Methinfarbstoffe I können nach bekannten Methoden durch Protonierung oder Alkylierung in kationische Methinfarbstoffe der Formel XXI überführt werden. Die Reste R, die die oben genannte Bedeutung haben, können gleich oder verschieden sein.

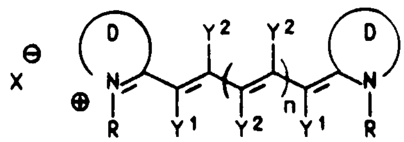

XXI

Als Alkylierungsmittel kommen beispielsweise in Betracht: Dimethylsulfat, Diethylsulfat, Trimethyloxoniumtetrafluorborat. Triethyloxoniumtetrafluorborat, Methyl-, Ethyl-, n-Propyl-, n-Butyl-, iso-Butyl-, sec.-Butyl, n-Pentyl-, 3-Methylbutyl-, n-Hexyl-, n-Heptyl-, n-Octyl-, 2-Ethylhexyl-, n-Nonyl-, n-Decyl-, n-Undecyl-, n-Dodecyl-, n-Tridecyl-, n-Tetradecyl-, n-Pentadecyl-, n-Hexadecyl-, n-Heptadecyl-, n-Octadecyl-, n-Nonadecyl-, n-Eicosanylchlorid, -bromid oder -jodid, Benzol- und p-Toluolsulfonsäuremethyl-, -ethyl-, -n-propyl- n-butyl-, -sec.-butyl-, -iso-butyl-, -n-pentyl-, -3-methylbutyl-, -n-hexyl-, -n-heptyl-, -n-octyl-, -2-ethylhexyl-, -n-nonyl-, -n-decyl-, -n-undecyl-, -n-dodecyl-, -n-tridecyl-, -n-tetradecyl-, -n-pentadecyl-, -n-hexadecyl-, -n-heptadecyl-, -n-octadecyl-, -n-nonadecyl-, -n-eicosanylester.

$X^{\ominus}$ steht für das Äquivalent eines Anions und kann außer den bereits für $X^{\ominus}$ genannten die Bedeutung $H_3CSO_4^{\ominus}$ und $H_5C_2SO_4^{\ominus}$ haben.

Als Beispiele sollen die in der Tabelle 2 genannten Farbstoffe der Formel XXI genannt werden:

Tabelle 2

| Farbst.-Nr. aus Tabelle 1 | das eine R | das andere R |
|---|---|---|
| III. 1 | $-H$ | $-H$ |
| III. 2 | $-C_2H_5$ | $-C_8H_{17}(n)$ |
| III. 4 | $-C_{12}H_{25}(n)$ | $-C_{12}H_{25}(n)$ |
| III. 5 | $-H$ | $-H$ |
| III. 7 | $-C_4H_9(n)$ | $-C_4H_9(n)$ |
| III. 8 | $-C_{12}H_{25}(n)$ | $-C_{20}H_{21}(n)$ |
| III. 9 | $-H$ | $-H$ |
| III. 11 | $-C_4H_9(n)$ | $-C_{10}H_{21}(n)$ |
| III. 14 | $-C_2H_5$ | $-H$ |
| III. 14 | $-C_2H_5$ | $-C_{12}H_{25}(n)$ |
| III. 17 | $-H$ | $-H$ |
| III. 19 | $-C_2H_5$ | $-H$ |
| III. 24 | $-C_2H_5$ | $-C_2H_5$ |
| III. 34 | $-C_2H_5$ | $-C_2H_5$ |
| III. 34 | $-C_2H_5$ | $-C_8H_{17}(n)$ |
| III. 40 | $-C_4H_9(n)$ | $-C_4H_9(n)$ |
| III. 47 | $-C_2H_5$ | $-C_2H_5$ |
| III. 48 | $-C_2H_5$ | $-C_2H_5$ |
| III. 58 | $-C_2H_5$ | $-C_5H_{11}(n)$ |
| III. 63 | $-C_4H_9(n)$ | $-C_{10}H_{21}(n)$ |
| III. 65 | $-H$ | $-H$ |
| III. 66 | $-H$ | $-H$ |
| III. 67 | $-H$ | $-H$ |
| III. 68 | $-H$ | $-H$ |
| III. 69 | $-H$ | $-H$ |
| III. 71 | $-H$ | $-H$ |
| III. 74 | $-H$ | $-H$ |
| III. 76 | $-H$ | $-C_{12}H_{25}(n)$ |
| III. 77 | $-H$ | $-H$ |
| III. 78 | $-C_2H_5$ | $-H$ |
| III. 81 | $-H$ | $-H$ |
| III. 82 | $-C_2H_5$ | $-C_2H5$ |

Tabelle 2 (Fortsetzung)

| Farbst.-Nr. aus Tabelle 1 | das eine R | das andere R |
|---|---|---|
| III. 83 | $-H$ | $-H$ |
| III. 85 | $-H$ | $-H$ |
| III. 87 | $-H$ | $-H$ |
| III. 87 | $-C_8H_{17}(n)$ | $-C_8H_{17}(n)$ |
| III. 88 | $-H$ | $-H$ |
| III. 89 | $-CH_3$ | $-CH_3$ |
| III. 91 | $-C_2H_4OH$ | $-C_2H_5$ |
| III. 97 | $-C_{12}H_{25}(n)$ | $-C_{12}H_{25}(n)$ |
| III. 98 | $-H$ | $-H$ |
| III. 100 | $-C_2H_5$ | $-C_9H_{19}(n)$ |
| III. 103 | $-H$ | $-H$ |
| III. 105 | $-C_2H_5$ | $-CH_2-CH(C_2H_5)-C_4H_9$ |
| III. 108 | $-H$ | $-H$ |
| III. 110 | $-C_2H_5$ | $-C_{16}H_{35}(n)$ |
| III. 118 | $-H$ | $-H$ |
| III. 119 | $-CH_3$ | $-C_8H_{17}(n)$ |
| III. 125 | $-C_2H_5$ | $-C_{10}H_{21}(n)$ |
| III. 128 | $-H$ | $-H$ |
| III. 132 | $-C_2H_5$ | $-H$ |
| III. 132 | $-C_2H_5$ | $-C_2H_5$ |
| III. 135 | $-H$ | $-H$ |
| III. 136 | $-C_{12}H_{25}(n)$ | $-C_{12}H_{25}(n)$ |
| III. 138 | $-H$ | $-H$ |
| III. 139 | $-H$ | $-H$ |
| III. 142 | $-H$ | $-H$ |
| III. 144 | $-H$ | $-H$ |
| III. 146 | $-H$ | $-H$ |
| III. 147 | $-H$ | $-H$ |
| III. 150 | $-H$ | $-H$ |
| III. 154 | $-H$ | $-H$ |
| III. 156 | $-CH_3$ | $-C_{12}H_{25}(n)$ |

Tabelle 2 (Fortsetzung)

| Farbst.-Nr. aus Tabelle 1 | das eine R | das andere R |
|---|---|---|
| III. 158 | $-C_2H_5$ | $-C_{10}H_{21}(n)$ |
| III. 160 | -H | -H |
| III. 162 | $-C_2H_5$ | $-C_2H_5$ |
| III. 164 | $-C_4H_9(n)$ | $-C_8H_{17}(n)$ |
| III. 166 | $-C_{12}H_{25}(n)$ | $-C_{12}H_{25}(n)$ |
| III. 168 | -H | -H |
| III. 169 | -H | -H |
| III. 170 | $-C_2H_5$ | $-C_{10}H_{21}(n)$ |
| III. 174 | $-C_{12}H_{25}(n)$ | $-C_{12}H_{25}(n)$ |
| III. 176 | -H | -H |
| III. 178 | $-C_2H_5$ | $-C_{20}H_{41}(n)$ |
| III. 184 | -H | -H |
| III. 186 | $-C_2H_5$ | $-C_{10}H_{21}(n)$ |
| III. 192 | -H | -H |
| III. 194 | -H | -H |
| III. 195 | -H | -H |
| III. 198 | $-C_2H_5$ | -H |
| III. 200 | $-C_2H_5$ | -H |
| III. 200 | $-C_2H_5$ | $-C_2H_5$ |
| III. 202 | $-C_2H_5$ | $-C_8H_{17}(n)$ |
| III. 210 | $-C_8H_{17}(n)$ | -H |
| III. 216 | -H | -H |
| III. 222 | $-C_2H_5$ | -H |
| III. 224 | $-C_2H_5$ | -H |
| III. 226 | $-C_2H_5$ | $-C_2H_5$ |
| III. 236 | $-C_8H_{17}(n)$ | -H |
| III. 240 | -H | -H |
| III. 245 | -H | -H |
| III. 250 | $-C_2H_5$ | $-C_2H_5$ |
| III. 256 | $-C_4H_9(n)$ | $-C_4H_9(n)$ |
| III. 264 | -H | -H |

Tabelle 2 (Fortsetzung)

| Farbst.-Nr. aus Tabelle 1 | das eine R | das andere R |
|---|---|---|
| III. 268 | $-H$ | $-H$ |
| III. 270 | $-C_2H_5$ | $-H$ |
| III. 274 | $-C_2H_5$ | $-C_2H_5$ |
| III. 282 | $-C_8H_{17}(n)$ | $-H$ |
| III. 284 | $-C_8H_{17}(n)$ | $-C_2H_5$ |
| III. 288 | $-H$ | $-H$ |
| III. 290 | $-H$ | $-H$ |
| III. 291 | $-H$ | $-H$ |
| III. 294 | $-CH_3$ | $-C_{20}H_{41}(n)$ |
| III. 297 | $-C_2H_5$ | $-C_2H_5$ |
| III. 302 | $-C_2H_4OH$ | $-C_2H_5$ |
| III. 307 | $-C_8H_{17}(n)$ | $-H$ |
| III. 311 | $-H$ | $-H$ |
| III. 315 | $-CH_3$ | $-C_2H_5$ |
| III. 319 | $-C_2H_5$ | $-C_5H_{11}(n)$ |
| III. 324 | $-C_8H_{17}(n)$ | $-C_8H_{17}(n)$ |
| III. 326 | $-C_8H_{17}(n)$ | $-C_4H_9(n)$ |
| III. 328 | $-H$ | $-H$ |
| III. 331 | $-H$ | $-H$ |
| III. 335 | $-CH_3$ | $-C_2H_5$ |
| III. 340 | $-C_2H_4OH$ | $-H$ |
| III. 346 | $-C_8H_{17}(n)$ | $-H$ |
| III. 353 | $-CH_3$ | $-CH_3$ |
| III. 357 | $-C_2H_5$ | $-C_4H_9(n)$ |
| III. 363 | $-C_2H_4OH$ | $-C_2H_5$ |
| III. 367 | $-C_8H_{17}(n)$ | $-C_4H_9(n)$ |
| III. 368 | $-H$ | $-H$ |
| III. 371 | $-H$ | $-H$ |
| III. 377 | $-C_2H_5$ | $-C_2H_5$ |
| III. 382 | $-C_2H_4OH$ | $-C_2H_5$ |
| III. 388 | $-H$ | $-H$ |
| III. 395 | $-C_{12}H_{25}(n)$ | $-C_6H_{13}(n)$ |

Tabelle 2 (Fortsetzung)

| Farbst.-Nr. aus Tabelle 1 | das eine R | das andere R |
|---|---|---|
| III. 402 | $-C_2H_5$ | $-C_2H_5$ |
| III. 407 | $-H$ | $-H$ |
| III. 408 | $-H$ | $-H$ |
| III. 412 | $-C_2H_5$ | $-C_4H_9(n)$ |
| III. 416 | $-C_{12}H_{25}(n)$ | $-H$ |
| III. 423 | $-C_2H_4OH$ | $-C_2H_5$ |
| III. 427 | $-H$ | $-H$ |
| III. 430 | $-CH_3$ | $-CH_3$ |
| III. 435 | $-C_{12}H_{25}(n)$ | $-H$ |
| III. 441 | $-C_2H_5$ | $-C_4H_9(n)$ |
| III. 448 | $-H$ | $-H$ |
| III. 454 | $-C_2H_4OH$ | $-C_2H_5$ |
| III. 458 | $-H$ | $-H$ |
| III. 462 | $-C_2H_5$ | $-C_4H_9(n)$ |
| III. 467 | $-H$ | $-H$ |
| III. 468 | $-H$ | $-H$ |
| III. 472 | $-C_2H_5$ | $-C_4H_9(n)$ |
| III. 478 | $-CH_3$ | $-CH_2-\underset{\mid \atop C_2H_5}{CH}-C_4H$ |
| III. 480 | $-C_2H_5$ | $-H$ |
| III. 485 | $-CH_3$ | $-H$ |
| III. 489 | $-C_8H_{17}(n)$ | $-C_8H_{17}(n)$ |
| III. 491 | $-H$ | $-H$ |
| III. 495 | $-C_2H_5$ | $-C_2H_5$ |
| III. 498 | $-C_8H_{17}(n)$ | $-C_4H_9(n)$ |
| III. 499 | $-H$ | $-H$ |
| III. 503 | $-H$ | $-H$ |
| III. 507 | $-H$ | $-H$ |
| III. 512 | $-C_2H_5$ | $-CH_3$ |
| III. 515 | $-H$ | $-H$ |
| III. 520 | $-C_2H_5$ | $-H$ |
| III. 521 | $-C_8H_{17}(n)$ | $-C_8H_{17}(n)$ |

Tabelle 2 (Fortsetzung)

| Farbst.-Nr. aus Tabelle 1 | das eine R | das andere R |
|---|---|---|
| III. 526 | $-CH_3$ | $-C_4H_9(n)$ |
| III. 530 | $-C_8H_{17}(n)$ | $-H$ |
| III. 531 | $-H$ | $-H$ |
| III. 535 | $-C_2H_5$ | $-C_2H_5$ |
| III. 539 | $-H$ | $-H$ |
| III. 542 | $-CH_3$ | $-CH_3$ |
| III. 543 | $-C_2H_5$ | $-H$ |
| III. 545 | $-C_2H_4OH$ | $-H$ |
| III. 547 | $-C_{12}H_{25}(n)$ | $-H$ |
| III. 549 | $-H$ | $-H$ |
| III. 550 | $-H$ | $-H$ |
| III. 556 | $-C_2H_4OH$ | $-C_2H_5$ |
| III. 557 | $-C_{12}H_{25}(n)$ | $-C_{12}H_{25}(n)$ |
| III. 559 | $-H$ | $-H$ |
| III. 560 | $-H$ | $-H$ |
| III. 567 | $-C_{12}H_{25}(n)$ | $-H$ |
| III. 569 | $-H$ | $-H$ |
| III. 572 | $-CH_3$ | $-C_2H_5$ |
| III. 573 | $-C_2H_5$ | $-C_{10}H_{21}(n)$ |
| III. 579 | $-H$ | $-H$ |
| III. 583 | $-C_2H_5$ | $-H$ |
| III. 584 | $-C_2H_5$ | $-C_2H_5$ |
| III. 589 | $-H$ | $-H$ |
| III. 593 | $-C_2H_5$ | $-C_2H_5$ |
| III. 598 | $-C_{12}H_{25}(n)$ | $-H$ |
| III. 599 | $-H$ | $-H$ |
| III. 601 | $-CH_3$ | $-C_{12}H_{25}(n)$ |
| III. 604 | $-C_2H_5$ | $-H$ |
| III. 609 | $-H$ | $-H$ |
| III. 612 | $-CH_3$ | $-C_4H_9(n)$ |
| III. 617 | $-C_{12}H_{25}(n)$ | $-H$ |
| III. 619 | $-H$ | $-H$ |

Tabelle 2 (Fortsetzung)

| Farbst.-Nr. aus Tabelle 1 | das eine R | das andere R |
|---|---|---|
| III. 621 | $-CH_3$ | $-H$ |
| III. 623 | $-C_2H_5$ | $-C_2H_5$ |
| III. 627 | $-H$ | $-H$ |
| III. 628 | $-H$ | $-H$ |
| III. 633 | $-C_8H_{17}(n)$ | $-H$ |
| III. 635 | $-H$ | $-H$ |
| III. 639 | $-C_2H_5$ | $-C_2H_5$ |
| III. 641 | $-C_8H_{17}(n)$ | $-C_8H_{17}(n)$ |
| III. 643 | $-H$ | $-H$ |
| III. 645 | $-CH_3$ | $-C_2H_5$ |
| III. 649 | $-C_8H_{17}(n)$ | $-H$ |
| III. 651 | $-CH_3$ | $-H$ |
| III. 654 | $-C_2H_5$ | $-C_2H_5$ |
| III. 658 | $-C_2H_5$ | $-C_4H_9(n)$ |
| III. 664 | $-CH_3$ | $-H$ |
| III. 667 | $-H$ | $-H$ |
| III. 670 | $-CH_3$ | $-CH_3$ |
| III. 671 | $-C_2H_5$ | $-C_{10}H_{21}(n)$ |
| III. 680 | $-C_2H_5$ | $-C_2H_5$ |
| III. 682 | $-C_8H_{17}(n)$ | $-C_8H_{17}(n)$ |
| III. 689 | $-C_8H_{17}(n)$ | $-C_4H_9(n)$ |
| III. 695 | $-C_2H_5$ | $-H$ |
| III. 699 | $-CH_3$ | $-H$ |
| III. 702 | $-CH_3$ | $-H$ |
| III. 706 | $-CH_3$ | $-C_4H_9(n)$ |
| III. 707 | $-H$ | $-H$ |
| III. 711 | $-CH_3$ | $-C_8H_{17}(n)$ |
| III. 715 | $-H$ | $-H$ |
| III. 716 | $-H$ | $-H$ |
| III. 717 | $-H$ | $-H$ |
| III. 718 | $-H$ | $-H$ |
| III. 719 | $-H$ | $-H$ |
| III. 720 | $-H$ | $-H$ |

Tabelle 2 (Fortsetzung)

| Farbst.-Nr. aus Tabelle 1 | das eine R | das andere R |
|---|---|---|
| III. 720 | $-C_2H_5$ | -H |
| III. 721 | $-C_2H_5$ | -H |
| III. 721 | -H | -H |
| III. 722 | -H | -H |
| III. 722 | $-C_2H_5$ | -H |
| III. 722 | $-C_2H_5$ | -H |
| III. 723 | -H | $-C_2H_5$ |
| III. 724 | $-C_2H_5$ | $-C_2H_5$ |
| III. 725 | $-C_8H_{17}$ | -H |
| III. 726 | $-CH_3$ | $-CH_3$ |
| III. 727 | $-C_2H_5$ | $-C_2H_5$ |
| III. 728 | -H | -H |
| III. 729 | $-C_2H_5$ | $-C_2H_5$ |
| III. 730 | $-CH_3$ | $-CH_3$ |
| III. 731 | -H | -H |
| III. 732 | $-C_2H_5$ | -H |
| III. 733 | $-CH_3$ | $-CH_3$ |

Die neuen Methinfarbstoffe der Formel I'

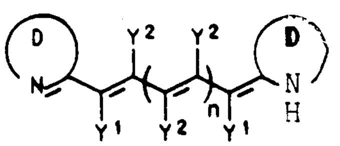

I'

in der D, $Y^1$ $Y^2$ und n die oben genannte Bedeutung haben, lassen sich nach bekannten Methoden durch Deprotonierung in die erfindungsgemäßen neuen anionischen Methinfarbstoffe der Formel Ia

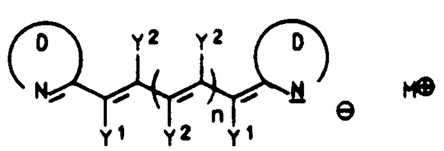

Ia

überführen, in der D, $Y^1$, $Y^2$ und n die oben genannte Bedeutung haben und $M^{\oplus}$ für das Äquivalent eines Kations steht. Beispielsweise bedeutet $M^{\oplus}$ ein Lithium-, Natrium-, Kalium-, Caesium-, Calcium-, Ammonium-, Tetraphenyl-arsoniumion oder ein Tetraalkylammoniumion wie Tetramethyl-, Tetraethyl-, Tetrabutyl- ,Trimethylbenzyl-, Triethylbenzyl- oder Trimethyldecylammoniumion. Die Herstellung der Anionen der Formel Ia erfolgt durch Umsetzung der Methinfarbstoffe der Formel I' mit Basen wie Alkalihydroxiden, Natriumalkoholaten, Kalium-tert.-butylat in einem Lösungsmittel bei Temperaturen von 0 bis 40 °C. Geeignete Lösungsmittel sind beispielsweise: Dimethylformamid, N-Methylpyrrolidon.

Die als Ausgangsstoffe benötigten Verbindungen IV

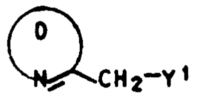

IV

und die C-3- bis C-11-Bausteine sind bekannt oder können nach an sich bekannten Verfahren hergestellt werden.

Aufgrund der physikalischen Eigenschaften, wie der hohen Absorption im langwelligen sichtbaren Bereich bis nahem Infrarot, dem Brechungsindex, der Verdampfbarkeit im Vakuum, der Löslichkeit in Polymerlösungen, der thermischen und photochemischen Stabilität und/oder der Morphologiestabilität in dünnen Schichten, sind die Methinfarbstoffe (I) zur Herstellung von optischen Aufzeichnungsmedien geeignet.

Der Aufbau der erfindungsgemäßen optischen Aufzeichnungsmedien ist an sich bekannt (J. Vac. Sci. Technol. 18 (1) Jan./Feb. 1981, S. 105).

Zwischen der lichtabsorbierenden Schicht, die aus einem thermoplastischen oder vernetzten Polymeren besteht und einen Methinfarbstoff I enthält, und dem Träger kann eine reflektierende Schicht vorhanden sein, so daß das eingestrahlte und durch die farbige Schicht wandernde Licht (so weit es nicht absorbiert wird) an der Reflektorschicht reflektiert wird und nochmals durch die gefärbte Schicht wandert.

Die Belichtung kann auch durch ein transparentes Substrat erfolgen. Als Schichtfolge kommt dann in Frage: Substrat-Absorberschicht- gegebenenfalls Reflektorschicht.

Die lichtreflektierende Schicht sollte so beschaffen sein, daß diese das zur Aufnahme und zur Abtastung verwendete Licht möglichst quantitativ reflektiert. Geeignete lichtreflektierende Materialien sind z.B. Aluminium, Rhodium, Gold, Zinn, Blei, Wismut, Kupfer und dielektrische Spiegel. Die Dicke der lichtreflektierenden Schicht soll so groß sein, daß diese das zur Aufnahme oder zum Abtasten benutzte Licht möglichst vollständig reflektiert.

Für diesen Zweck sind Spiegel mit geringer Wärmeleitfähigkeit vorteilhaft. Träger, bzw. die Licht reflektierende Schicht müssen eine optisch glatte, ebene Oberfläche aufweisen und an der Oberfläche so beschaffen sein, daß die absorbierende Schicht darauf fest haftet. Um die Oberflächenqualität und Adhäsionsphänomene günstig zu beeinflussen, kann der Träger und/oder der Reflektor mit einer Glättungsschicht aus einem duroplastischen oder thermoplastischen Material versehen werden.

Das Aufbringen von metallischen Reflektionsschichten erfolgt vorzugsweise in bekannter Weise durch Aufdampfen im Vakuum oder auch durch Aufbringen geeigneter Metallfolien auf den Träger. Das Aufbringen der erfindungsgemäßen, gegen Laserlicht empfindlichen Schicht erfolgt vorzugsweise durch Aufschleudern von gelöstem oder dispergiertem Farbstoff in Gegenwart von Bindemitteln. Auch Aufrakeln oder Tauchen kommen als Verfahren zur Herstellung der Schichten in Betracht.

Für das Aufbringen der Absorptionsschichten aus Lösung bereitet man in einem geeigneten Lösungsmittel, wie Methylenchlorid, Chloroform, Tetrachlorkohlenstoff, Aceton, Methylethylketon, Cyclohexanon, Toluol, Acetonitril, Essigester, Methanol oder Mischungen dieser Lösungsmittel, eine Lösung oder gegebenenfalls eine Dispersion des Farbstoffs oder Farbstoffgemisches und des Polymeren und setzt gegebenenfalls ein Bindemittel zu.

Als Bindemittel kommen entweder durch Strahlung oder Wärme härtbare Harze, z. B. Photopolymere, Silikonharze sowie Epoxidharze oder thermoplastische Kunststoffe infrage.

Bevorzugt sind thermoplastische Kunststoffe mit keinem oder nur sehr geringem kristallinen Anteil und Glastemperaturen von > 35 °c, insbesondere von > 75 °C. Geeignet sind beispielsweise wasserunlösliche Bindemittel, wie (Meth)-Acrylatpolymere und -copolymere, Polystyrolhomo- und -copolymerisate, Polyvinylcarbazol, Polyvinylestercopolymere, Polyvinylchlorid, Polyacrylnitril und Celluloseester.

Die Farbstoffzubereitung wird dann durch Rakeln oder Tauchen, vorzugsweise aber durch Aufschleudern auf ein vorher gereinigtes oder vorbehandeltes ("subbing-layer") Substrat aufgebracht und die Schicht an der Luft getrocknet oder gehärtet. Der Film kann auch im Vakuum, bei erhöhter Temperatur oder gegebenenfalls mit Strahlung, getrocknet bzw. gehärtet werden.

Je nach Systemaufbau wird zuerst die Farbstoff-in-Polymer-Schicht und dann der Reflektor aufgebracht oder umgekehrt verfahren. Auf das Aufbringen von Zwischen- und Schutzschichten oder einer reflektierenden Schicht kann gegebenenfalls verzichtet werden.

Sofern die Farbstoff-in-Polymer-Schicht keine ausreichende mechanische Stabilität aufweist, kann diese mit einer transparenten Schutzschicht überzogen werden. Hierzu bieten sich eine Reihe von Polymeren an, welche durch Aufschleudern, Aufrakeln oder Tauchen von gelösten Polymeren oder durch Aufdampfen im

Vakuum, insbesondere von fluorierten Polymeren, eine Schutzschicht bilden können.

Wenn das System (Datenspeicher) aus zwei gleichen oder verschiedenen Aufzeichnungsmedien in Form eines "sandwich" aufgebaut wird, kann auf eine Schutzschicht verzichtet werden. Neben größerer mechanischer und rotationsdynamischer Stabilität bietet der "Sandwich"-Aufbau den Vorteil der doppelten Speicherkapazität.

Auf die Schutz- und/oder Zwischenschichten kann bei ausreichender Qualität des optischen Aufzeichnungsmediums verzichtet werden. Wenn auf Zwischenschichten nicht verzichtet werden kann, muß unter Berücksichtigung des Brechungsindex des dazu verwendeten Materials und der verwendeten Laserlichtwellenlänge deren Schichtdicke so gewählt werden, daß keine störenden Interferenzen auftreten können.

Die erfindungsgemäßen Aufzeichnungsysteme haben bei den Wellenlängen der zur Informationsaufzeichnung üblicherweise verwendeten Laser (z.B. He-Ne-, Nd-Glas-, Nd-YAG-, GaAs-, GaAlAs- und andere geeignete Halbleiter-Injektionslaser) eine sehr hohe Absorption. Bevorzugt sind die Aufzeichnungssysteme, die bei der Emissionswellenlänge von Halbleiterlasern von ca. 750 bis 1100 nm eine sehr hohe Absorption aufweisen.

Die Polymerschichten können auf eine lichtreflektierende Schicht so aufgebracht werden, daß sich glatte Absorptionsschichten von optischer Qualität ergeben, in die die zu speichernde Information mit hohem Signal/Rausch-Verhältnis eingeschrieben werden kann.

Die Erfindung soll durch die folgenden Beispiele weiter erläutert werden.

A 1. Allgemeine Herstellvorschrift für "PENTAMETHINE"

20 mmol Heteroarylacetonitril, 20 mmol 1,1,3,3-Tetramethoxypropan und 50 mval Mineralsäure (z.B. Halogenwasserstoffsäure, Perchlorsäure, Schwefelsäure, Tetrafluoroborsäure) werden in 100 ml Ethylenglykolmonoethylether langsam zum Sieden erhitzt. Man hält das Reaktionsgemisch ca. 3 Stunden bei dieser Temperatur, läßt dann langsam auf Raumtemperatur abkühlen und saugt das ausgefallene kristalline Produkt ab.

Reinigung erfolgt durch Waschen mit mineralsaurem Acetonitril und Trocknen im Exsikkator über KOH.

Anstelle von Tetramethoxypropan können auch in 2-Stellung substituierte Tetramethoxy-propane, Malondialdehyd oder C-substituierte Malondialdehyde oder Bausteine der Formel

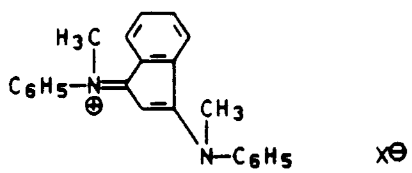

angewendet werden.

A 2. Allgemeine Herstellvorschrift für "HEPTAMETHINE"

A 2.1

20 mmol Heteroarylacetonitril, 10 mmol Zincke-Aldehyd und 50 mval Mineralsäure werden analog der Pentamethin-Vorschrift (A 1) umgesetzt.

A 2.2

20 mmol Heteroarylacetonitril werden mit 2 g fein gemahlenem Kaliumhydroxid in 50 ml DMF gelöst. Dann gibt man bei Raumtemperatur 10 mmol König'sches Salz hinzu. Man rührt 3 - 5 h bei Raumtemperatur und gießt auf 200 g Eis, 200 ml Wasser und 20 ml Eisessig. Der Niederschlag wird abgesaugt, mit 1n-Essigsäure gewaschen und aus essigsaurem Acetonitril umkristallisiert.

A 2.3

Es wird analog 2.2 verfahren, jedoch werden anstelle des König'schen Salzes 10 mmol eines Pyridiumsalzes angewendet.

A 2.4

Es wird analog zu 2.2 verfahren, jedoch werden anstelle des König'schen Salzes 10 mmol der Verbindung

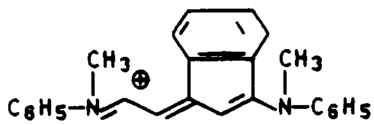

verwendet.

A 3. Allgemeine Herstellvorschrift für "NONAMETHINE"

Die Umsetzung erfolgt wie bei A 2.2, jedoch wird anstelle des König'schen Salzes Dimethyl-(7-dimethylamino-2,4,6-heptatrienyliden)-ammonium-tetrachlorozinkat verwendet. Zur Aufarbeitung gießt man die Reaktionslösung auf 200 g Eis und 20 ml 47 % HBr. Die Fällung wird abgesaugt und mit 1n HBr gewaschen.

A 4. Allgemeine Herstellvorschrift für "UNDECAMETHINE"

Die Umsetzung erfolgt wie bei den Nonamethinen A 3.. jedoch wird die Heptatrienylidenverbindug durch Dimethyl(9-dimethylamino-2,4,6,8-nonatetraenyliden)ammonium-tetrachlorozinkat ersetzt.

A 5. Allgemeine Herstellvorschrift für Pentamethine IXa und IXb aus Salzen VII

A 5.1 Herstellung von Verbindungen der Formel IXa

20 mmol Acetonitrilderivat werden mit 2 g fein gepulvertem Kaliumhydroxid in 50 ml DMF gelöst. Dazu gibt man unter Eis/Wasser-Kühlung spatelweise 20 mmol eines Salzes der Formel VII Man rührt das Reaktionsgemisch eine Stunde bei Raumtemperatur.

Isolierung als Base:

Das auf Raumtemperatur abgekühlte Reaktionsgemisch wird auf eine gut gerührte Mischung aus 200 g Eis, 200 ml Wasser und 20 ml Essigsäure gegossen. Der Niederschlag wird abgesaugt oder abzentrifugiert und mit schwach essigsaurem Wasser nachgewaschen. Eine weitere Reinigung erfolgt durch Waschen mit Acetonitril oder Umkristallisation aus Acetonitril. Dabei ist zu beachten, daß das Milieu schwach sauer (Essigsäure) bleibt.

Isolierung als Hydrohalogenid:

Das auf Raumtemperatur abgekühlte Reaktionsgemisch wird auf eine gut gerührte Mischung aus 200 g Eis, 200 ml Wasser und 20 ml konz. Salzsäure (oder Bromwasserstoffsäure, 47 %ig) gegossen. Der Niederschlag wird abgesaugt oder abzentrifugiert und mit 5 %iger Halogenwasserstoffsäure nachgewaschen. Weitere Reinigung erfolgt durch Waschen mit halogenwasserstoffsaurem Acetonitril. Die Trocknung erfolgt in Exsikkator über KOH.

A 5.2 Herstellung von Verbindungen der Formel IXb

Zu einer Mischug von 20 mmol eines Salzes der Formel VII und 20 mmol einer Cyclammoniumverbindung in 50 ml Dimethylformamid gibt man 3 ml Triethylamin. Man rührt ca. 2 Stunden bei Raumtemperatur nach und arbeitet wie unter A 5.1 beschrieben auf.

A 6. Allgemeine Herstellvorschrift für höhere Polymethine

A 6.1 Herstellung von Verbindungen der Formel XI

20 mmol einer Verbindung der Formel VII und 10 mmol einer Dicarbonsäure (Malonsäure, Glutaconsäure, Piperiylendicarbonsäure) werden in 50 ml Dimethylformamid gelöst. Dazu gibt man bei Raumtemperatur 2 g fein gemahlenes Kaliumhydroxid. Die Reaktionsmischung wird 4 Stunden bei Raumtemperatur gerührt und wie unter A 5.1 beschrieben aufgearbeitet.

A 6.2 Herstellung von Verbindungen der Formel X

20 mmol einer Verbindung der Formel VII und 10 mmol Allylcyanid werden in 50 ml Dimethylformamid gelöst. Dazu gibt man bei Raumtemperatur 2 g fein gemahlenes Kaliumhydroxid. Die Reaktionsmischung wird 4 Stunden bei Raumtemperatur gerührt und wie unter A 5.1 beschrieben aufgearbeitet.

A 7. Allgemeine Herstellvorschrift für quaternierte Methine

2 mmol des neutralen Methins werden unter Stickstoffatmosphäre und unter Ausschluß von Feuchtigkeit in 25 ml 1,1,1-Trichlorethan mit 4 mmol Triethyloxoniumtetrafluoroborat ca. 16 h bei 10 °C bis maximal 30 °C gerührt. Man saugt das ausgefallene kristalline Produkt ab. wäscht mit mineralsaurem Acetonitril, Methanol und Ether und trocknet im Vakuum.

Das Verfahren wurde auf den neutralen Methinfarbstoff (43) angewendet, wobei das entsprechende N-Ethyl-Methincyanin-fluorborat erhalten wird.

Anstelle von 1,1,1-Trichlorethan können auch wasserfreies Methylenchlorid, Nitrobenzol oder Nitromethan verwendet werden.

Die Alkylierung kann auch mit Trimethyloxoniumfluoborat durchgeführt werden, wobei die entsprechenden Methylammoniumcyanine erhalten werden.

Entsprechend den Angaben unter A 1. bis A 4. wurden die folgenden Methinfarbstoffe aus den entsprechenden Acetonitrilverbindungen und den $C_3$- bis $C_{11}$-Bausteien hergestellt.

DMF = N,N-Dimethylformamid
MeCN = Acetonitril

Pentamethinfarbstoffe

| | | | $[\lambda_{max}]^{\oplus}$ (= $\lambda_{00}$) | $\lambda_{max}$ (= $\lambda_{01}$ bzw. $\lambda_{02}$) | $[\lambda_{max}]^{\ominus}$ (= $\lambda_{00}$) |
|---|---|---|---|---|---|
| (1) | 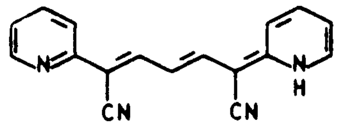 | DMF | | | |
| | | MeCN | 597 | 528 | 536 |
| | | $CHCl_3$ | 624 | 515 | 543 |
| (2) | 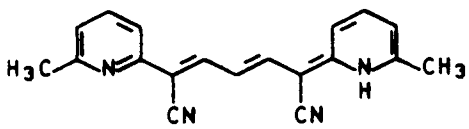 | DMF | | | |
| | | MeCN | 603 | 537 | 539 |
| | | $CHCl_3$ | 625 | 544 | 548 |
| (3) | 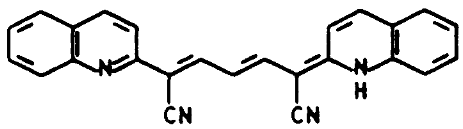 | DMF | 654 | 565 | 592 |
| | | MeCN | 663 | 555 | 582 |
| | | $CHCl_3$ | 689 | 560 | 580 |
| (4) | 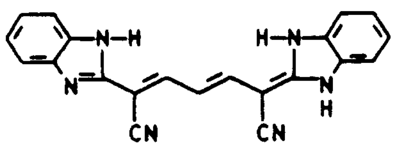 | DMF | 547 | 500 | 538 |
| | | MeCN | 544 | 500 | 533 |
| (5) | 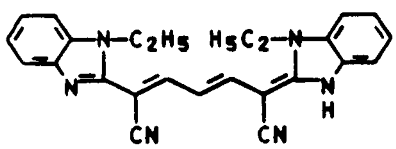 | DMF | | | |
| | | MeCN | 537 | 495 | 524 |
| | | CHC13 | 550 | | |

Pentamethinfarbstoffe

| | | | $[\lambda_{max}]^{\oplus}$ (= $\lambda_{00}$) | $\lambda_{max}$ (= $\lambda_{01}$ bzw. $\lambda_{02}$) | $[\lambda_{max}]^{\ominus}$ (= $\lambda_{00}$) |
|---|---|---|---|---|---|
| (6) | 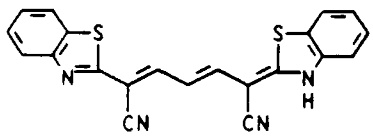 | MeCN | 607 | 505 | 565 |
| | | $CHCl_3$ | 619 | 515 | 572 |
| (7) | 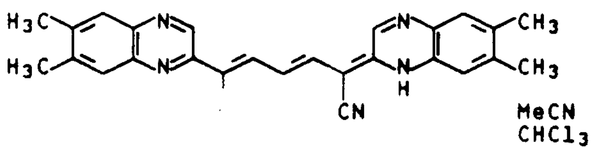 | MeCN | | 570 | 617 |
| | | $CHCl_3$ | 755 | 570 | 630 |
| (8) | 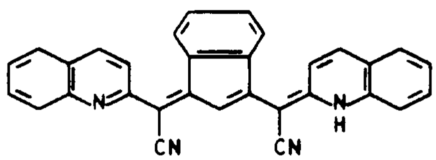 | MeCN | 760 | 630 | 710 |
| | | $CHCl_3$ | 800 | 630 | 722 |
| (9) | 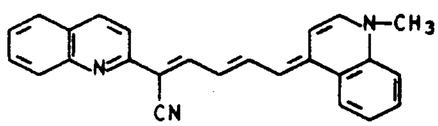 | DMF | 693 | 630 | --- |
| | | MeCN | 680 | 620 | --- |
| | | $CHCl_3$ | 743 | 620 | --- |
| (10) | 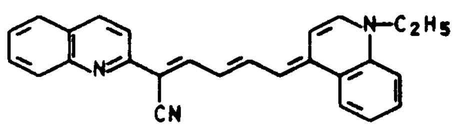 | MeCN | 685 | 620 | --- |
| | | $CHCl_3$ | 743 | 625 | --- |
| (11) | 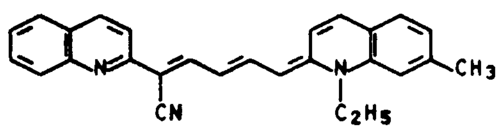 | DMF | 672 | 600 | --- |
| | | MeCN | 665 | 595 | --- |
| | | $CHCl_3$ | 696 | 605 | --- |
| (12) | 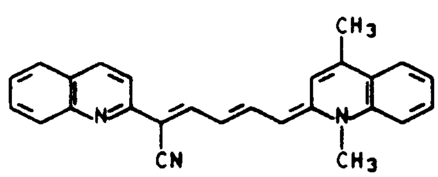 | DMF | 665 | 598 | --- |
| | | MeCN | 658 | 593 | --- |
| | | $CHCl_3$ | 689 | 599 | --- |

Pentamethinfarbstoffe

| | | | $[\lambda_{max}]^{\oplus}$ (= $\lambda_{00}$) | $\lambda_{max}$ (= $\lambda_{01}$ bzw. $\lambda_{02}$) | $[\lambda_{max}]^{\ominus}$ (= $\lambda_{00}$) |
|---|---|---|---|---|---|
| (13) | 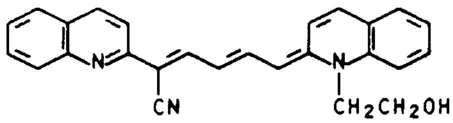 | MeCN | 670 | 588 | --- |
| | | $CHCl_3$ | 696 | 597 | --- |
| (14) | 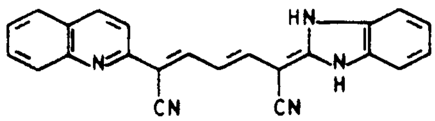 | DMF | 619 | 540 | 577 |
| | | MeCN | 612 | 520 | 564 |
| | | $CHCl_3$ | 634 | 538 | 567 |
| (15) | 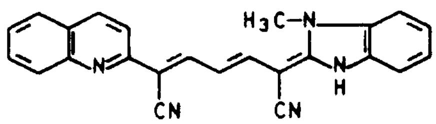 | DMF | 610 | 530 | 564 |
| | | MeCN | 609 | 515 | 550 |
| | | $CHCl_3$ | 626 | 520 | 560 |
| (16) | 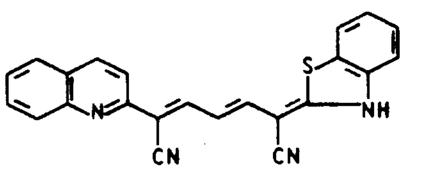 | DMF | 622 | 580 | 580 |
| | | MeCN | 628 | 575 | 563 |
| | | $CHCl_3$ | 646 | 590 | 579 |
| (17) | 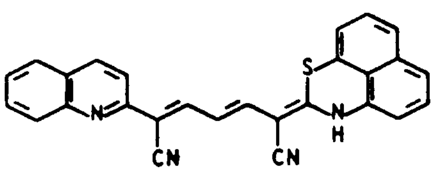 | DMF | | | 590 |
| | | MeCN | 610 | 470 | 579 |
| | | $CHCl_3$ | 642 | 475 | 587 |
| (18) | 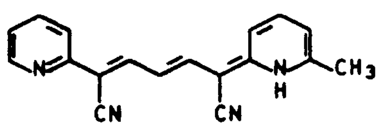 | DMF | 595 | 540 | 535 |
| | | MeCN | 595 | 540 | 537 |
| | | $CHCl_3$ | 625 | 545 | 547 |
| (19) | 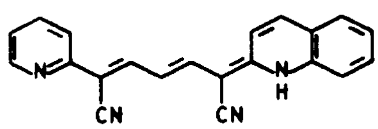 | DMF | 623 | 550 | 573 |
| | | MeCN | 625 | 545 | 560 |
| | | $CHCl_3$ | | | |

Pentamethinfarbstoffe

| | | | $[\lambda_{max}]^{\oplus}$ (= $\lambda_{00}$) | $\lambda_{max}$ (= $\lambda_{01}$ bzw. $\lambda_{02}$) | $[\lambda_{max}]^{\ominus}$ (= $\lambda_{00}$) |
|---|---|---|---|---|---|
| (20) | 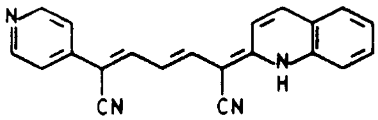 | DMF | 638 | 555 | 575 |
| | | MeCN | 636 | 535 | 567 |
| | | $CHCl_3$ | 657 | 545 | 577 |
| (21) | 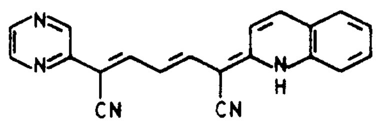 | DMF | | 560 | 583 |
| | | MeCN | 660 | 555 | 571 |
| | | $CHCl_3$ | 684 | 560 | 576 |
| (22) | 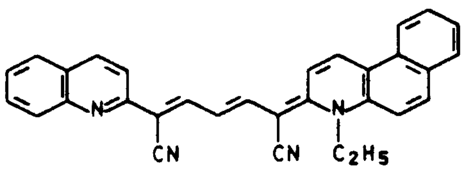 | DMF | 673 | 620 | --- |
| | | MeCN | 664 | 615 | --- |
| | | $CHCl_3$ | 700 | 625 | --- |

Heptamethinfarbstoffe

| | | | $[\lambda_{max}]^{\oplus}$ (= $\lambda_{00}$) | $\lambda_{max}$ (= $\lambda_{01}$ bzw. $\lambda_{02}$) | $[\lambda_{max}]^{\ominus}$ (= $\lambda_{00}$) |
|---|---|---|---|---|---|
| (23) | 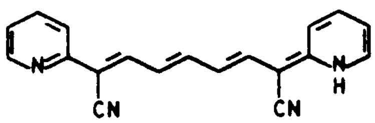 | DMF | 695 | 570 | 639 |
| | | MeCN | 698 | 550 | 630 |
| | | $CHCl_3$ | 719 | | |
| (24) | 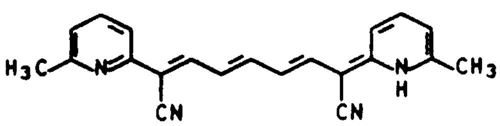 | DMF | 711 | 580 | 641 |
| | | MeCN | 699 | 550 | 633 |
| | | $CHCl_3$ | 729 | | |
| (25) | 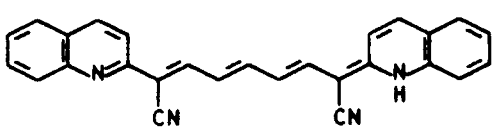 | DMF | 778 | 580 | 686 |
| | | MeCN | 775 | 565 | 676 |
| | | $CHCl_3$ | 790 | 550 | |

Heptamethinfarbstoffe

| | | | $[\lambda_{max}]^{\oplus}$ (= $\lambda_{00}$) | $\lambda_{max}$ (= $\lambda_{01}$ bzw. $\lambda_{02}$) | $[\lambda_{max}]^{\ominus}$ (= $\lambda_{00}$) |
|---|---|---|---|---|---|
| (26) | 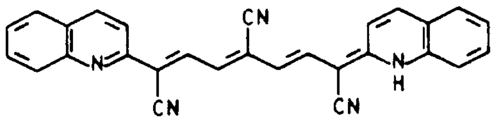 | DMF | 810 | 625 | 727 |
| | | MeCN | 807 | 610 | 718 |
| | | $CHCl_3$ | 830 | 615 | 737 |
| (27) | 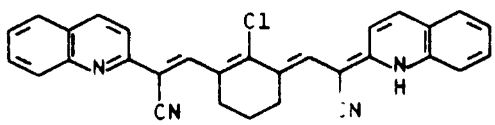 | DMF | 795 | 580 | 727 |
| | | MeCN | 795 | 560 | 719 |
| | | $CHCl_3$ | 802 | 555 | |
| (28) | 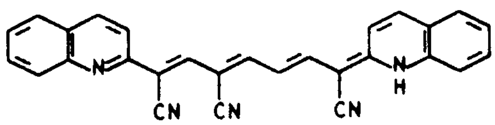 | DMF | 710 | 570 | 610 |
| | | MeCN | 713 | 570 | 602 |
| | | $CHCl_3$ | 739 | 580 | 616 |
| (29) | 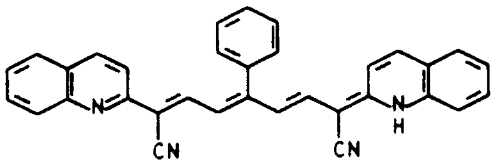 | DMF | 793 | 590 | 712 |
| | | MeCN | 785 | 570 | 700 |
| | | $CHCl_3$ | 795 | 575 | 715 |
| (30) | 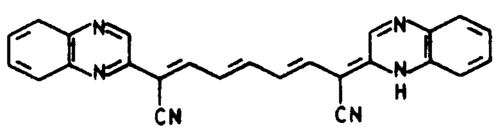 | DMF | | 575 | 725 |
| | | MeCN | 810 | 560 | 717 |
| | | $CHCl_3$ | | 575 | 745 |
| (31) | 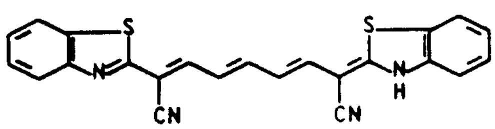 | DMF | | 555 | 674 |
| | | MeCN | 708 | 526 | 664 |
| | | $CHCl_3$ | 712 | 550 | 677 |
| (32) | 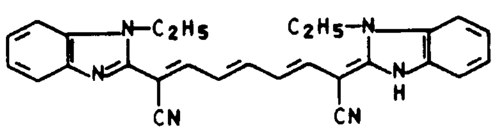 | DMF | 652 | 560 | 642 |
| | | MeCN | 643 | 560 | 633 |
| | | $CHCl_3$ | 655 | 570 | 640 |

Heptamethinfarbstoffe

| | | | $[\lambda_{max}]^{\oplus}$ (= $\lambda_{00}$) | $\lambda_{max}$ (= $\lambda_{01}$ bzw. $\lambda_{02}$) | $[\lambda_{max}]^{\ominus}$ (= $\lambda_{00}$) |
|---|---|---|---|---|---|
| (33) | 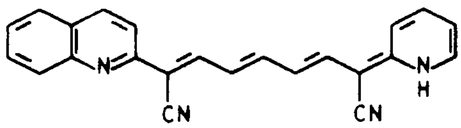 | DMF | 725 | 555 | 665 |
| | | MeCN | 729 | 540 | 654 |
| | | $CHCl_3$ | 749 | 550 | |
| (34) | 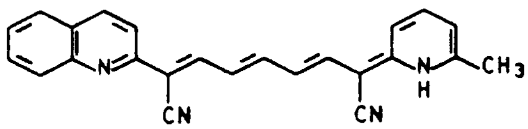 | DMF | 725 | 555 | 665 |
| | | MeCN | 726 | 540 | 655 |
| | | $CHCl_3$ | 744 | 550 | 672 |
| (35) | 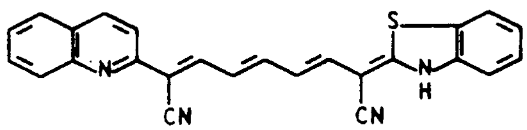 | DMF | | 590 | 676 |
| | | MeCN | 750 | 565 | 667 |
| | | $CHCl_3$ | 794 | 575 | 678 |
| (36) | 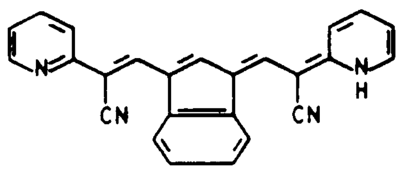 | DMF | 710 | 640 | 630 |
| | | MeCN | 704 | 630 | 621 |
| | | $CHCl_3$ | 735 | 625 | 640 |
| (37) | 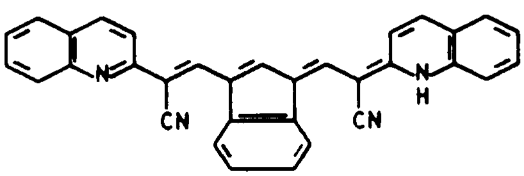 | DMF | 738 | 650 | 669 |
| | | MeCN | 780 | 637 | 659 |
| | | $CHCl_3$ | 810 | 650 | 676 |
| (38) | 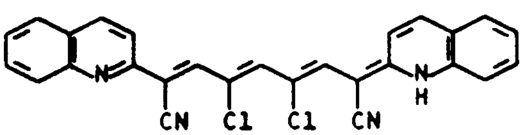 | DMF | 764 | 605 | 673 |
| | | MeCN | 761 | 565 | 664 |
| | | $CHCl_3$ | 790 | 570 | 678 |
| (39) | 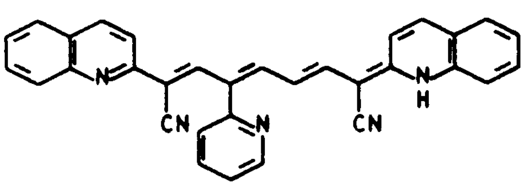 | DMF | 730 | 590 | 633 |
| | | MeCN | 727 | 575 | 622 |
| | | $CHCl_3$ | 723 | 585 | 620 |

**Nonamethinfarbstoffe**

| | | | $[\lambda_{max}]^{\oplus}$ (= $\lambda_{00}$) | $\lambda_{max}$ (= $\lambda_{01}$ bzw. $\lambda_{02}$) | $[\lambda_{max}]^{\ominus}$ (= $\lambda_{00}$) |
|---|---|---|---|---|---|
| (40) | 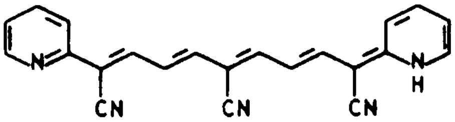 | DMF | 736 | 650 | 653 |
| | | MeCN | | | |
| | | $CHCl_3$ | 778 | | |
| (41) | 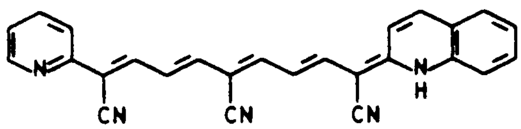 | DMF | 765 | 630 | 675 |
| | | MeCN | | | |
| | | $CHCl_3$ | 820 | | |
| (42) | 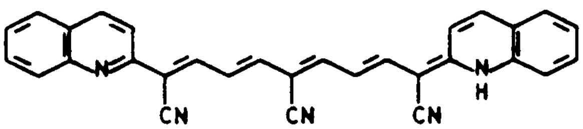 | DMF | 809 | 620 | 695 |
| | | MeCN | | | |
| | | $CHCl_3$ | 850 | 620 | 715 |
| (43) | 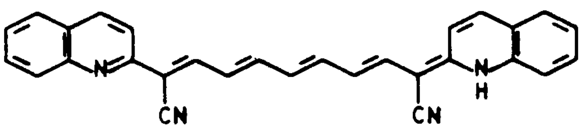 | DMF | 881 | 582 | |
| | | MeCN | 871 | 562 | 778 |
| | | $CHCl_3$ | 910 | 570 | |

**Undecamethinfarbstoffe**

| | | | $[\lambda_{max}]^{\oplus}$ (= $\lambda_{00}$) | $\lambda_{max}$ (= $\lambda_{01}$ bzw. $\lambda_{02}$) | $[\lambda_{max}]^{\ominus}$ (= $\lambda_{00}$) |
|---|---|---|---|---|---|
| (44) | 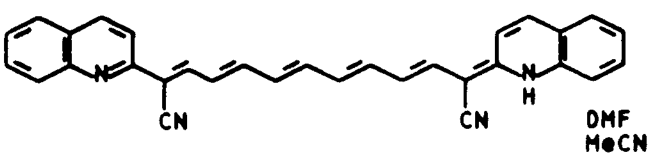 | DMF | 1000 | 590 | 915 |
| | | MeCN | | 560 | 870 |

Herstellung des optischen Aufzeichnungsmediums

Zwei 1,2 mm dicke Polycarbonatscheiben mit einem Durchmesser von 120 mm und einem Innenlochdurchmesser von 15 mm werden mit Alkohol gereinigt und unter Reinraumbedingungen mit einer 0,3 µm starken Glättungsschicht aus einem Photopolymer beschichtet. Nach Aushärtung des Photopolymers mit UV-Licht wurde eine Lösung aus Farbstoff (43) (= Farbstoff III. 108) und 1,3 g eines Copolymers aus Methylmethacrylat/Methacrylsäure (70 : 30) in 200 ml Essigester nach dem Schleuderbeschichtungsverfahren bei 4800 U/min auf die Platten aufgetragen. Nach dem Trocknen betrug die Schichtdicke 0,26 µm. In einer Vakuumbedampfungsapparatur wurde ein Aluminiummspiegel in einer Schichtdicke von 0,03 µm auf die Farbschicht aufgebracht und darauf eine Schutzschicht von 1,2 µm aus Polystyrol in Xylol aufgeschleudert.

Beide Platten werden sandwichartig mit den beschichteten Seiten nach innen über geeignete Abstandsringe zusammengeklebt, so daß ein Luftspalt von 0,4 mm verblieb. Mit einem auf einem Drehtisch

montierten AlGaAs-Laser (λ = 820 nm) wurden einzelne, etwa 1 μ große Löcher in die aktive Schicht geschrieben. Die Empfindlichkeit der Schicht war besser als 1 nJ/Loch, beim Auslesen der Punkte wurde ein ausgezeichnetes Signal/Rausch-Verhältnis gefunden.

## Patentansprüche

1. Optisches Aufzeichnungsmedium aus einem Träger und einer Polymerschicht, die einen gegenüber Laserlicht empfindlichen Farbstoff enthält, dadurch gekennzeichnet, daß das Polymere als Farbstoff einen Methinfarbstoff enthält, der in einer seiner tautomeren Formen der allgemeinen Formel I

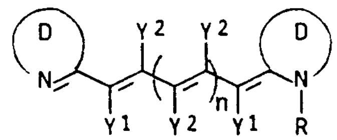

I

entspricht, in der beide oder ein

- $Y^1$ Cyano und das restliche $Y^1$ Wasserstoff,
- $Y^2$ unabhängig voneinander Wasserstoff, Cyano, Halogen, $C_1$- bis $C_6$-Alkyl, $C_5$- bis $C_7$-Cycloalkyl, Phenyl, Pyridyl oder zusammen mit einem weiteren $Y^2$ einen gegebenenfalls durch einen Benzolring anellierten fünf- oder sechsgliedrigen Ring,
- R Wasserstoff, $C_1$- bis $C_{20}$-Alkyl, $C_7$- bis $C_{10}$-Aralkyl oder β-Hydroxyethyl und
- n 1, 2, 3, 4, 5 oder 6 bedeuten und die Gruppen

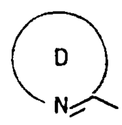 oder 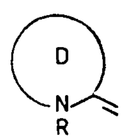

für gleiche oder verschiedene fünf- oder sechsgliedrige heterocyclische Reste stehen, wobei die Reste D gegebenenfalls substituiert und/oder anelliert sind sowie quaterniert (kationisch) oder deprotoniert (anionisch) vorliegen können.

2. Optisches Aufzeichnungsmedium nach Anspruch 1, dadurch gekennzeichnet, daß sich die Reste D von Benzthiazol, Benzoxazol, Benzimidazol, Indol, Pyridin, Pyrimidin, Pyrazin, Chinolin, Chinazolin oder Chinoxalin ableiten.

3. Anionische Methinfarbstoffe der allgemeinen Formel Ia

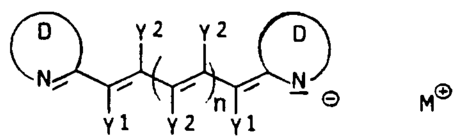

Ia

in der beide oder ein

- $Y^1$ Cyano und das restliche $Y^1$ Wasserstoff,
- $Y^2$ unabhängig voneinander Wasserstoff, Cyano, Halogen, $C_1$- bis $C_6$-Alkyl, $C_5$- bis $C_7$-Cycloalkyl, Phenyl, Pyridyl oder zusammen mit einem weiteren $Y^2$ einen gegebenenfalls durch einen Benzolring anellierten fünf- oder sechsgliedrigen Ring,
- n 1, 2, 3, 4, 5 oder 6 bedeuten und die Gruppen

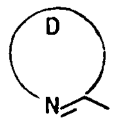 oder 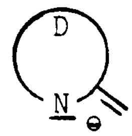

für gleiche oder verschiedene fünf- oder sechsgliedrige heterocyclische Reste stehen, wobei die Reste D gegebenenfalls substituiert und/oder anelliert sind, und

M$^{\oplus}$ ein Äquivalent eines Kations bedeutet.

**Claims**

**1.** An optical recording medium comprising a support and a polymer layer which contains a dye sensitive to laser light, wherein the polymer contains as dye a methine dye which, in one of its tautomeric forms, conforms to the formula

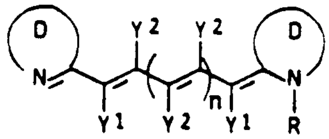

I

where

$Y^1$ is in both or either case cyano and the other $Y^1$ is hydrogen,

$Y^2$ is in each case, independently of the others, hydrogen, cyano, halogen, $C_1$-$C_6$-alkyl, $c_5$-$C_7$-cycloalkyl, phenyl, pyridyl or together with a further $Y^2$ a five- or six-membered ring which may have a fused-on benzene ring,

R is hydrogen, $C_1$-$C_{20}$-alkyl, $C_7$-$C_{10}$-aralkyl or $\beta$-hydroxyethyl and

n is 1, 2, 3, 4, 5 or 6 and the groups

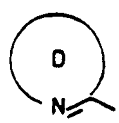 and 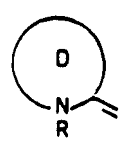

are identical or different five- or six-membered heterocyclic radicals, and the radicals D may be substituted and/or benzofused, and can be present in the quaternized (cationic) or deprotonated (anionic) form.

**2.** An optical recording medium as claimed in claim 1, wherein the radicals D are derived from benzothiazole, benzoxazole, benzimidazole, indole, pyridine, pyrimidine, pyrazine, quinoline, quinazoline or quinoxaline.

**3.** An anionic methine dye of the general formula Ia

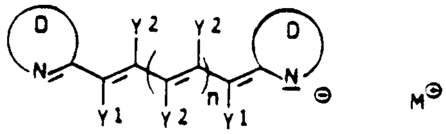

Ia

where

$Y^1$ is in both or either case cyano and the other $Y^1$ is hydrogen,

$Y^2$ is in each case, independently of the others, hydrogen, cyano, halogen, $C_1$-$C_6$-alkyl, $C_5$-$C_7$-cycloalkyl, phenyl or pyridyl or together with a further $Y^2$ a five- or six-membered ring which may have a fused-on benzene ring,

n  is 1, 2, 3, 4, 5 or 6 and the groups

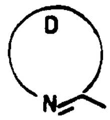 and 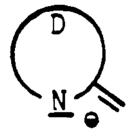

are identical or different five- or six-membered heterocyclic radicals, and the radicals D may be substituted and/or benzofused, and

$M^{\oplus}$  is one equivalent of a cation.

**Revendications**

**1.** Milieu d'enregistrement optique, constitué d'un support et d'une couche de polymère, qui contient un colorant sensible à la lumière laser, caractérisé en ce que le polymère contient, à titre de colorant, un colorant méthinique qui répond, sous l'une de ces formes tautomères, à la formule générale I

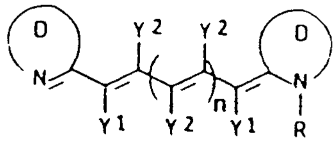

I

dans laquelle les deux ou l'un des symboles

$Y^1$  représente un radical cyano cependant que l'autre symbole $Y^1$ représente un atome d'hydrogène,

les symboles $Y^2$  représentent, indépendamment les uns des autres, chacun un atome d'hydrogène, un radical cyano, un atome d'halogène, un radical alkyle en $C_1$ à $C_6$, cycloalkyle en $C_5$ à $C_7$, phényle, pyridyle, ou représente avec un symbole $Y^2$ supplémentaire, un noyau à 5 ou 6 chaînons éventuellement condensé avec un noyau benzénique,

R  représente un atome d'hydrogène, un radical alkyle en $C_1$ à $C_{20}$, aralkyle en $C_7$ à $C_{10}$, ou un radical $\beta$-hydroxyéthyle et

n  est égal à 1, 2, 3, 4, 5 ou 6 et les groupements

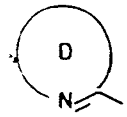 ou 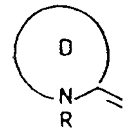

représentent des radicaux hétérocycliques à 5 ou 6 chaînons, identiques ou différents, où les restes D peuvent se présenter à l'état éventuellement substitué et/ou condensé, comme aussi quaternisé (cationiquement) ou déprotoné (anioniquement).

**2.** Milieu d'enregistrement optique suivant la revendication 1, caractérisé en ce que les restes D dérivent du benzothiazole, du benzoxazole, du benzimidazole, de l'indole, de la pyridine, de la pyrimidine, de la pyrazine, de la quinoléine, de la quinazoline ou de la quinoxaline.

**3.** Colorants méthiniques anioniques de la formule générale Ia

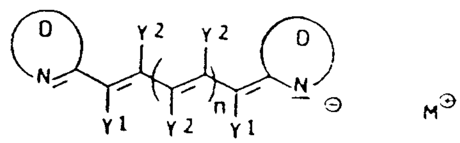

I a

dans laquelle les deux ou l'un des symboles

Y[1] représente un radical cyano, cependant que le symbole Y[1] résiduel représente un atome d'hydrogène,

les symboles $Y^2$ représentent, indépendamment les uns des autres, chacun un atome d'hydrogène, un radical cyano, un atome d'halogène, un radical alkyle en $C_1$-$C_6$, cycloalkyle en $C_5$-$C_7$, phényle, pyridyle, ou représentent avec un symbole $Y^2$ supplémentaire, un noyau à 5 ou 6 chaînons, éventuellement condensé avec un noyau benzénique,

n est égal à 1, 2, 3, 4, 5 ou 6 et les groupements

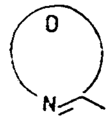

ou

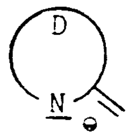

représentent des radicaux hétérocycliques à 5 ou 6 chaînons, identiques ou différents, où les restes D sont éventuellement substitués et/ou condensés et

$M^{\oplus}$ représente l'équivalent d'un cation.